# EUROPEAN PATENT APPLICATION

(11) **EP 1 089 165 A2**
(43) Date of publication of application: **04.04.2001**
(21) Application number: 00308582.6
(22) Date of filing: 29.09.2000
(51) Int. Cl.: G06F 9/312, G06F 9/30, G06F 9/318, G06F 9/305

(54) **A floating point instruction set architecture and implementation**

(30) Priority: 01.10.1999 US 411600
(71) Applicant: Hitachi, Ltd., Chiyoda-ku, Tokyo (JP)
(72) Inventor: Krishnan, Sivaram, Los Altos, California 94024-5321 (US); Debbage, Mark, Cupertino, California 95014 (US); Roy, Kanad, Santa Clara, California 95054 (US); Arakawa, Fumio, Kodaira-shi, Tokyo 187-0025 (JP); Sturges, Andy Craig, Bathford, Bath BA1 7RT (GB); Farrall, Glenn Ashley, Long Ashton, Bristol BS41 9BY (GB)
(74) Representative: Calderbank, Thomas Roger

(57) **Abstract**

Processor and co-processor elements, structured to execute a floating-point instruction set architecture, as described. Examples are given of loading and storing double precision words and/or pairs of single precision words between a floating-point co-processor and memory, as well as storing the Boolean result of comparing two floating-point numbers in a floating-point unit in an integer register in a CPU.

## Description

The invention relates generally to microprocessor/microcontroller architecture, and more particularly to a floating point set architecture.

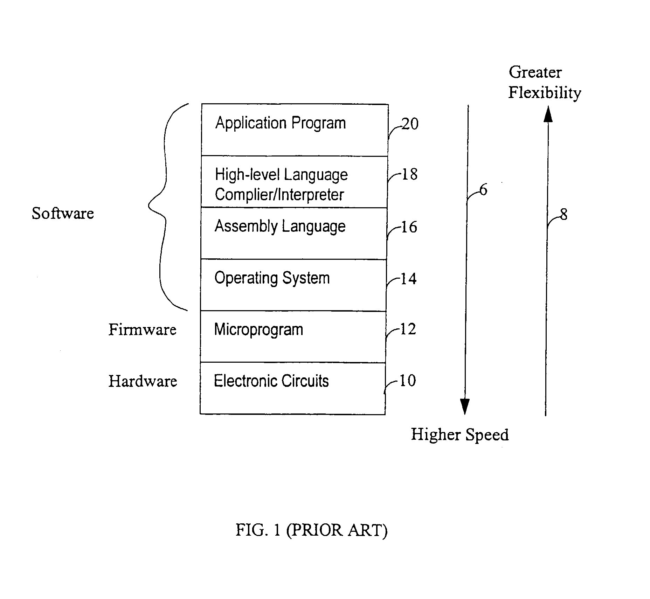

FIG. 1 illustrates the different levels of a computer system and shows the tradeoff between using software versus hardware for microprocessor or central processing unit (CPU) design and implementation. As FIG. 1 shows, shifting the microprocessor functions toward hardware typically increases speed 6, but reduces flexibility 8, while replacing hardware functions by software normally increases the flexibility of use 8, but at the cost of lower speed 6.

The introduction of microprograms 12 in firmware had allowed more hardware functions to be done in software. The instruction sets, as a result, at the assembly language layer 16 became more complex. With the reduction in hardware costs, the balance moved back to hardware with some software functions being done in specialized hardware, e.g., floating point processors. This allowed an increase in performance.

These floating-point co-processors, until recently, performed operations, including floating-point arithmetic and comparisons, on 16-bit or 32-bit-data. With the development of 64-bit microprocessors, 64-bit co-processors are also being developed. However, instruction sets and memory are typically based on 32-bit data words. For floating point arithmetic on a 64-bit co-processor using such 32-bit data words, there is a need for one load/store between memory for single precision (32-bits) data words, and two load/store operations between memory for double precision (64-bits) data words. Thus, assuming a word boundary is every 32-bits in memory, new 64-bit CPU's and co-processors, are under-utilized for data transfer.

Also for floating point comparisons, because the floating point unit is considered as a separate unit from the CPU, comparison results are written to a floating point register or a condition code is set. This condition code was then used in conditional instructions in the CPU, requiring extra logic in the CPU. For integer comparisons, the result is sometimes written to an integer register, an integer instruction is required to test a different register than the floating-point comparison. The need for the system to check different registers in different places, depending on whether a floating point or integer instruction is executed, is undesirable.

Thus, there is a need for a floating point instruction set which makes use of a 64-bit architecture more efficiently for 32-bit and 64-bit data values particularly, for example, in loading and storing operations, as well as which more efficiently interfaces with the CPU in floating point comparison operations.

Broadly, the present invention is directed to processor and co-processor elements, each structured to execute a floating-point instruction set architecture. More particularly, examples are given of loading and storing double precision words and/or pairs of single precision words between a floating-point co-processor and memory. Examples are also given of storing the Boolean result of the comparison of two floating-point numbers in a floating-point unit in an integer register in a CPU.

In a specific embodiment, the present invention provides a method for loading data from a memory to a Central Processing Unit (CPU) including determining from an operational code in a computer instruction a loading operation and loading from a K-bit wide memory N groups of data to a storage location in the CPU where each group has M bytes. K, M, and N are integers. The storage location in the CPU may be a 64-bit register. As examples, K equals 32, N equals 1, and M equals 8 bytes, or K equals 32, N equals 2, and M equals 4 bytes.

In a specific embodiment, the present invention also provides a method for storing data from a memory to a CPU, including the steps of determining from an operational code in a computer instruction, if there is a storing operation, and storing to a K-bit wide memory N groups of data from a storage location in the CPU according to the operational code, where each group comprises M bytes.

In an another embodiment, the present invention provides a method for comparing a plurality of floating point numbers in a computer system including the steps of determining if an operational code decodes to a comparison operation in a computer instruction. Next a Boolean result is found by comparing a first floating point number of the plurality of floating point numbers with a second floating point number of the plurality of floating point numbers and storing the Boolean result in a storage location. The storage location preferably is a General Purpose Register (GPR), which may include an integer register. In addition the result may be used in a conditional branch instruction, e.g., if-then-else. Optionally, the Boolean result may be selected from a group consisting of the bits one and zero.

These and other advantages and features of the present invention will become apparent to those skilled in this art upon a reading of the following detailed description, which should be taken in conjunction with the accompanying drawings.

### IN THE DRAWINGS

FIG. 1 illustrates the different levels of a prior art computer system;
FIG. 2 illustrates a specific embodiment of the exchange of 64-bits of data between memory and floating point registers of the present invention;
FIG. 3 shows a specific embodiment of the Boolean result of the logical comparison of the contents of two floating-point registers of the present invention
FIG. 4 illustrates an example of the top level partitioning of the S5 Core;
FIG. 5 illustrates a specific embodiment of a limited number of blocks in the CPU.

### Example Floating Point Instructions

In a specific embodiment of the present invention, a list of example Floating Point Instructions is given in Appendix 1, with an example list of Floating-Point Memory Instructions in Appendix 2. From the list of Instructions, several are described to illustrate the features of the Floating-Point Instruction set.

In a specific embodiment a memory in a computer system is byte addressed with 32-bit (4-byte) word boundaries. The load and store instructions may provide access to data using either little endian or big-endian representations. The endianness of load and store instructions is specified at power-on reset, and does not change thereafter.

For the examples in this section, each instruction contains 32 bits. These bits are grouped into contiguous collections of bits, termed a bit-field. Each bit-field is associated with a bit-field type. For example there are field types for an opcode, to identify registers, to encode an intermediate and for a displacement. In a specific embodiment, bit-fields in an instruction are encoded using the Little Endian binary representation. The highest (left-most) bit in the bit-field is the most significant; the lowest bit number in the bit-field is the least significant. A bit-field is extracted as either unsigned or signed is indicated by the bit-field type. Numbers are in two's-complement format.

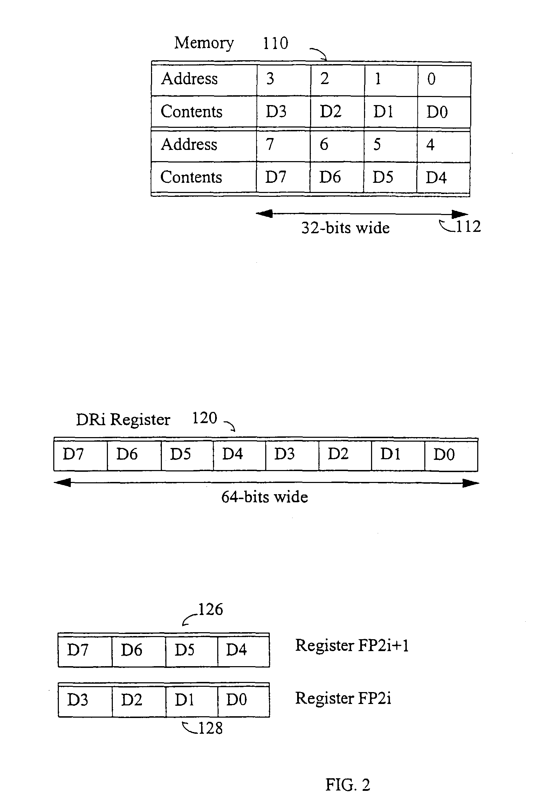

FIG. 2 illustrates a specific embodiment of the present invention for the exchange of 64-bits of data between memory and floating point registers. Memory 110, for example, includes 8 bytes: D0 to D7 at addresses 0-7, in Little Endian format. The memory 110 is 32-bits wide 112, i.e., the word boundaries are every 4-bytes.

If the memory 110 contains a double precision word (64-bits) in addresses 0-7, then a specific embodiment includes an instruction which loads the double precision word from memory 110 to a double precision register, i.e., DRi Register (where i is an integer) 120, in the Floating Point Unit (FPU). The data, D0-D7, from memory 110 is shown in DRi Register 120. The double precision word in DRi 120 also may be stored to memory 110 at addresses 0-7. In another embodiment the double precision word in memory 110 may be loaded into two single precision registers, i.e., Register FP2i+1 126 and Register FP2i 128. Where each single precision register is 32-bits, the most significant half of the 64-bit data, i.e., D4-D7 is stored in FP2i+1 126 and the least significant half of the 64-bit data, i.e., D0-D3 is stored in FP2i 128. Also the reverse procedure may be followed to store the double precision word in FP2i+1 126 and FP2i 128 to memory 110 at addresses 0-7.

If the Memory 110 contains two single precision words in addresses 0-3, i.e., D0-D3, and addresses 4-7, i.e., D4-D7, then a specific embodiment of the present invention includes an instruction which loads the pair of single precision words from memory to the two single precision registers, i.e., i.e., Register FP2i+1 126 and Register FP2i 128, in the Floating Point Unit (FPU). Thus the most significant half of the 64-bit data, i.e., D4-D7 is stored in FP2i+1 126 and the least significant half of the 64-bit data, i.e., D0-D3 is stored in FP2i 128. Also the reverse procedure may be followed to store a pair of single precision words in FP2i+1 126 and FP2i 128 to memory 110 at addresses 4-7 for FP2i+1 126 and addresses 0-3 for FP2i 128.

In another specific embodiment the 32-bit floating point registers may be in a group of 4, i.e., a quad. Four single precision words may be loaded and stored from/to memory to/from the quad single precision registers.

In a specific embodiment load and store instructions transfer data between a floating-point register and memory may, for example, have two addressing modes: displacement and indexed. For displacement addressing, the effective address may be calculated by adding a base pointer to a displacement. The base register is held in a general-purpose register, and the displacement is given as an immediate value. The immediate value is scaled by the width of the data accessed. For indexed addressing, the effective address may be calculated by adding a base pointer with an index. Both the base pointer and the index are held in general-purpose registers. Unlike displacement addressing, the index may not be scaled by the width of the data accessed.

Three different widths of data may be used for load and store operations:

A suffix of '.S' indicates an instruction that transfers 32-bit data to a 4-byte aligned effective address. The floating-point operand FRi, where i is in [0, 63], denotes one of 64 single-precision floating-point registers.

A suffix of '.D' indicates an instruction that transfers 64-bit data to an 8-byte aligned effective address. The floating-point operand DR2i, where i is in [0, 31], denotes one of 32 double-precision floating-point registers.

A suffix of '.P' indicates an instruction that transfers a vector of two 32-bit data values to an 8-byte aligned effective address. The floating-point operand FP2i, where i is in [0, 31], denotes one of 32 pairs of single-precision floating-point registers.

Examples of the instructions, which perform the double precision and single-precision pair load and store, are given in Table 1. Descriptions of each instruction with the accompanying 32-bit instruction format and algorithm are given to illustrate specific embodiments of instructions of the present invention.

**Table 1**

| Access | Mode | Double-precision | Single-precision Pair |
|---|---|---|---|
| Load | indexed | FLDX.D | FLDX.P |
| | displacement | FLD.D | FLD.P |
| Store | indexed | FSTX.D | FSTX.P |
| | displacement | FST.D | FST.P |

The FLDX.D instruction, Table 2, loads a double-precision floating-point register from memory using register plus register addressing. The effective address is formed by adding Rₘ to Rₙ. The 64 bits read from this effective address are loaded into DR_{f}. The top row of Table 2 denotes the machine language instruction. The portion below is the assembly language mnemonic followed by the functional algorithm.

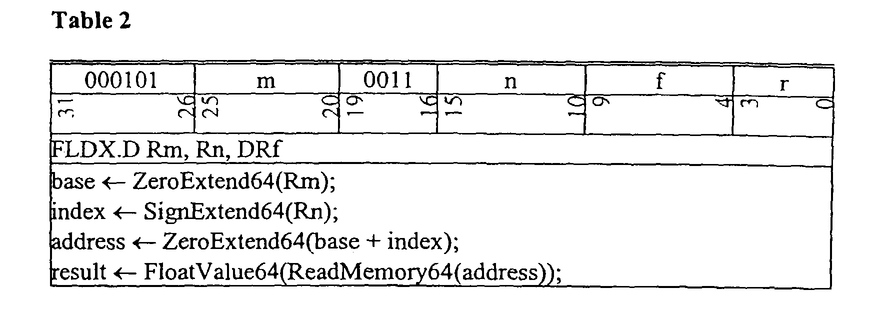

The FLDX.P instruction, Table 3, loads a pair of single-precision floating-point registers from memory using register plus register addressing. The effective address is formed by adding Rₘ to Rₙ. The 64 bits read from this effective address are loaded into FP_{f}. The lower half of the 64-bit data appears in FR_{f}, and the upper half in FR_{f+1}. Table 3, as well as all of the following tables, uses the same structures as Table 2.

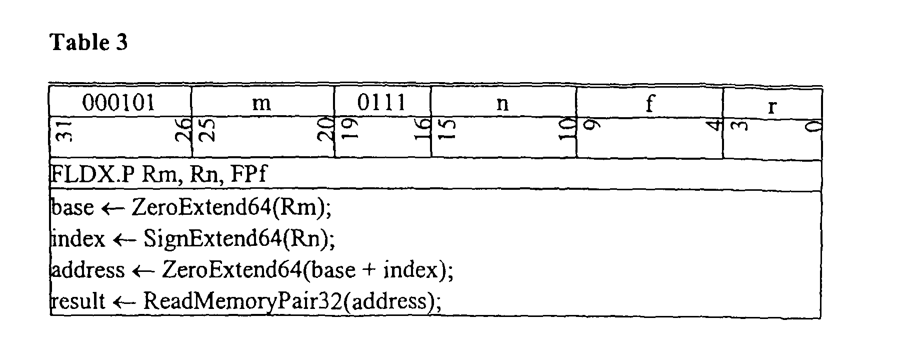

The FSTX.D instruction, Table 4, stores a double-precision floating-point register to memory using register plus register addressing. The effective address is formed by adding Rₘ to Rₙ. The 64-bit value of DR_{z} is written to this effective address.

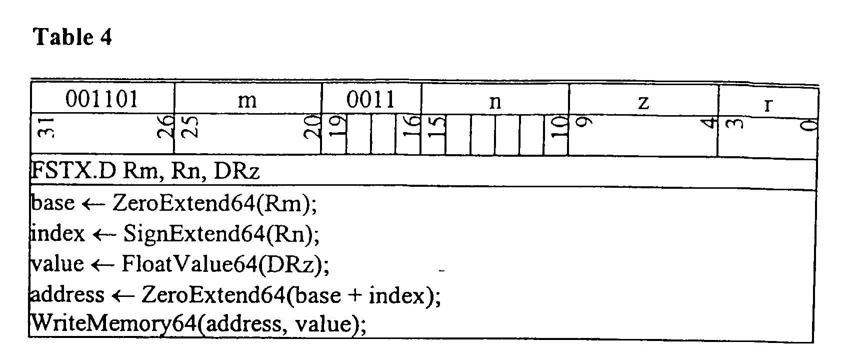

The FSTX.P instruction, Table 5, stores a pair of single-precision floating-point registers to memory using register plus register addressing. The effective address is formed by adding Rₘ to Rₙ. The 64-bits of data in FP_{z} are written to the effective address. The lower half of the 64-bit data is from FR_{z}, and the upper half from FR_{z+1}.

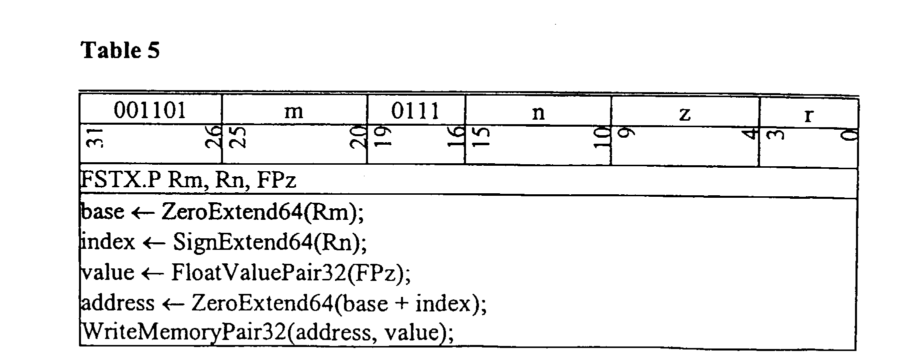

The FLD.D instruction, Table 6, loads a double-precision floating-point register from memory using register plus scaled immediate addressing. The effective address is formed by multiplying the sign-extended 10-bit value of s by 8, and adding it to Rₘ. The 64 bits read from this effective address are loaded into DR_{f}.

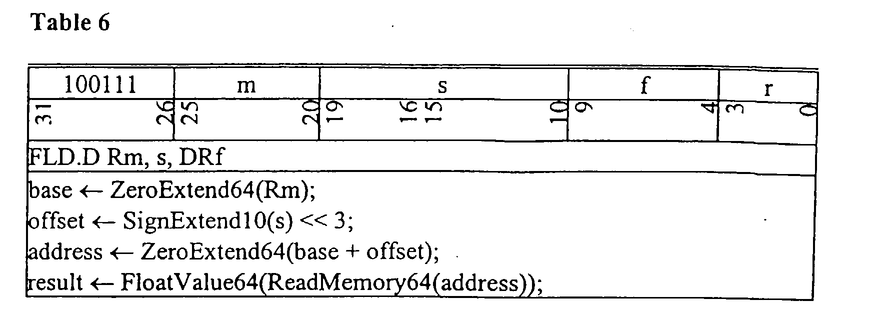

The FLD.P instruction, Table 7, loads a pair of single-precision floating-point registers from memory using register plus scaled immediate addressing. The effective address is formed by multiplying the sign-extended 10-bit value of s by 8, and adding it to Rₘ. The 64 bits read from this effective address are loaded into FP_{f}. The lower half of the 64-bit data appears in FRf, and the upper half in FR_{f+1}.

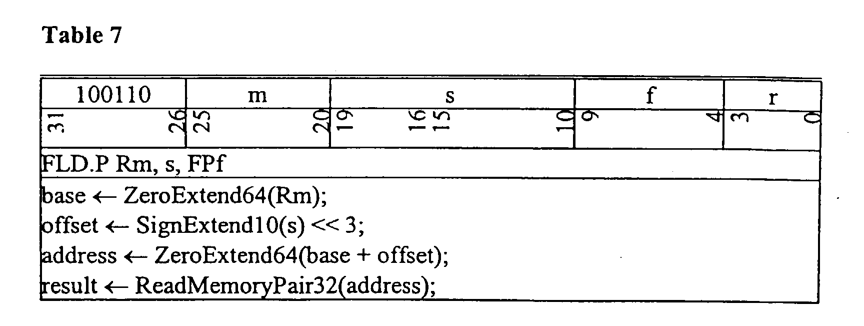

The FST.D instruction, Table 8, stores a double precision floating-point register to memory using register plus scaled immediate addressing. The effective address is formed by multiplying the sign-extended 10-bit value of s by 8, and adding it to Rₘ. The 64-bit value of DR_{z} is written to this effective address.

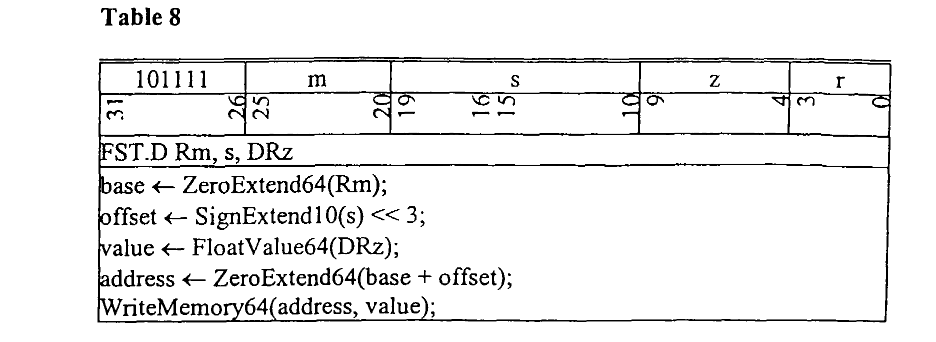

The FST.P instruction, Table 9, stores a pair of single-precision floating-point registers to memory using register plus scaled immediate addressing. The effective address is formed by multiplying the sign-extended 10-bit value of s by 8, and adding it to Rₘ. The 64-bits of data in FP_{z} are written to the effective address. The lower half of the 64-bit data is from FR_{z}, and the upper half from FR_{z+1}.

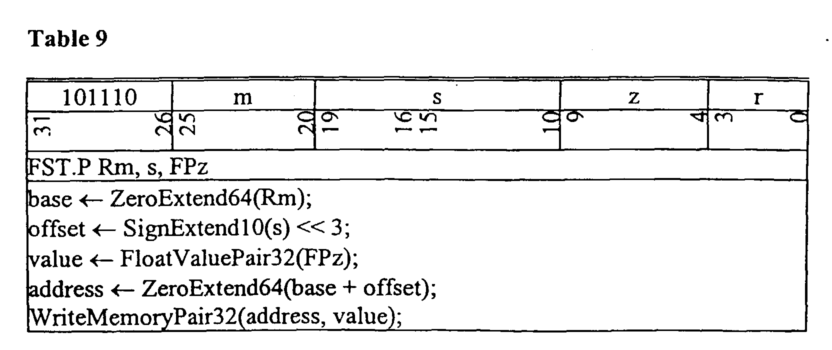

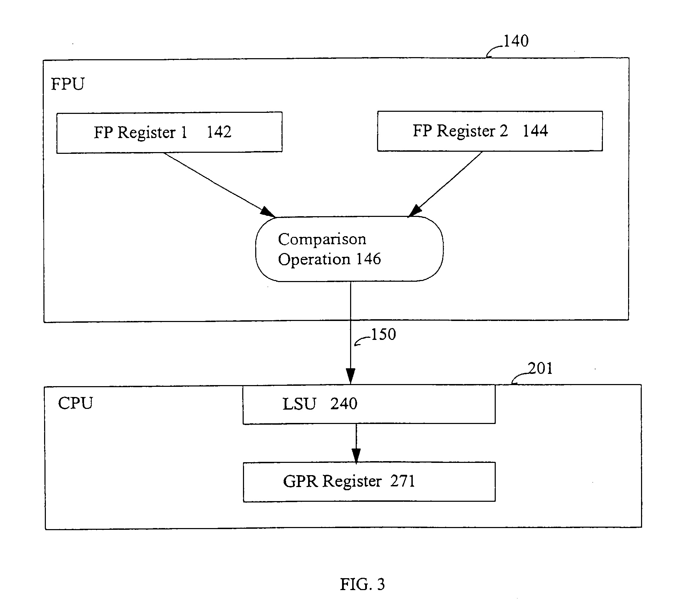

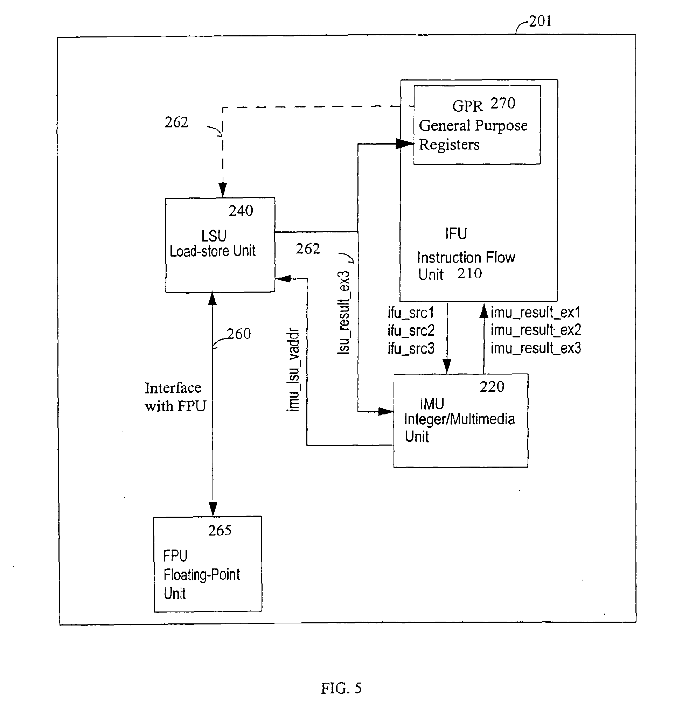

FIG. 3 shows a specific embodiment of the Boolean result of the logical comparison of the contents of two floating-point registers of the present invention. FIG. 3 shows two examples of floating point registers, FP Register 1, 142 and FP Register 2, 144 in FPU 140. These registers may be, for example, 32 or 64 bits in length, i.e., they correspond to either FP2i or DRi above. A comparison operation 146 is performed on the two registers 142, 144. Examples of the comparison instructions are given in Table 10. The result 150 is a Boolean value, for example, true/false or a bit that is 1 or 0. The result 150 is sent to the LSU 240 in the CPU 201(see also FIG. 5 in which more detail is shown), which then sends the, for example, bit value to a General Purpose Register (GPR) 271, which is part of a bank of GPR's 270 (FIG. 5). The GPR may be an integer register.

**Table 10**

| **Instruction** | **Summary** |
|---|---|
| FCMPEQ.S source1, source2, result | compare single-precision numbers for equality |
| FCMPEQ.D source1, source2, result | compare double-precision numbers for equality |
| FCMPGT.S source1, source2, result | compare single-precision numbers for greater-than |
| FCMPGT.D source1, source2, result | compare double-precision numbers for greater-than |
| FCMPGE.S source1, source2, result | compare single-precision numbers for greater-or-equal |
| FCMPGE.D source1, source2, result | compare double-precision numbers for greater-or-equal |
| FCMPUN.S source1, source2, result | compare single-precision numbers for unorderedness, i.e., when at least one of x and y is a NaN |
| FCMPUN.D source1, source2, result | compare double-precision numbers for unorderedness |

Table 11 shows the mapping from the above floating-point instructions in Table 10 to the IEEE754 comparison functions. In Table 11, the result of the compare may be stored as a Boolean in a general-purpose register(GPR) R_{d}, where the GPR may be an integer register.

**Table 11**

| Format | Instruction | IEEE754 Comparison |
|---|---|---|
| Single | FCMPEQ.S FR₀, FR₁, R_{d} | FR₀ = FR₁ |
| | FCMPGT.S FR₀, FR₁, R_{d} | FR₀ > FR₁ |
| | FCMPGE.S FR₀, FR₁, R_{d} | FR₀ >= FR₁ |
| | FCMPUN.S FR₀, FR₁, R_{d} | FR₀ ? FR₁ |
| Double | FCMPEQ.D DR₀, DR₂, R_{d} | DR₀ = DR₂ |
| | FCMPGT.D DR₀, DR₂, R_{d} | DR₀ > DR₂ |
| | FCMPGE.D DR₀, DR₂, R_{d} | DR₀ >= DR₂ |
| | FCMPUN.D DR₀, DR₂, R_{d} | DR₀ ? DR₂ |

In a specific embodiment the following two example instructions, FCMPGE.S and FCMPGE.D, in Table 12 and Table 13 illustrate the format of the floating-point comparison instructions.

The FCMPGE.S instruction, Table 12, performs a single-precision floating-point greater-than-or-equal-to comparison. It sets R_{d} to 1 if FR_{g} is greater than or equal to FRₕ, and otherwise sets R_{d} to zero.

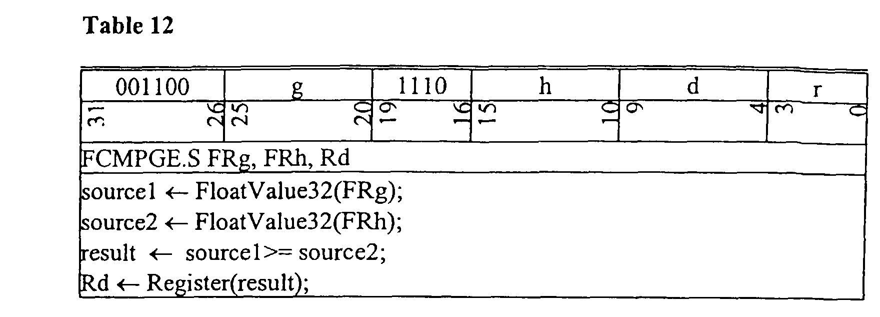

The FCMPGE.D instruction, Table 13 performs a double-precision floating-point greater-than-or-equal-to comparison. It sets R_{d} to 1 if DR_{g} is greater than or equal to DRₕ, and otherwise sets R_{d} to zero.

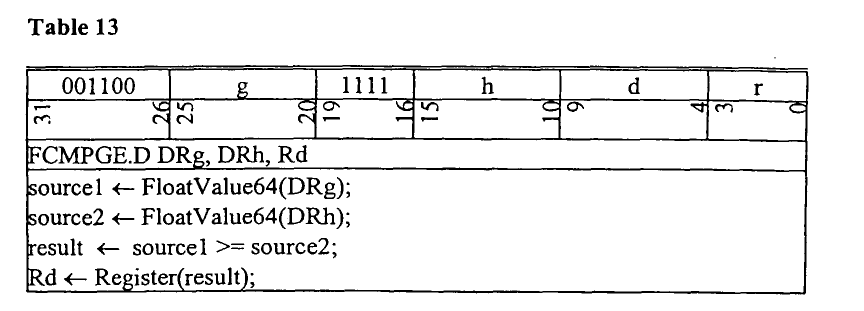

### Specific Embodiments of Hardware Implementations

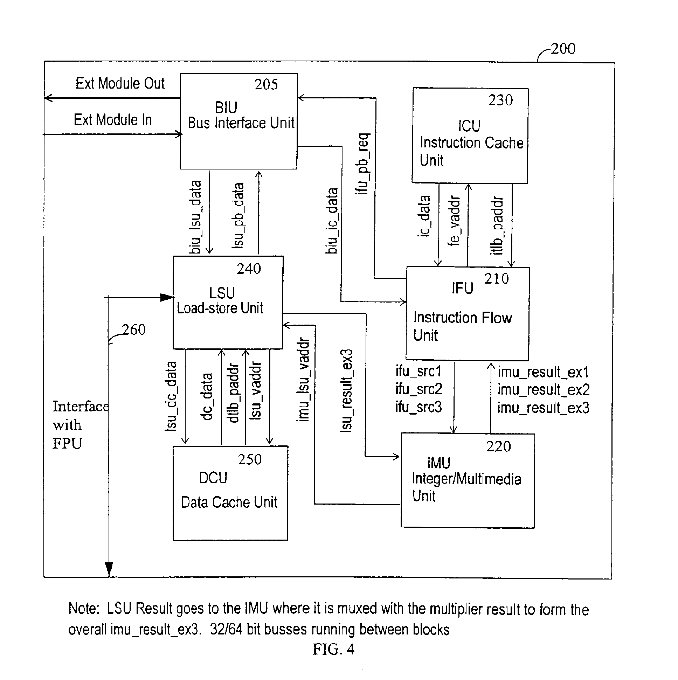

In a specific embodiment, the present invention may be implemented in a CPU having a core unit 200 which may include six units and a detachable Floating-Point Unit (FPU). FIG. 4 illustrates an example of the top level partitioning of the S5 Core. Table 14 describes the functions of each unit in the S5 core. The Instruction Flow Unit (IFU) 210, which processes the Floating-Point instructions, is further described in Appendix 3. In a specific embodiment the FPU 265 performs the Floating Point Operations as specified in the IEEE 754 Floating Point Standard in either hardware or software or a combination of both. Another specific embodiment of the FPU 265 is given in Appendices 1 and 2.

**Table 14**

| **Unit** | **Acronym** | **Description** |
|---|---|---|
| S5 Core 200 | S5 | Top level core block |
| Bus interface unit 205 | BIU | Controls bus access to external modules such as peripheral modules and external memory interface. |
| Instruction Flow Unit 210 | IFU | The front end of the CPU pipe: fetch, decode, issue & branch. Also contains mode B emulation. |
| Instruction multimedia unit 220 | IMU | Handles all integer and multimedia instructions. The main CPU datapath. |
| Instruction cache Unit 230 | ICU | Comprises the Instruction Cache and the Instruction Translation Lookaside Buffer (TLB) |
| Load Store Unit 240 | LSU | Handles all memory instructions and Data cache control. |
| Data cache Unit 250 | DCU | Comprises the Data Cache and the Data Translation Lookaside Buffer (TLB) |
| Floating Point Unit 265 | FPU | Detachable Floating point unit (not shown in Fig. 4 ). |

FIG. 5 illustrates a specific embodiment of a limited number of selected blocks in the CPU. In FIG. 5, the CPU 201 includes the blocks the IFU 210, the IMU 220, and the LSU 220. The FPU 265 transfers data to and from the LSU 240 via an interface bus 260. The LSU then may transfer the data to the GPR's 270 via the Isu_result_ex3 bus 262. The return path from the GPR's 270 to the LSU 240 may be indirect as indicated by the dashed data bus 262. After the LSU 240 gets the data from the GPR 270 it may then transfer it to the FPU 265. The LSU 240, as may be seen in FIG. 4, also loads and stores data to the memory.

The FPU may be pipelined having stages F1 and F2. The FPU 265 includes 64 32-bit registers which may be used as single-precision floating-point registers (FR registers), each containing 32 bits, or double-precision floating-point registers (DR registers), each containing 64 bits. The mapping from the DR set onto the FR set is achieved as follows: the low half of DR2i where i is in [0, 31] maps onto FR2i; and the high half of DR2i where i is in [0, 31] maps onto FR2i+1. In an alternative embodiment, the mapping from the DR set onto the FR set is achieved as follows: the high half of DR2i where i is in [0, 31] maps onto FR2i; and the low half of DR2i where i is in [0, 31] maps onto FR2i+1. Additionally, the FR set may be accessed as pairs, as vectors: there are 32 x 2-element pairs called FP2i where i is in [0, 31] and each pair consists of floating-point registers FR2i and FR2i+1. The FPU 265 also includes a FPSCR, which includes the floating-point status and control register. This is used principally to control the rounding mode and exception behavior of floating-point arithmetic. The FPSCR is 32 bits wide.

In a specific embodiment the LSU 240 performs load and store operations to and from the FPU 265, including receiving 64-bit floating point data, receiving the 1-bit floating point comparison result, and passing the results to the General Purpose Registers (GPR's). For an FPU load the LSU 240 may execute a typical load operation from memory. After data has been loaded then the result may be passed to the FPU from before the aligner in the LSU. For an FPU store the LSU does a normal store to memory. The difference is that in the E2 stage, i.e., the second stage of the IFU pipeline, the store data from the FPU will replace the ifu_src3 (Fig. 4) data passed from the IFU 210. For FPU 265 transfers to the GPR, data arrives from the FPU in E2 and may be pushed through the aligner onto Isu_result_ex3 (Fig. 4) to the GPR or it may be forwarded. The FPU 265 comparison result, which may be a single bit, may not be available for transfer to a GPR until the end of the second pipeline stage, F2, of the FPU 265. Thus this signal may be used in E3, i.e., the 3rd pipeline stage of the IFU 210 to control the muxing of the bottom byte of the result of the aligner in the LSU 240, so that the comparison result can be placed on the Isu_result_ex3 to the GPR.

### Conclusion

In the foregoing specification, the invention has been described with reference to specific exemplary embodiments thereof. Other embodiments will be apparent to those of ordinary skill in the art. For example, the instructions may be 16 or 64 or 128 bits in length and the microprocessor and/or co-processor may operate with 16, 32, or 128 bit busses and words. Thus it is evident that various modifications and changes may be made thereunto without departing from the broader spirit and scope of the invention as set forth in the appended claims and their full scope of equivalents.

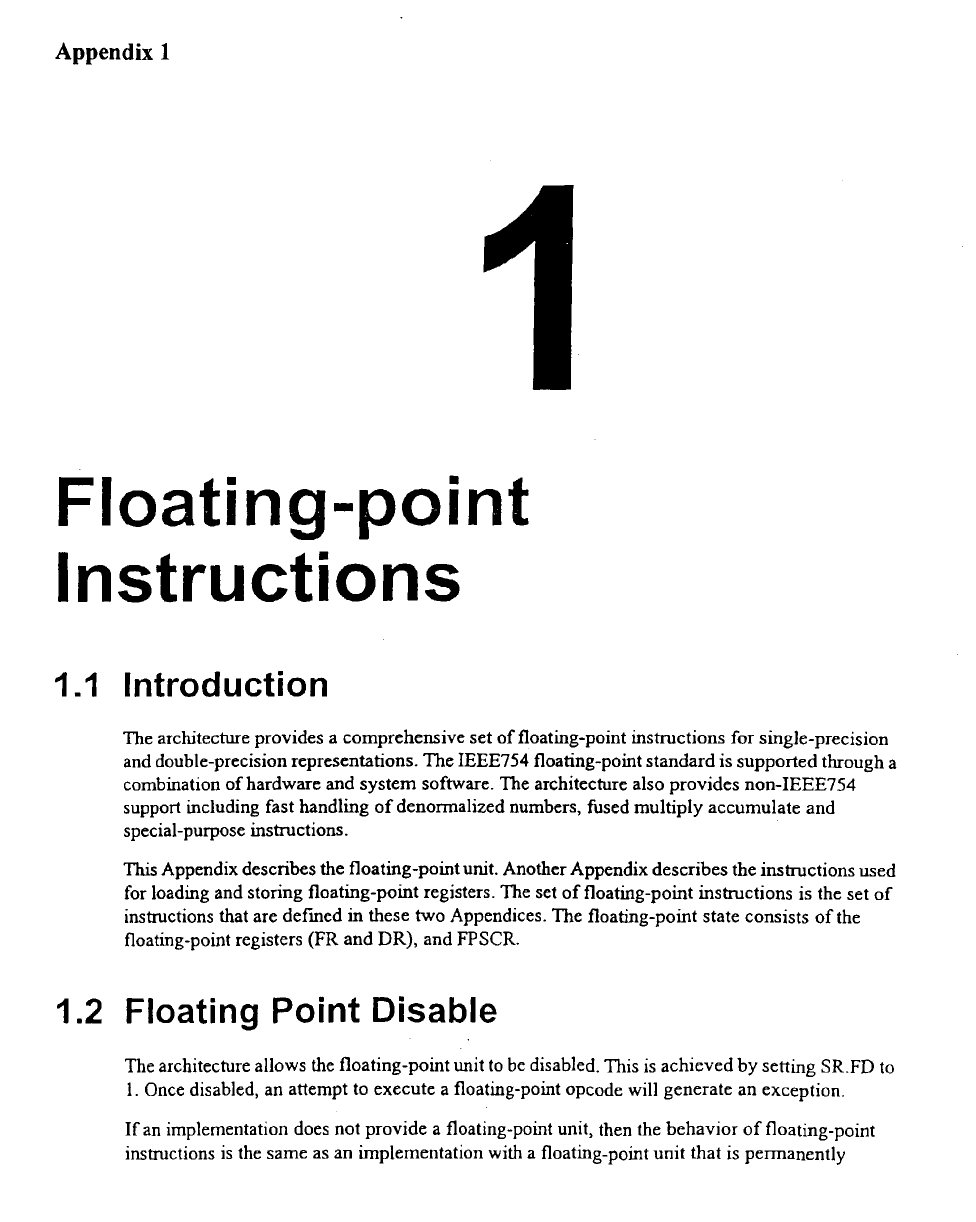

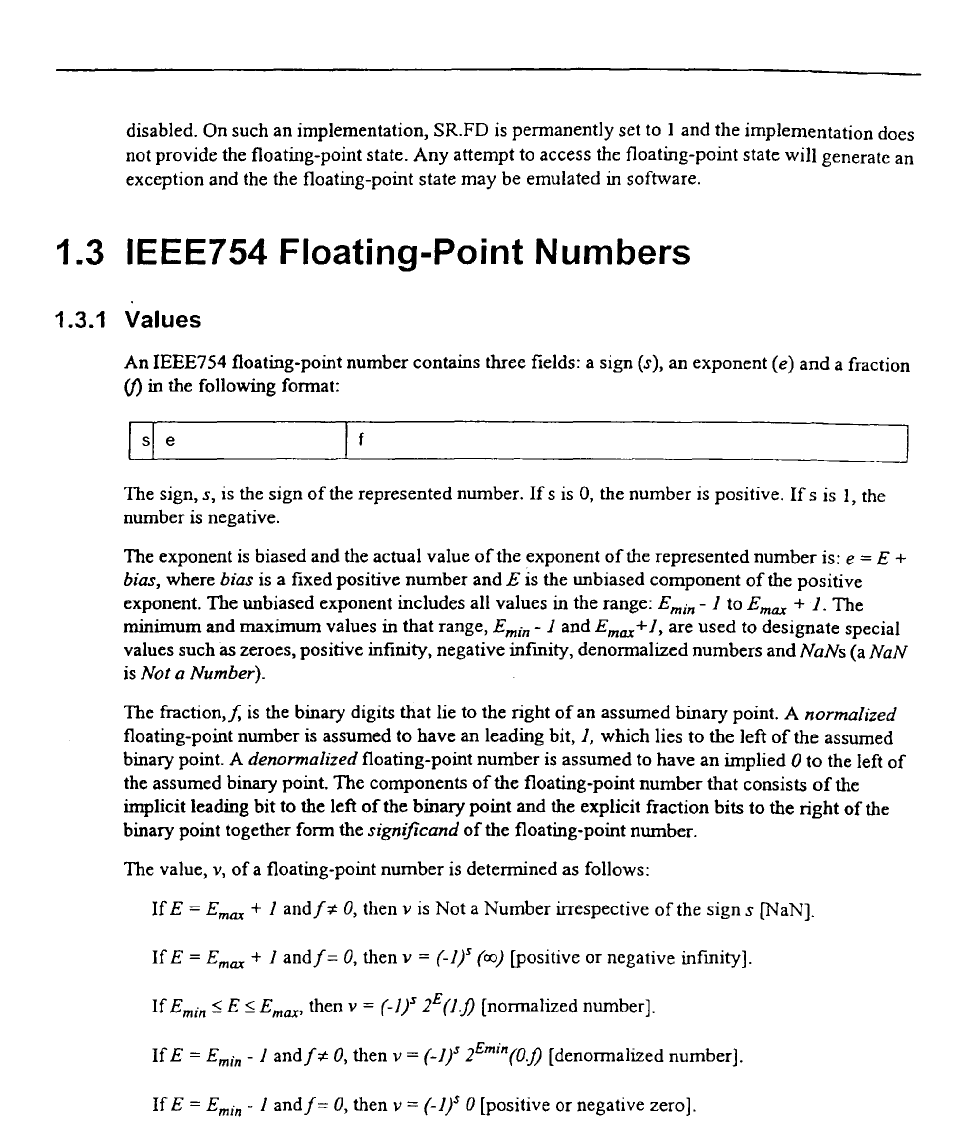

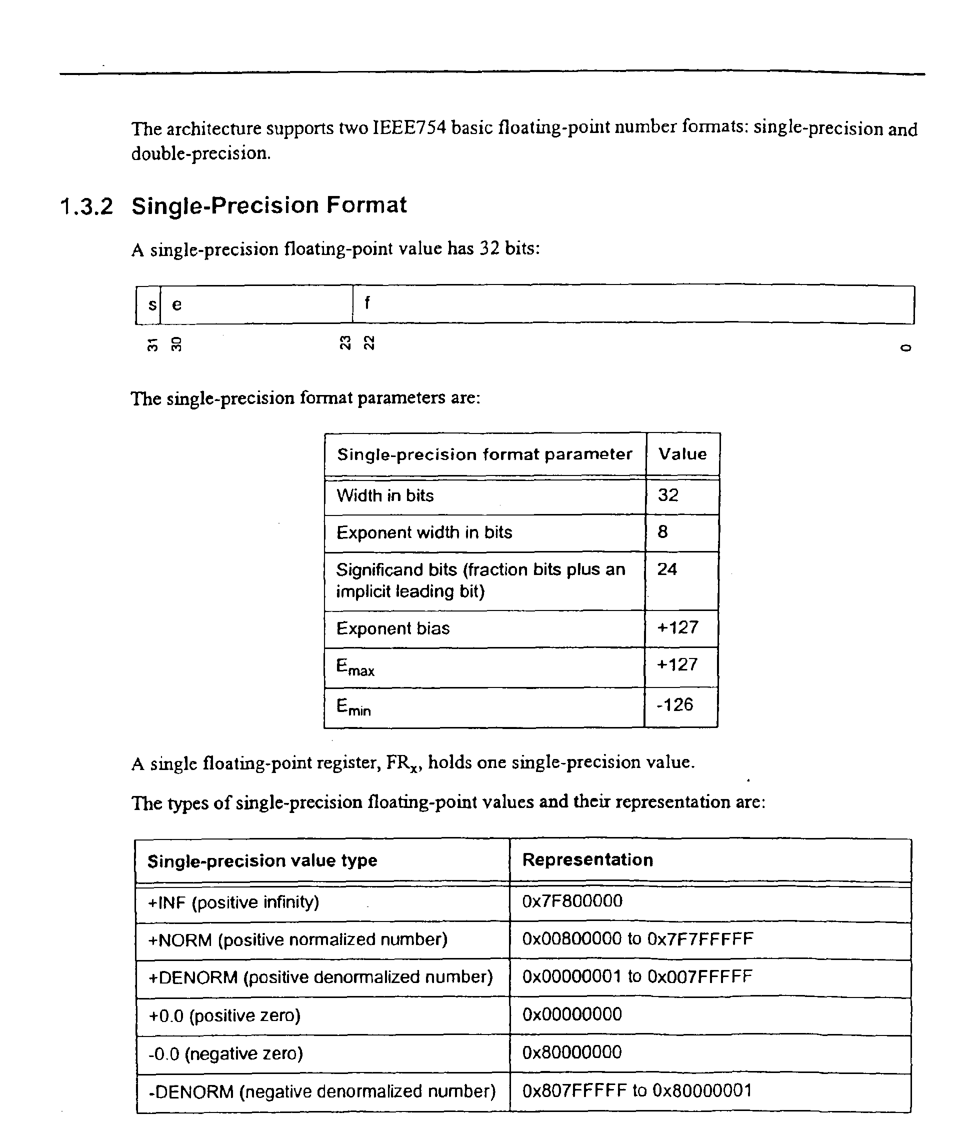

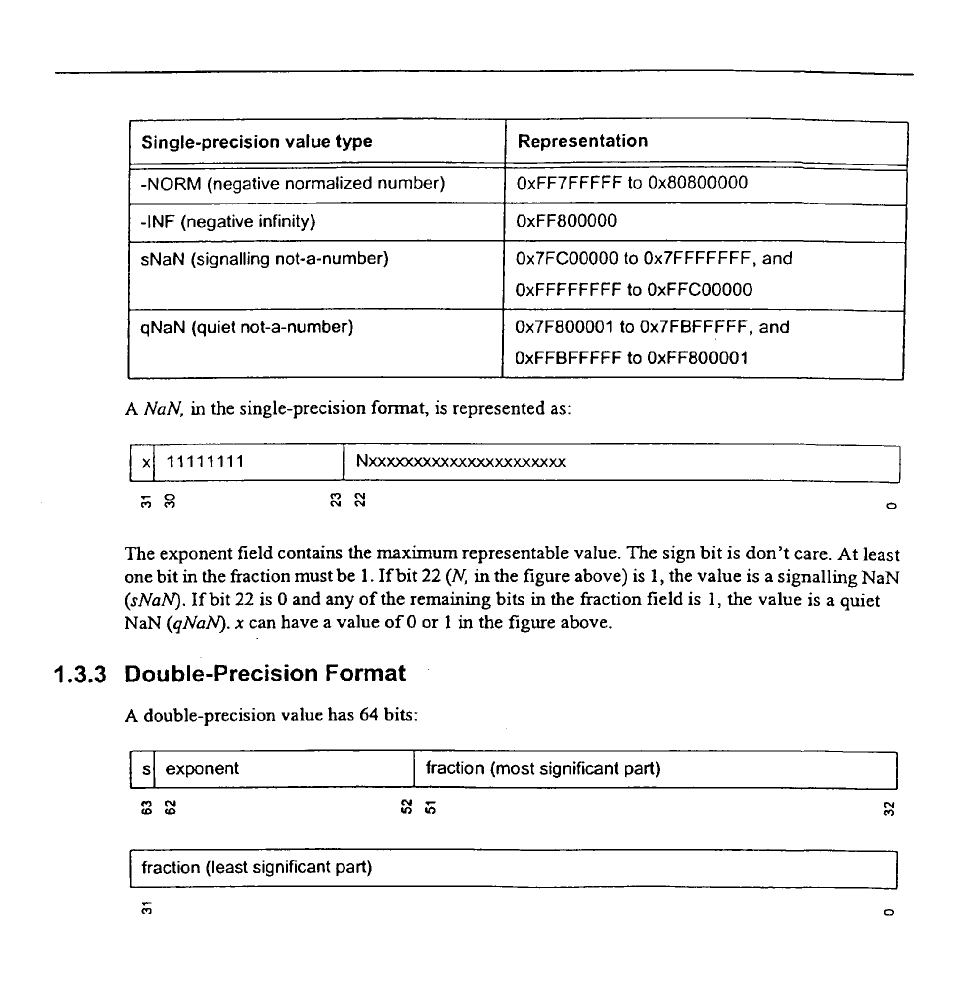

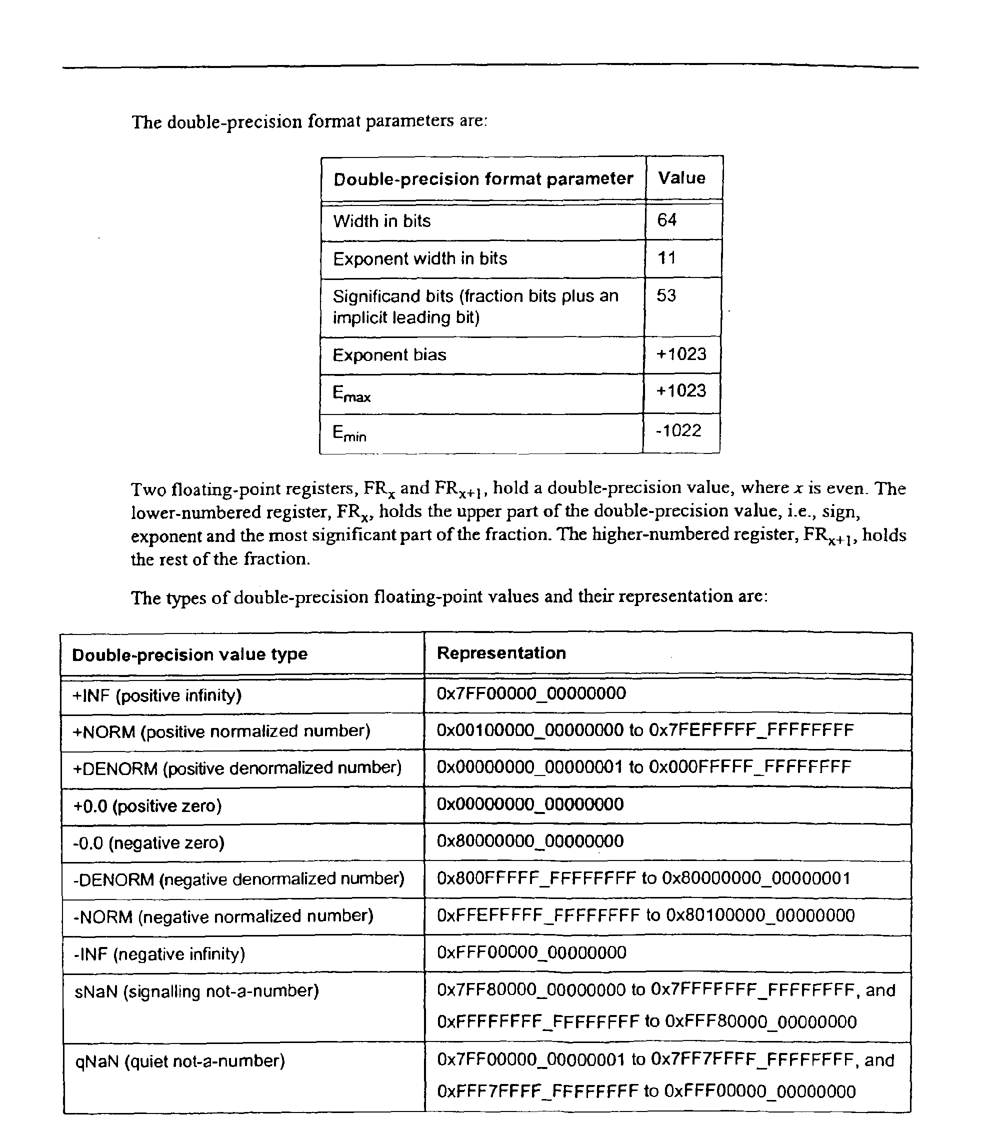

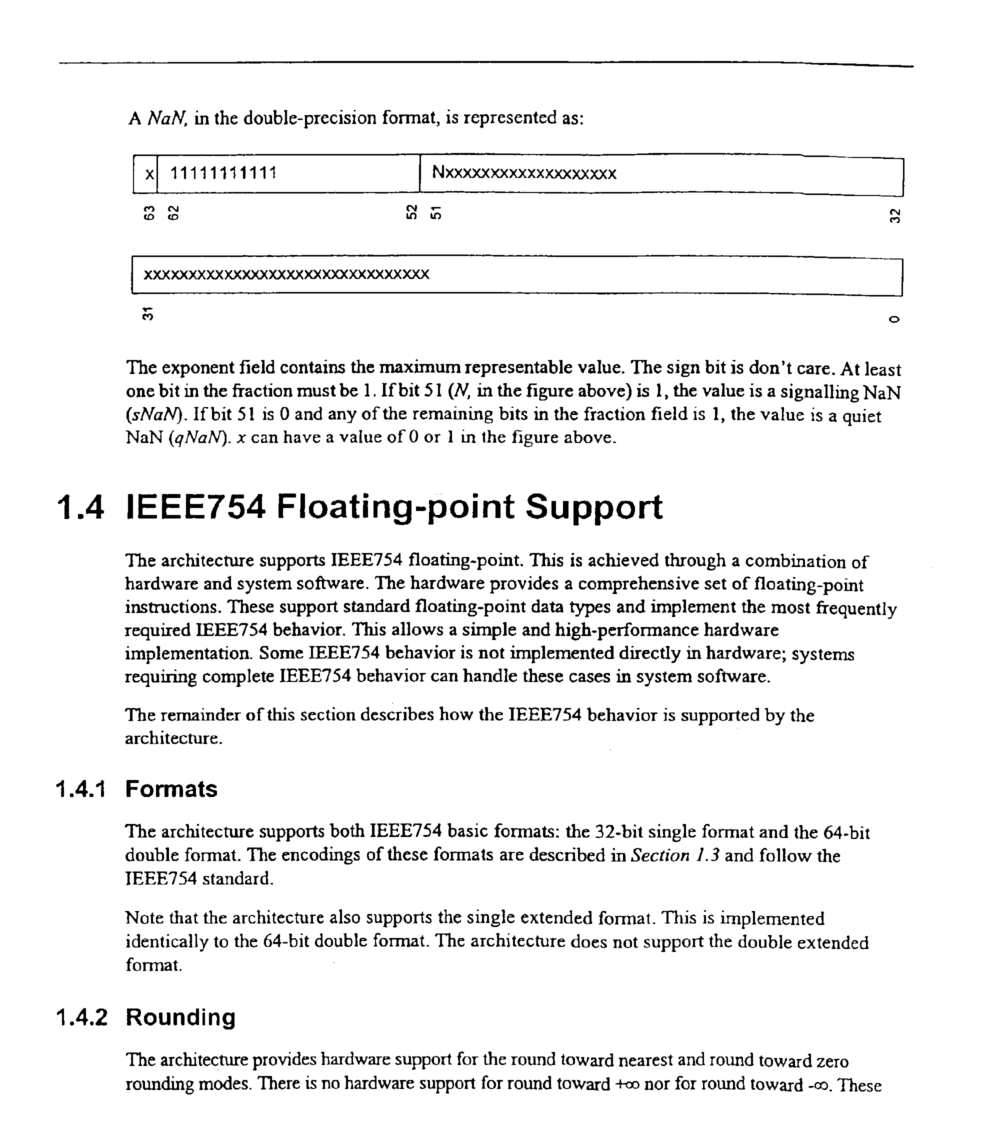

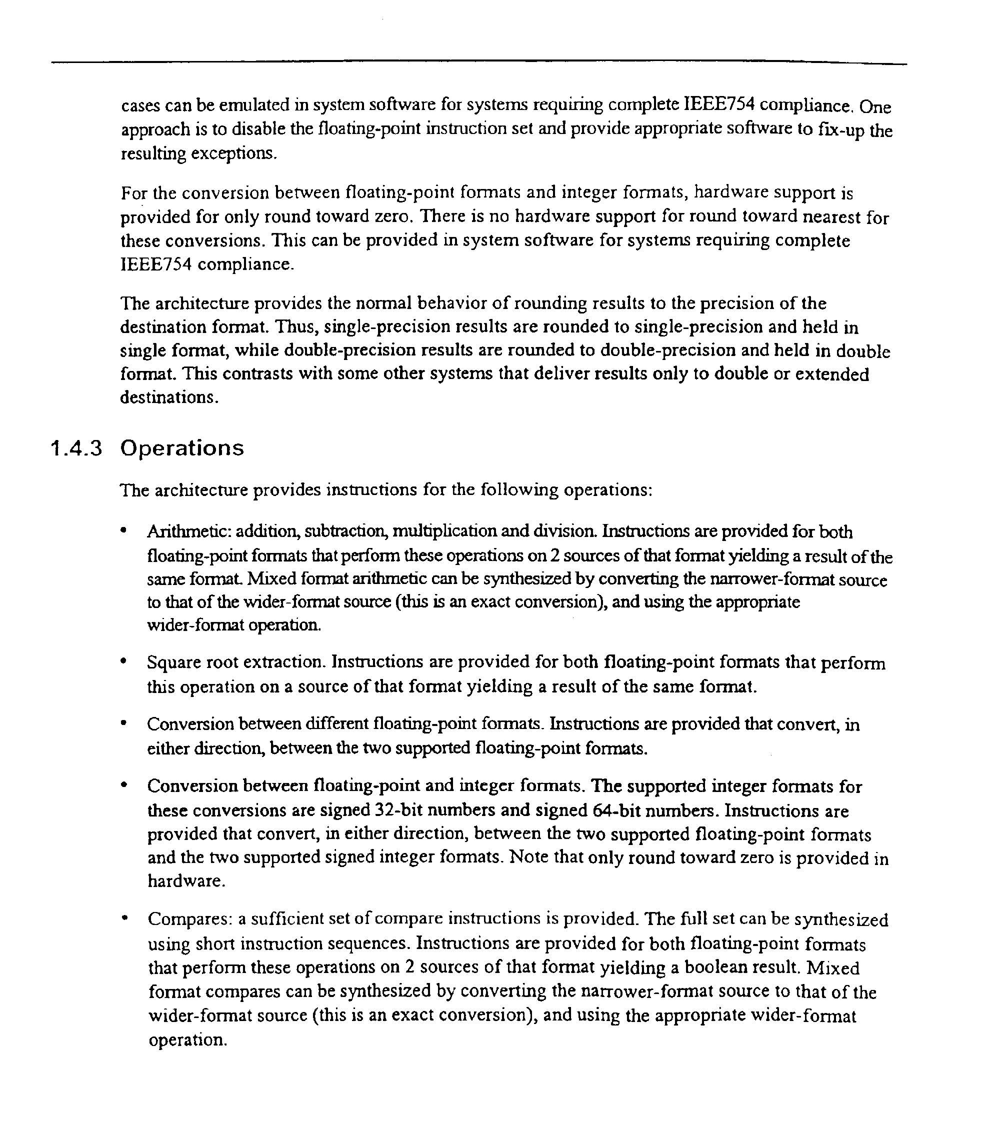

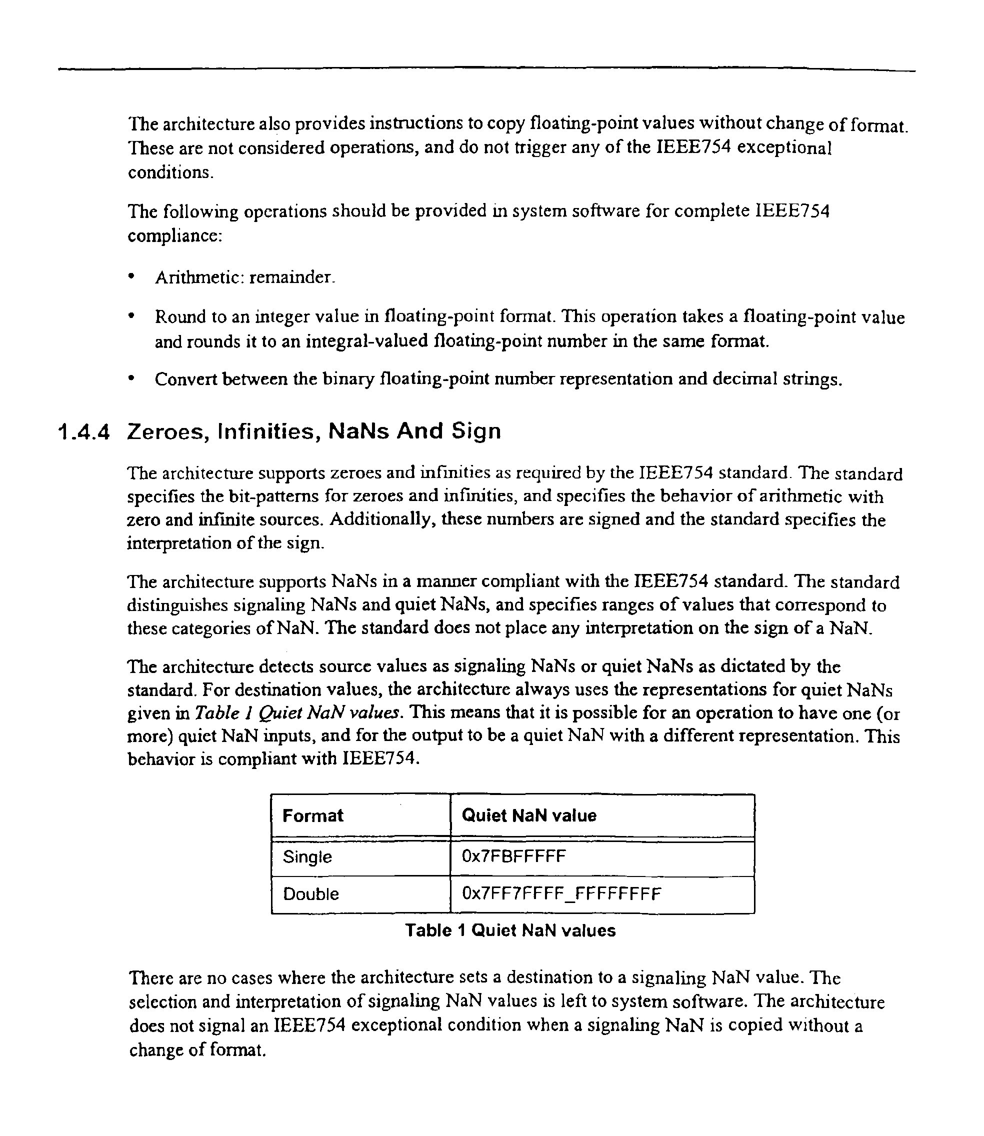

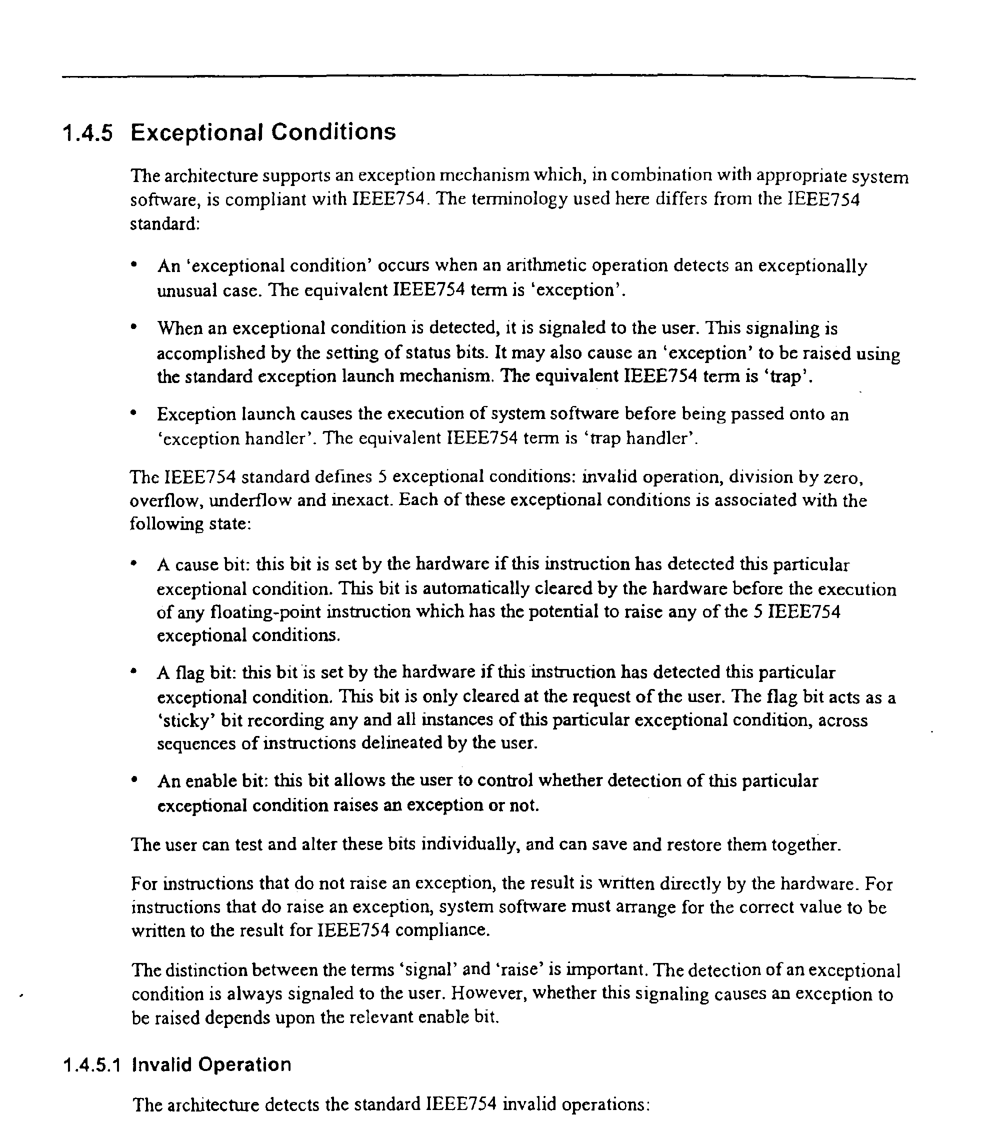

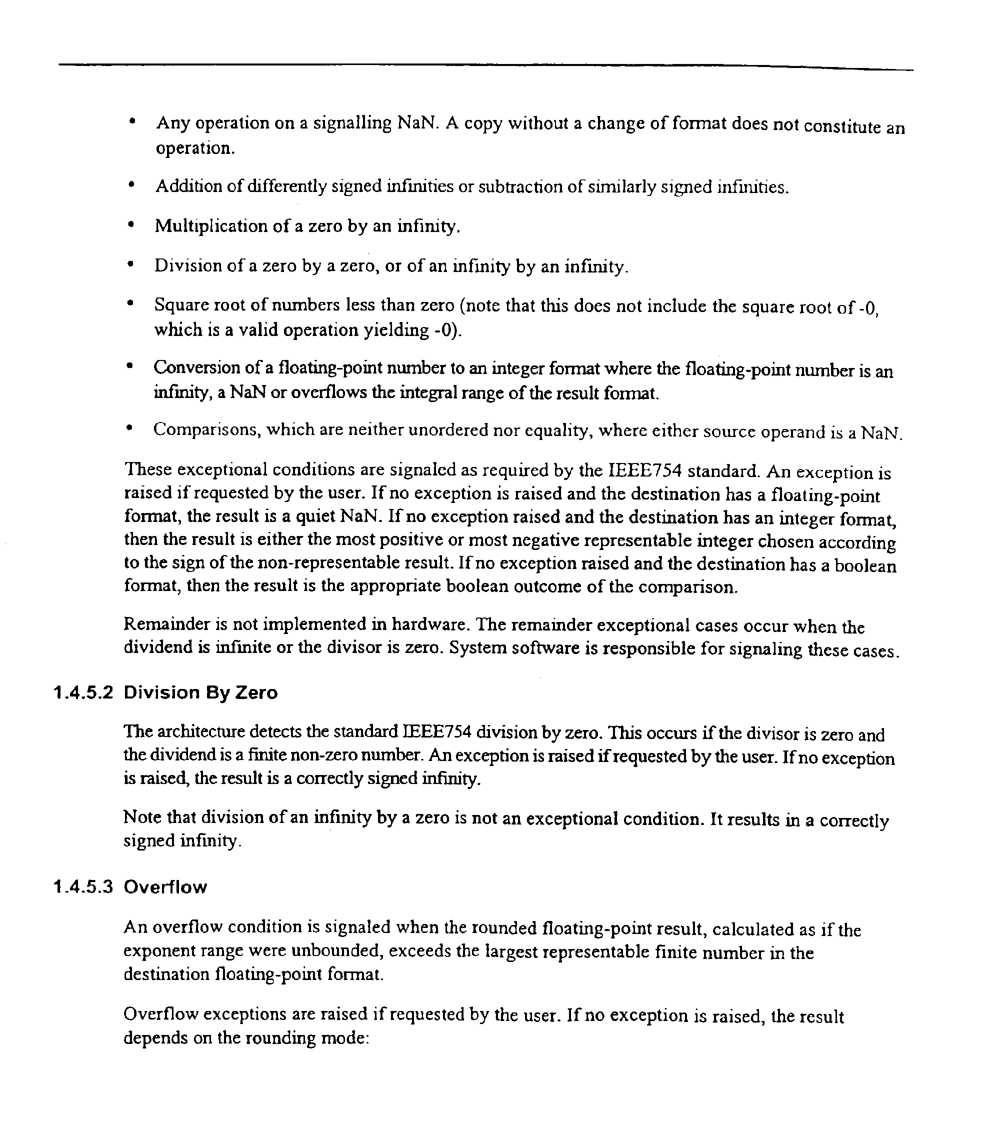

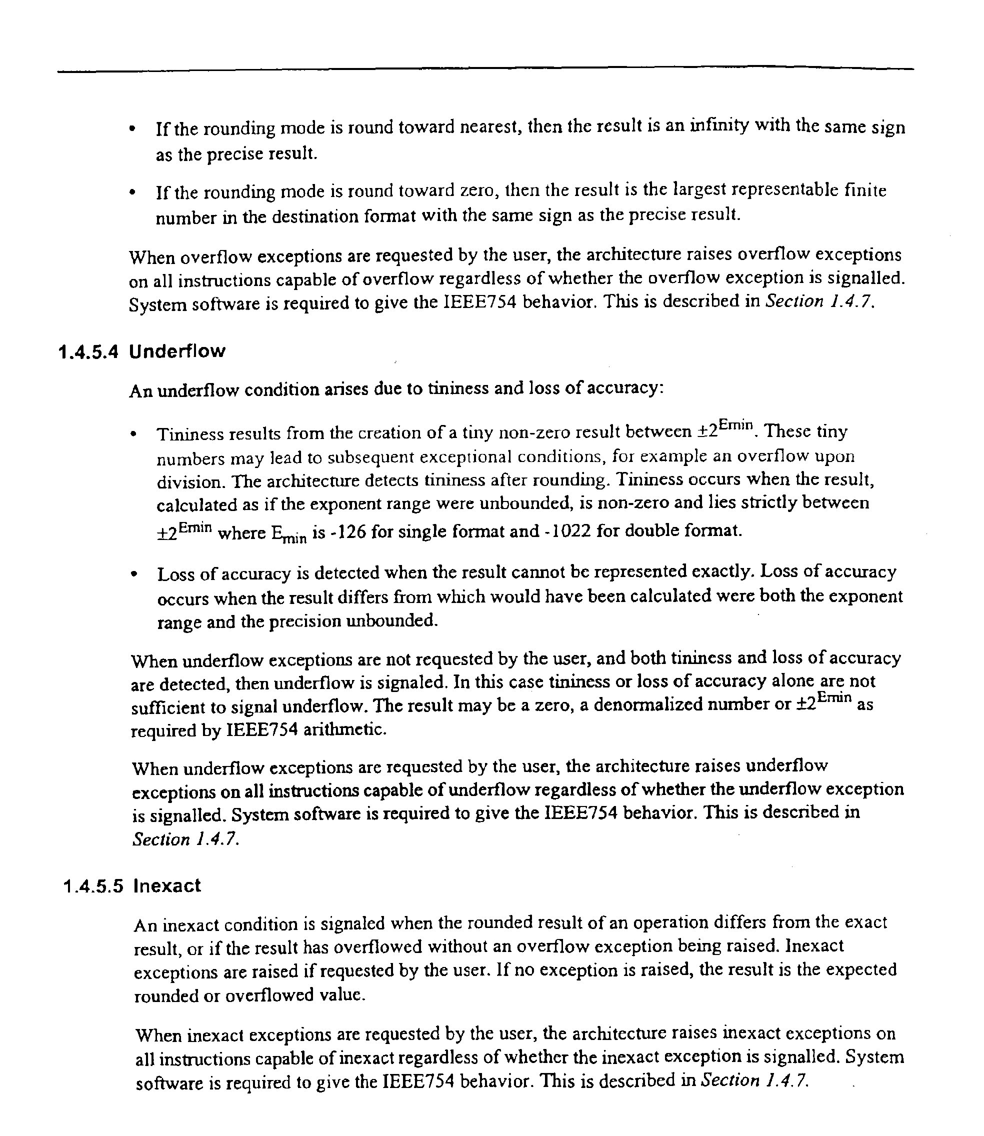

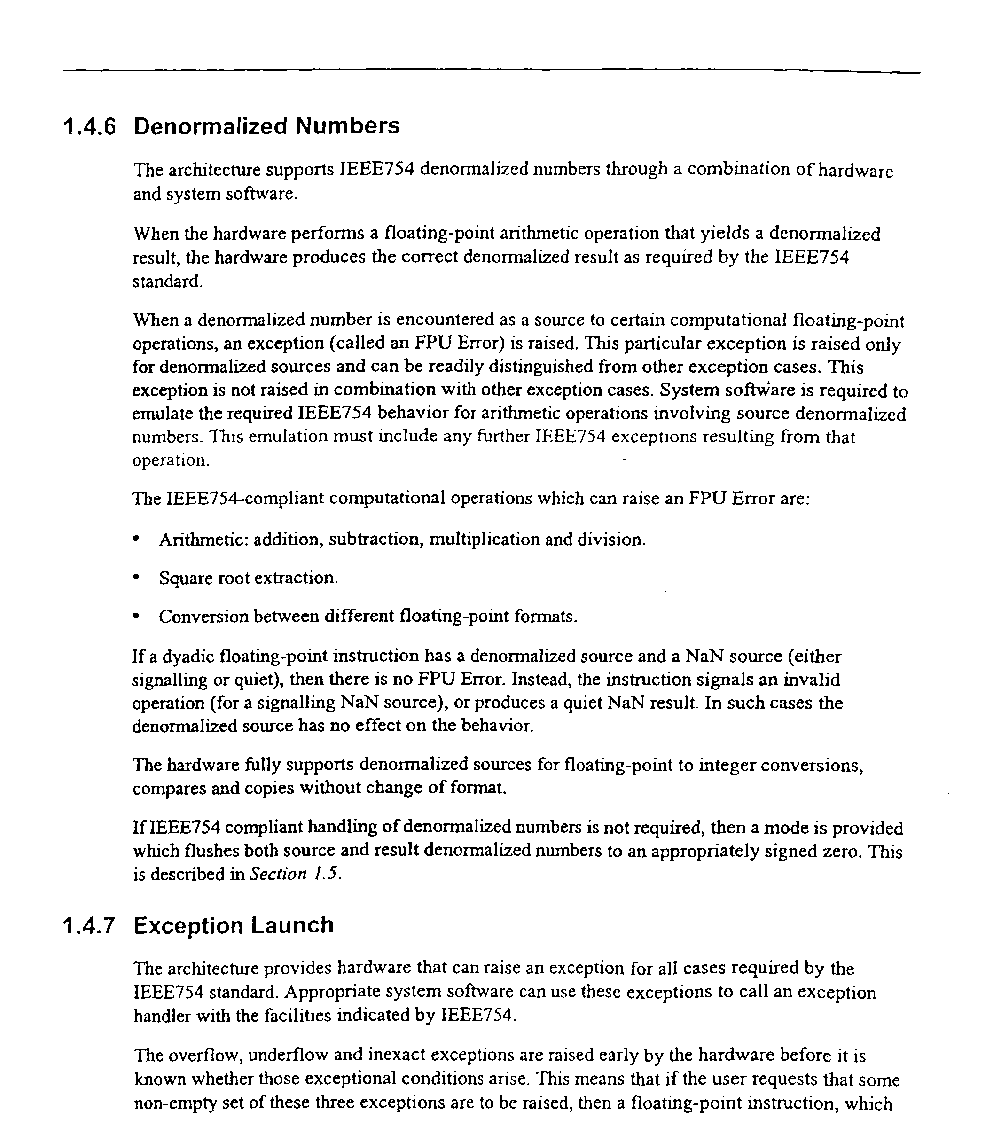

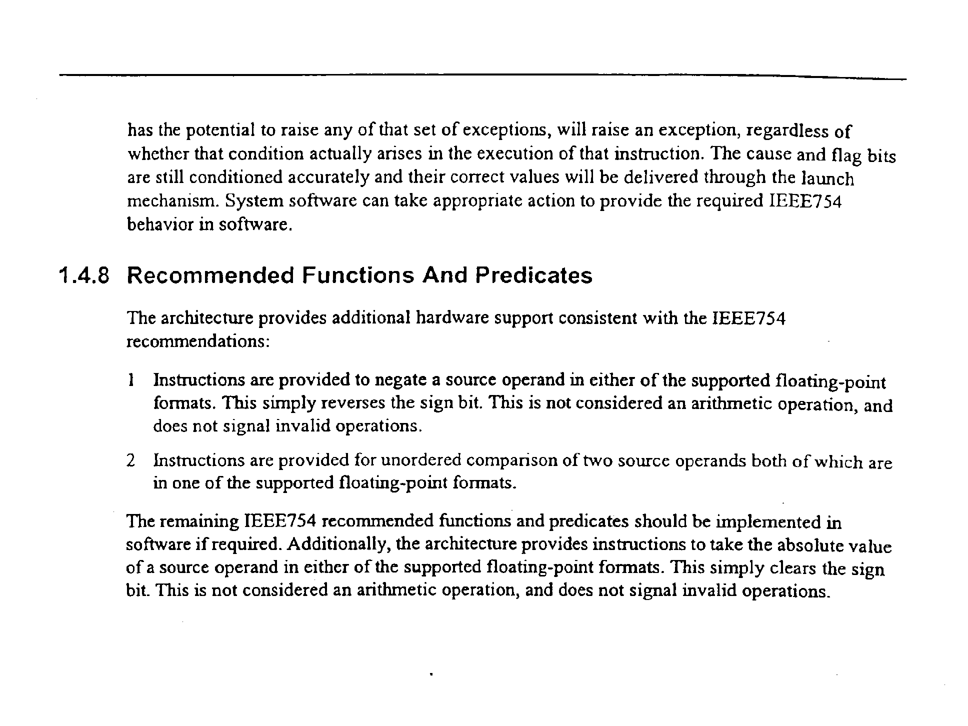

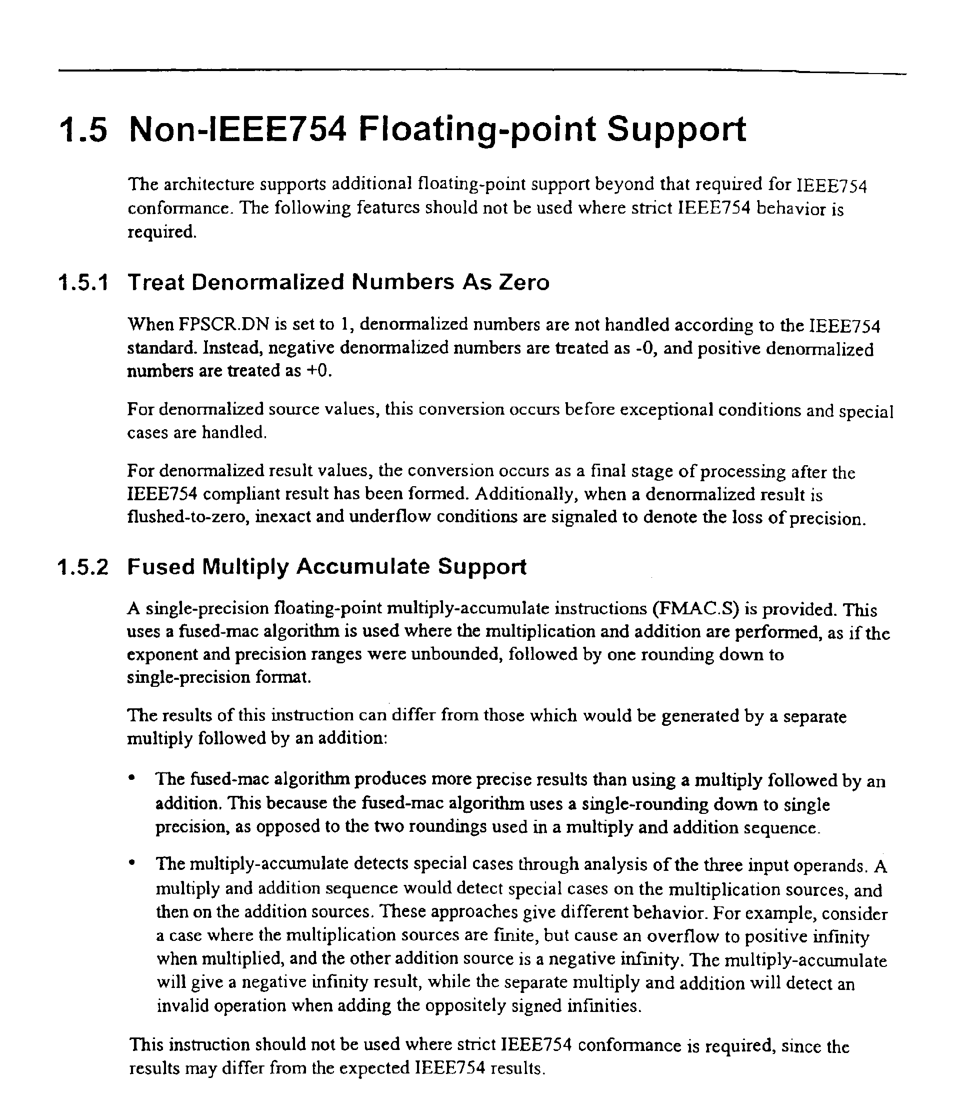

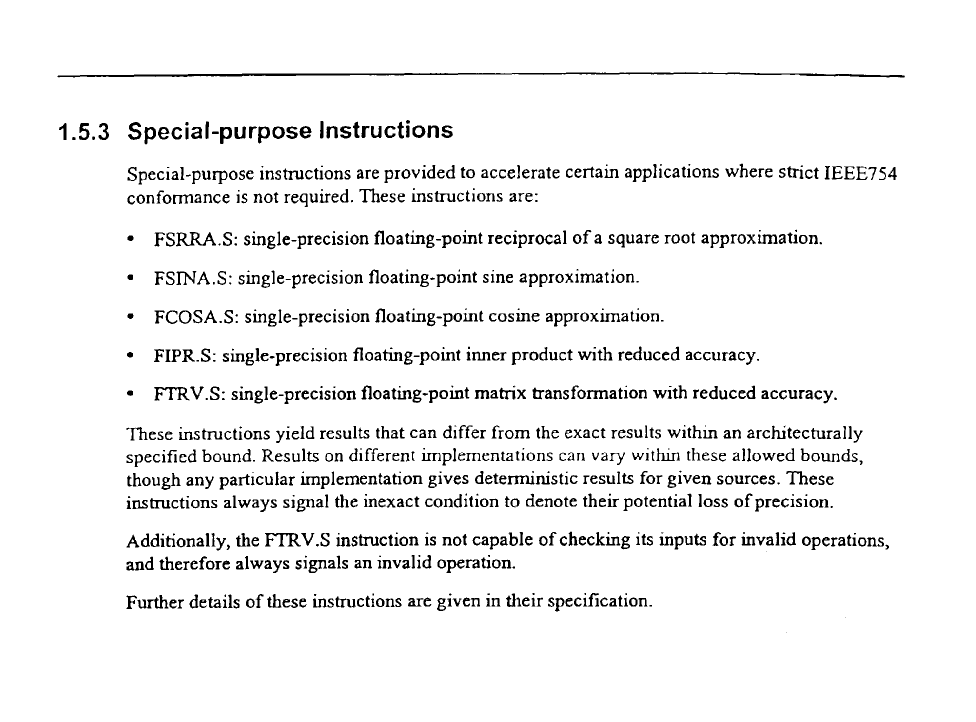

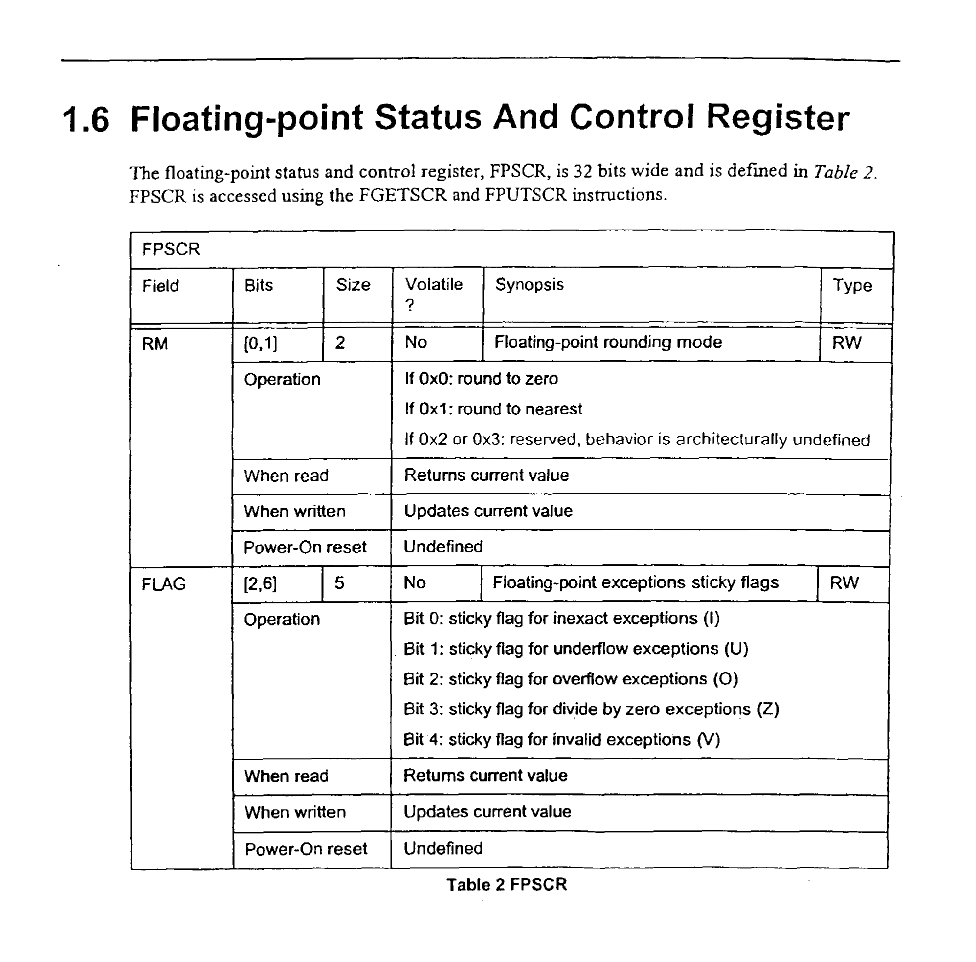

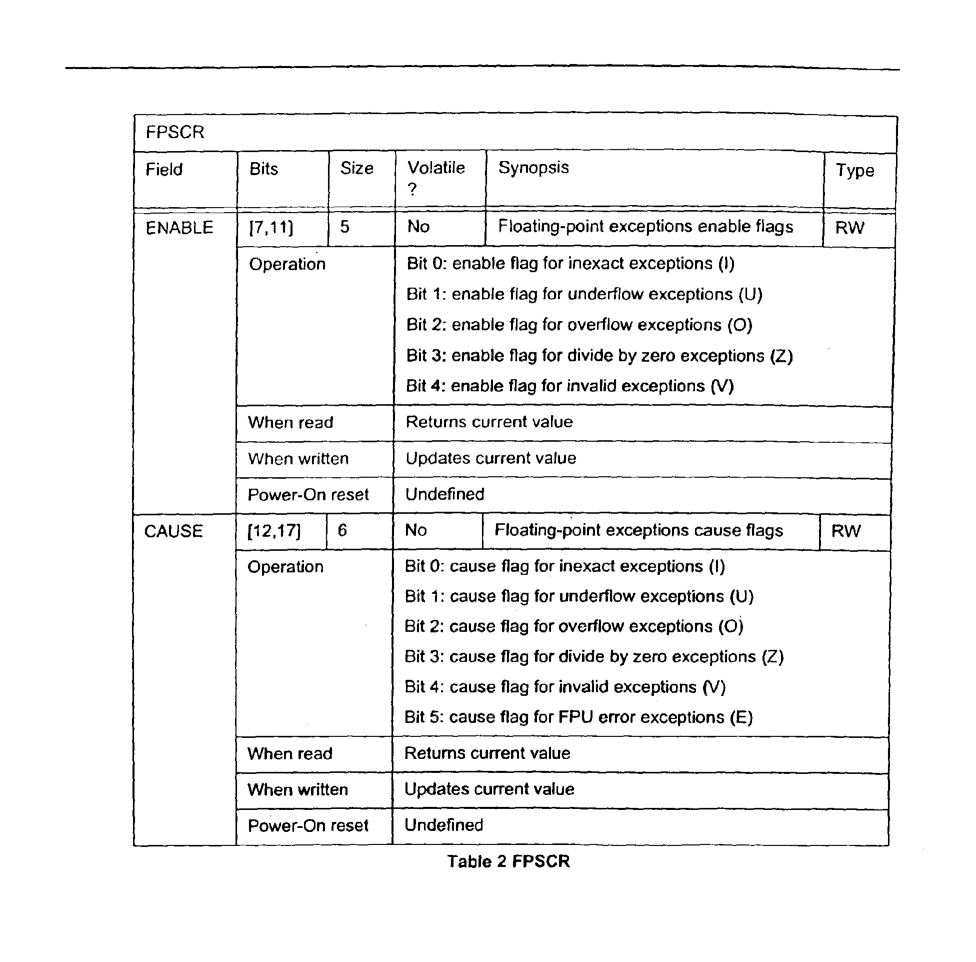

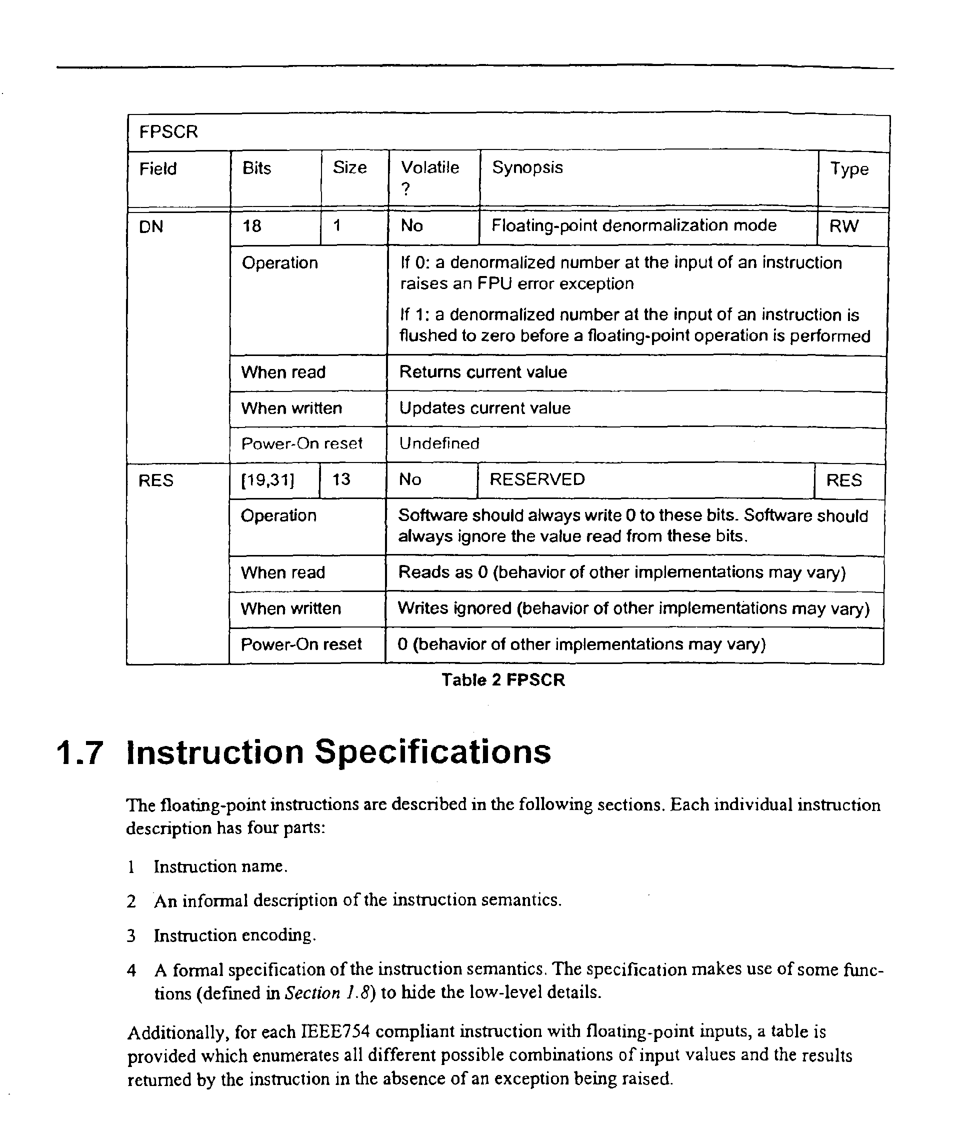

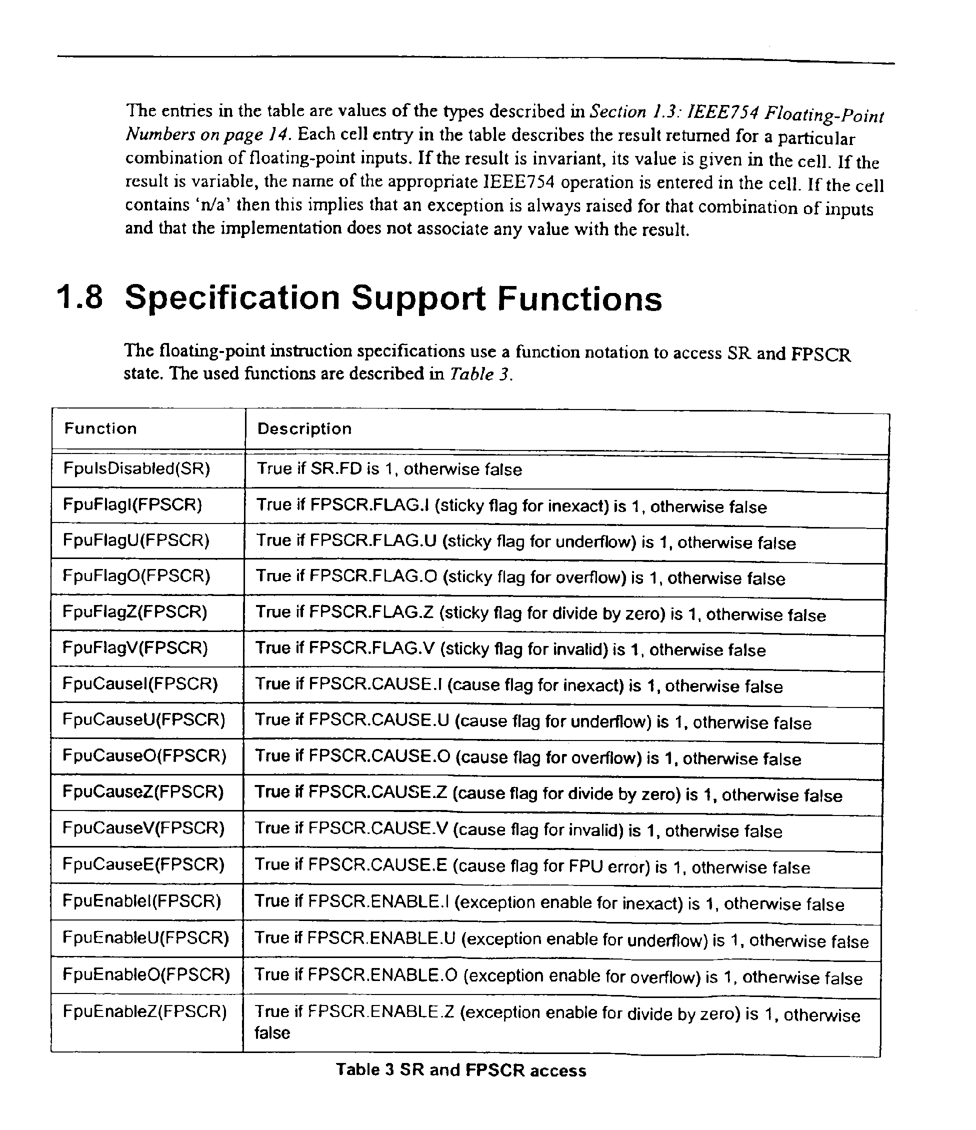

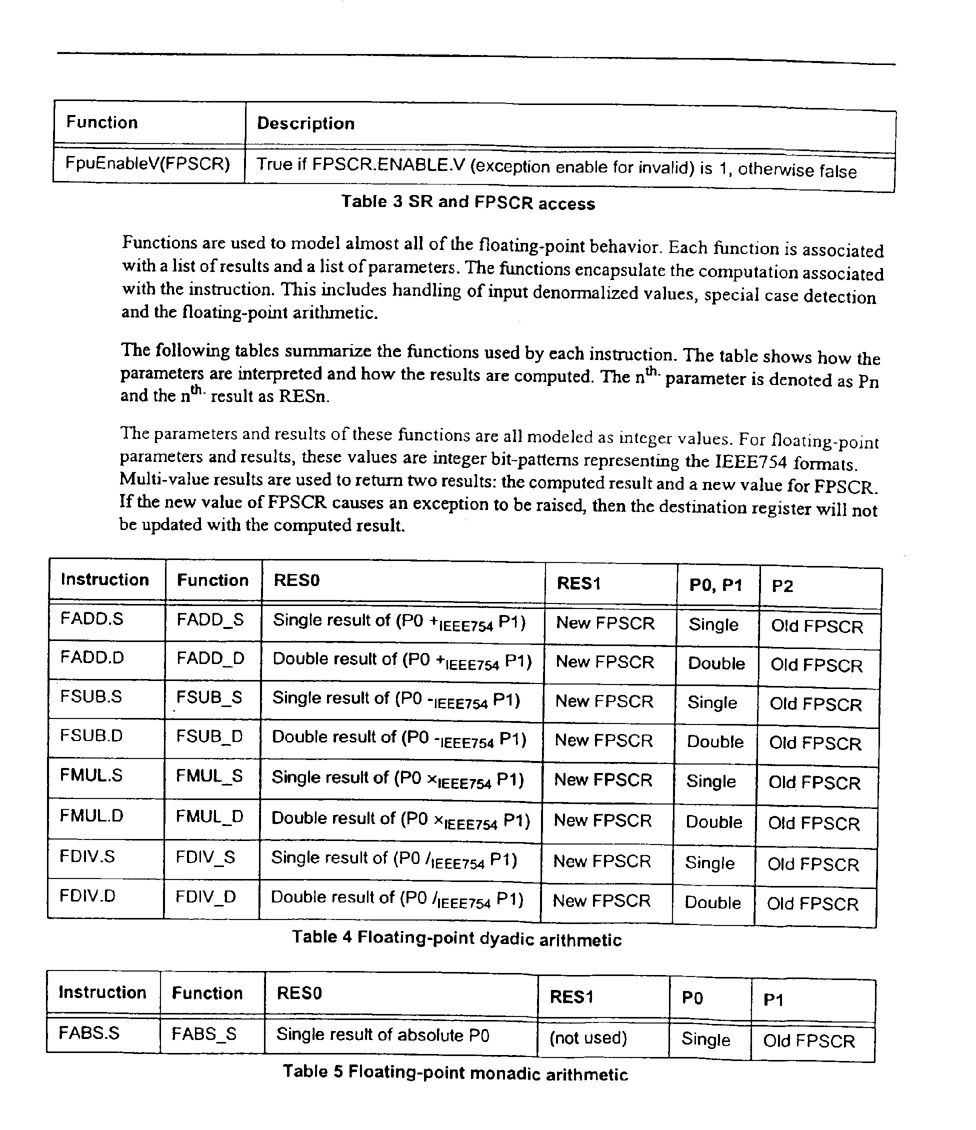

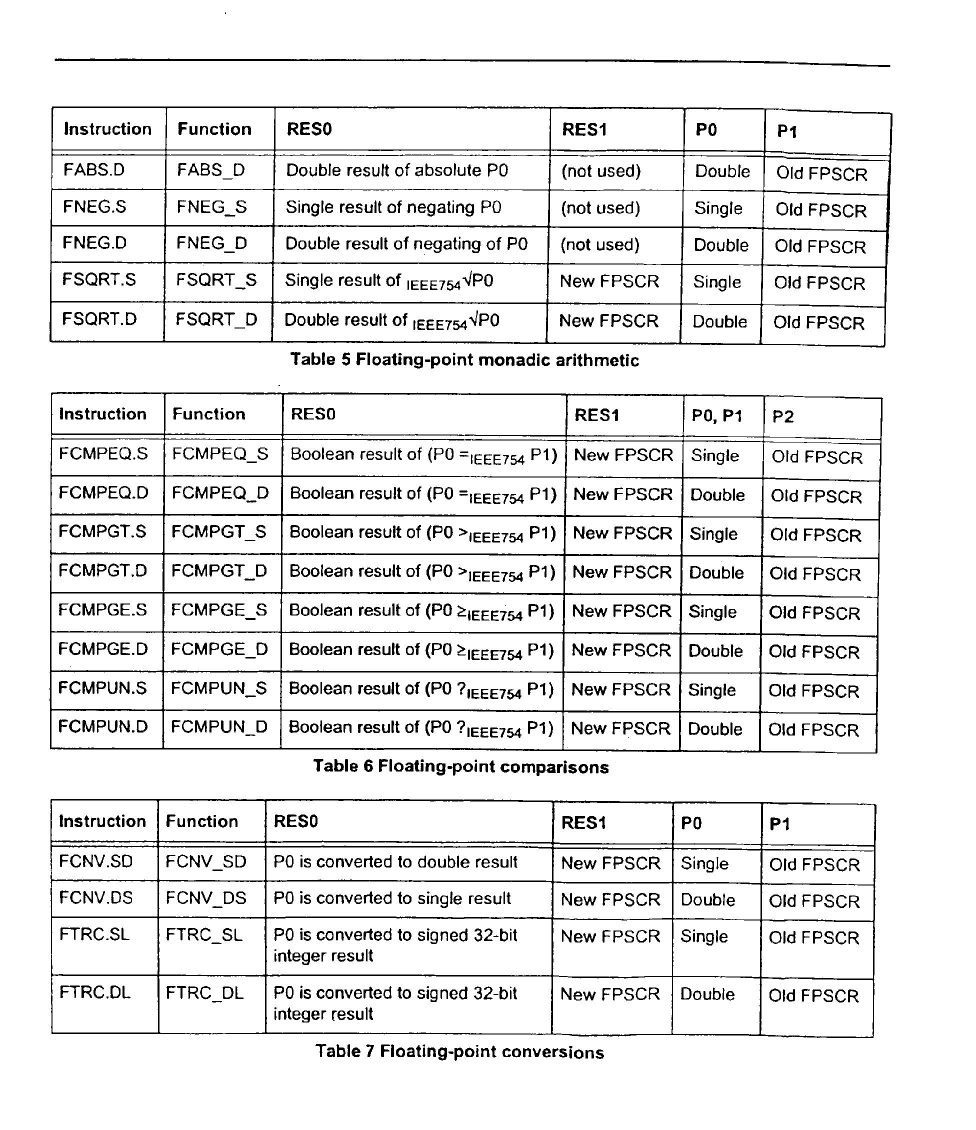

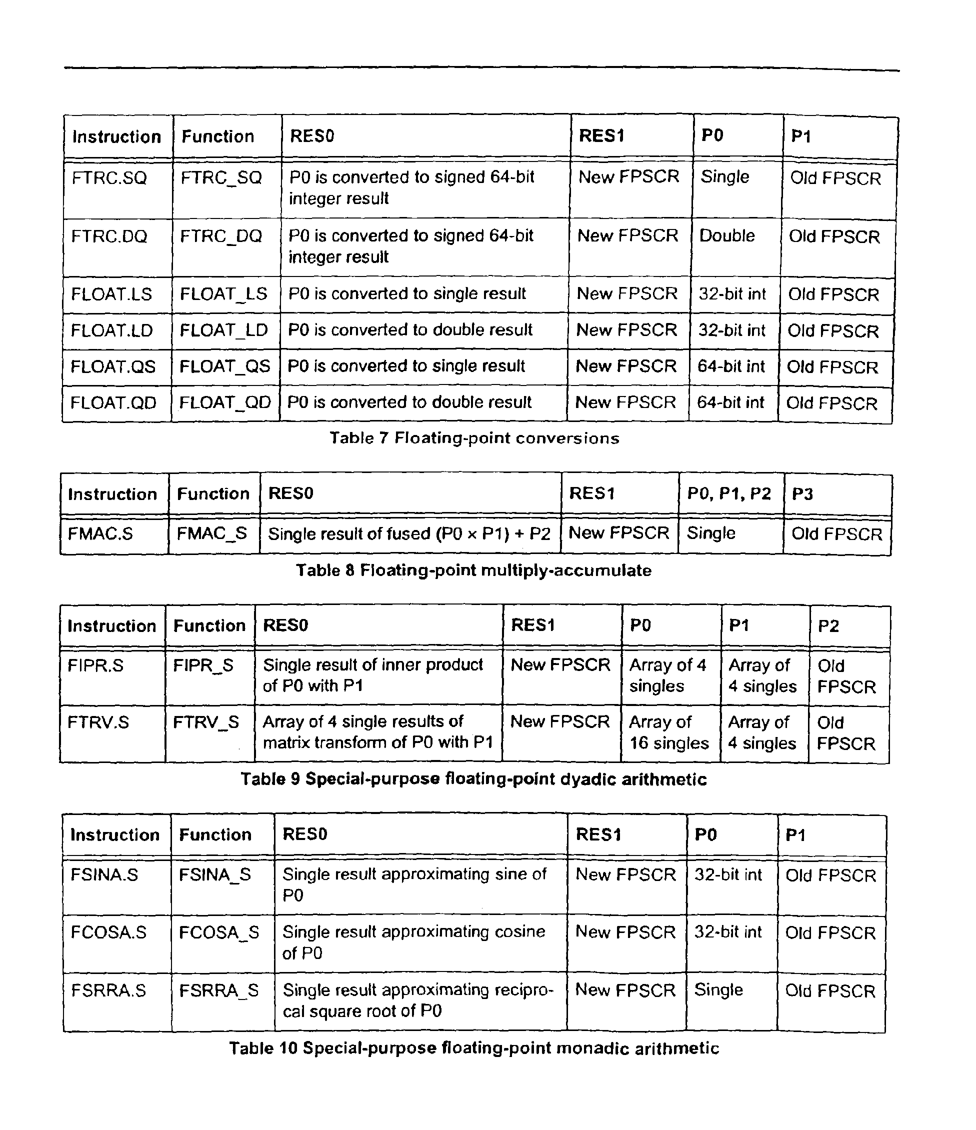

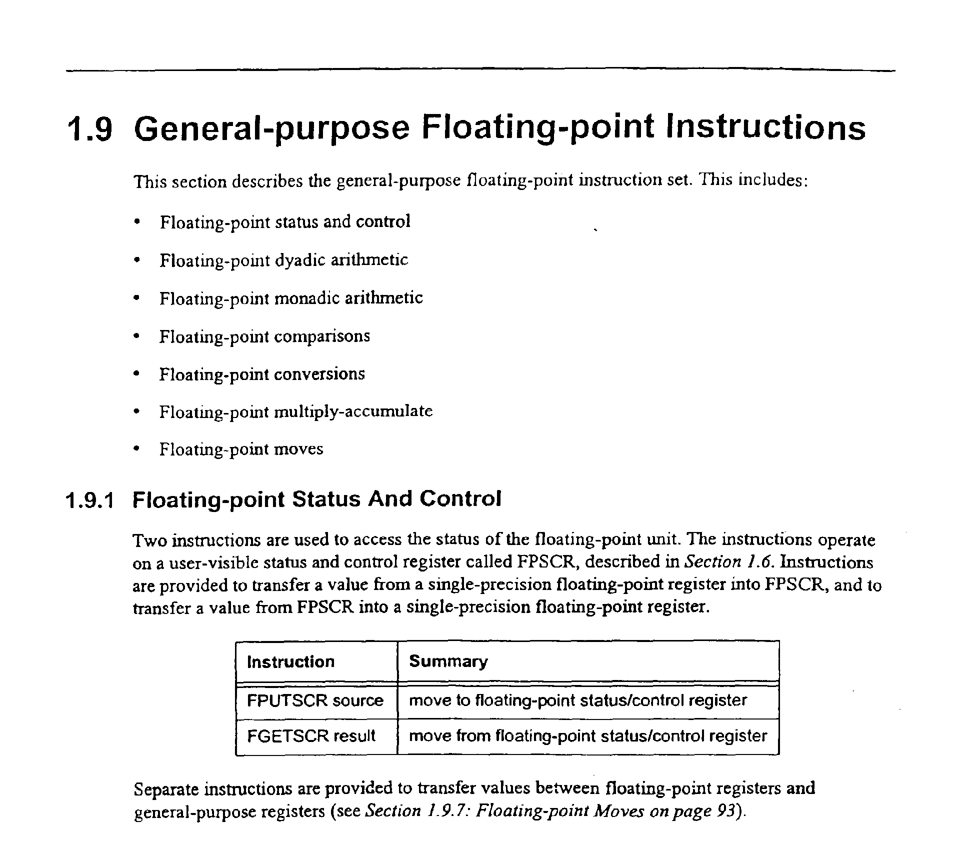

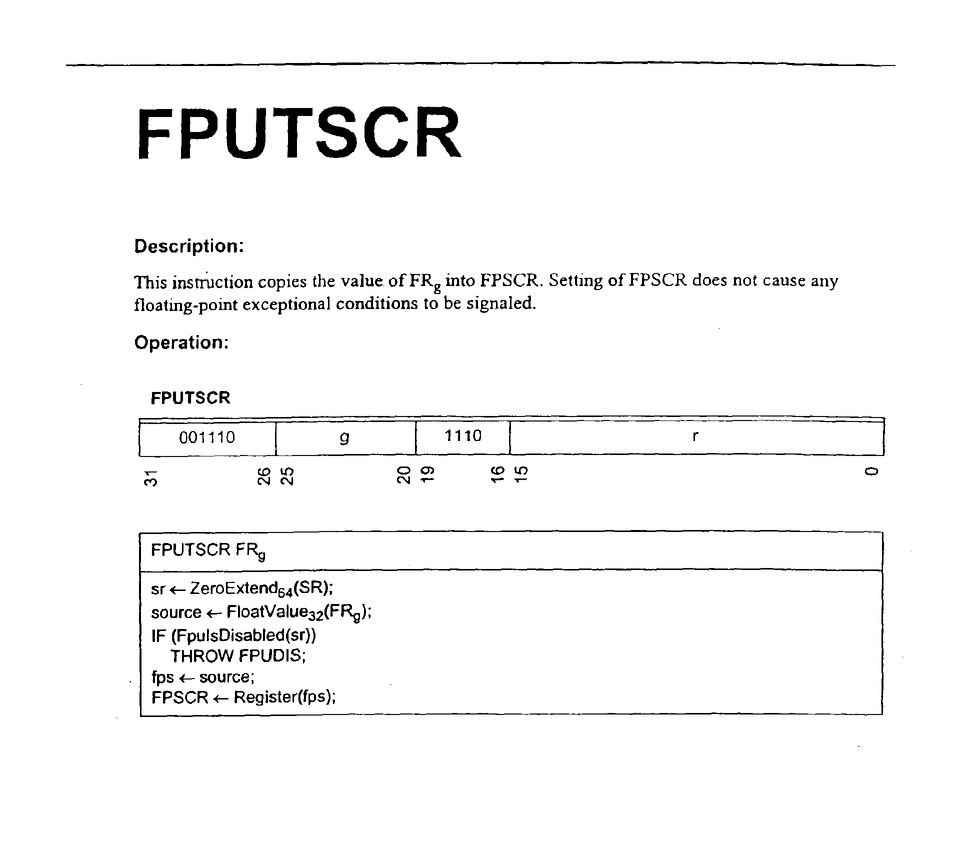

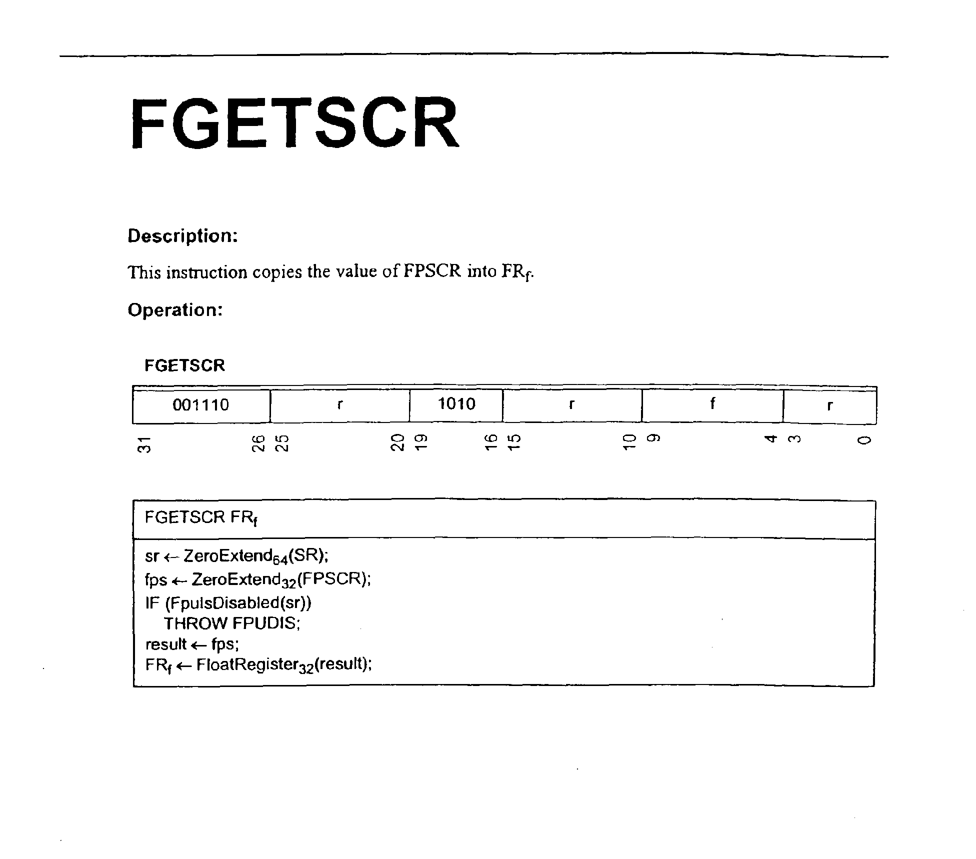

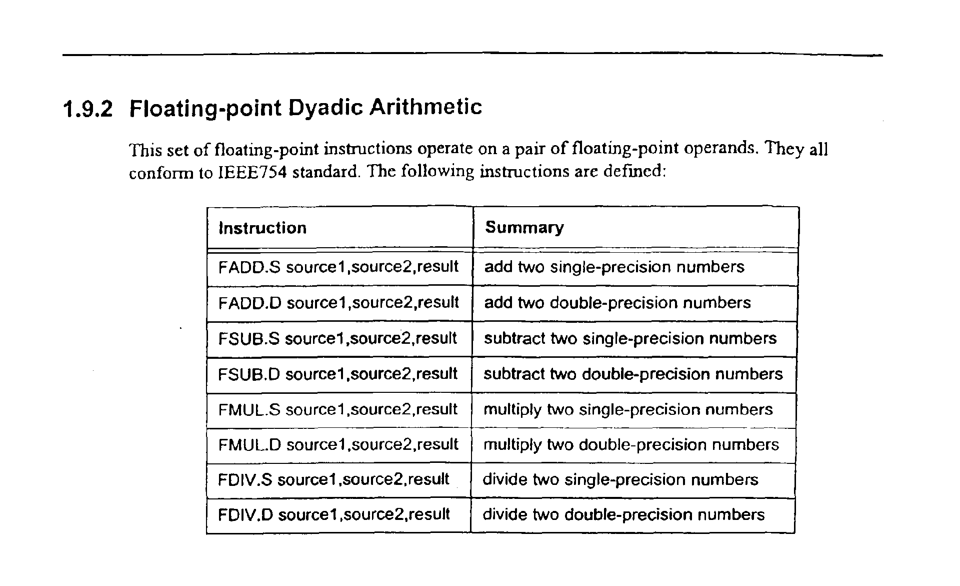

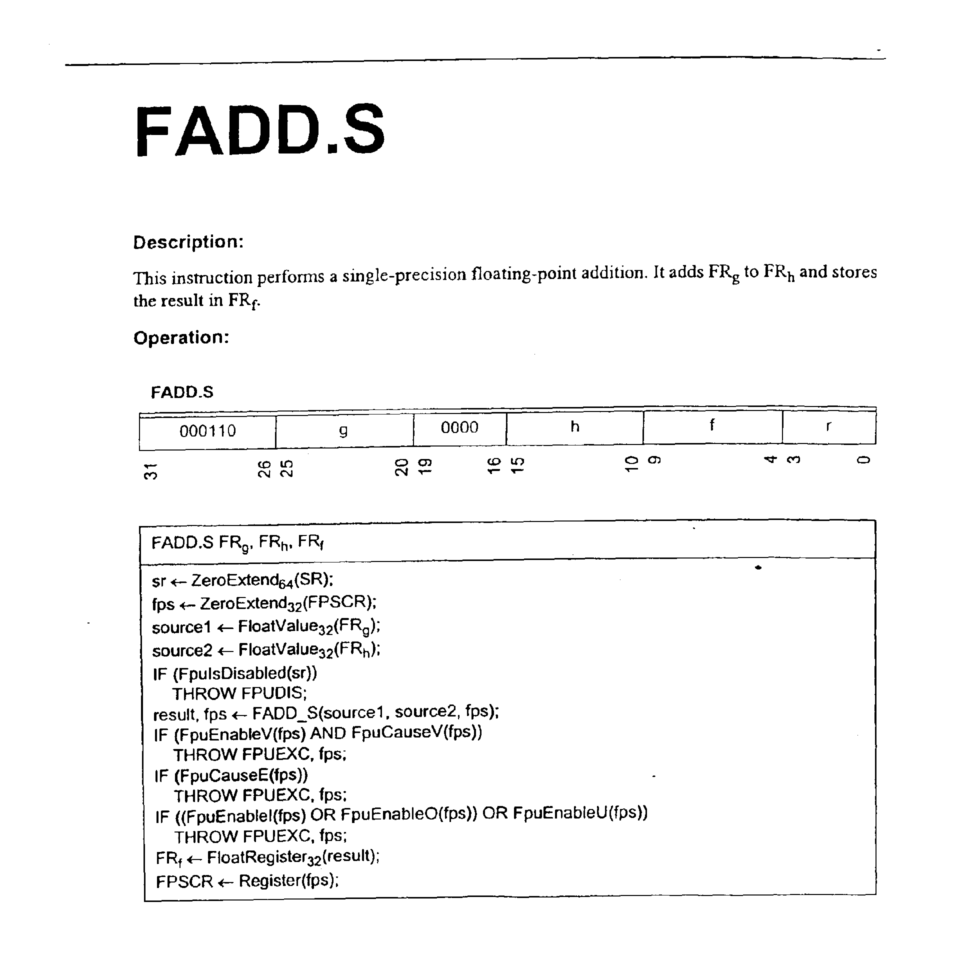

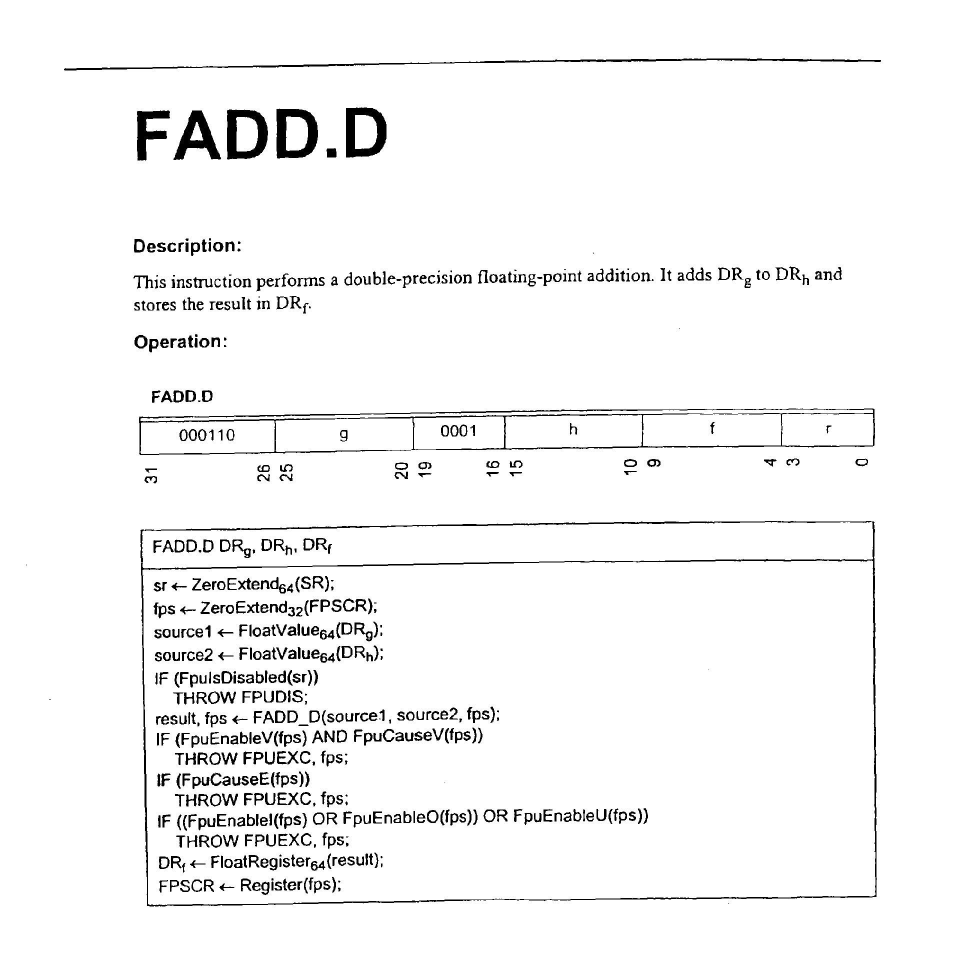

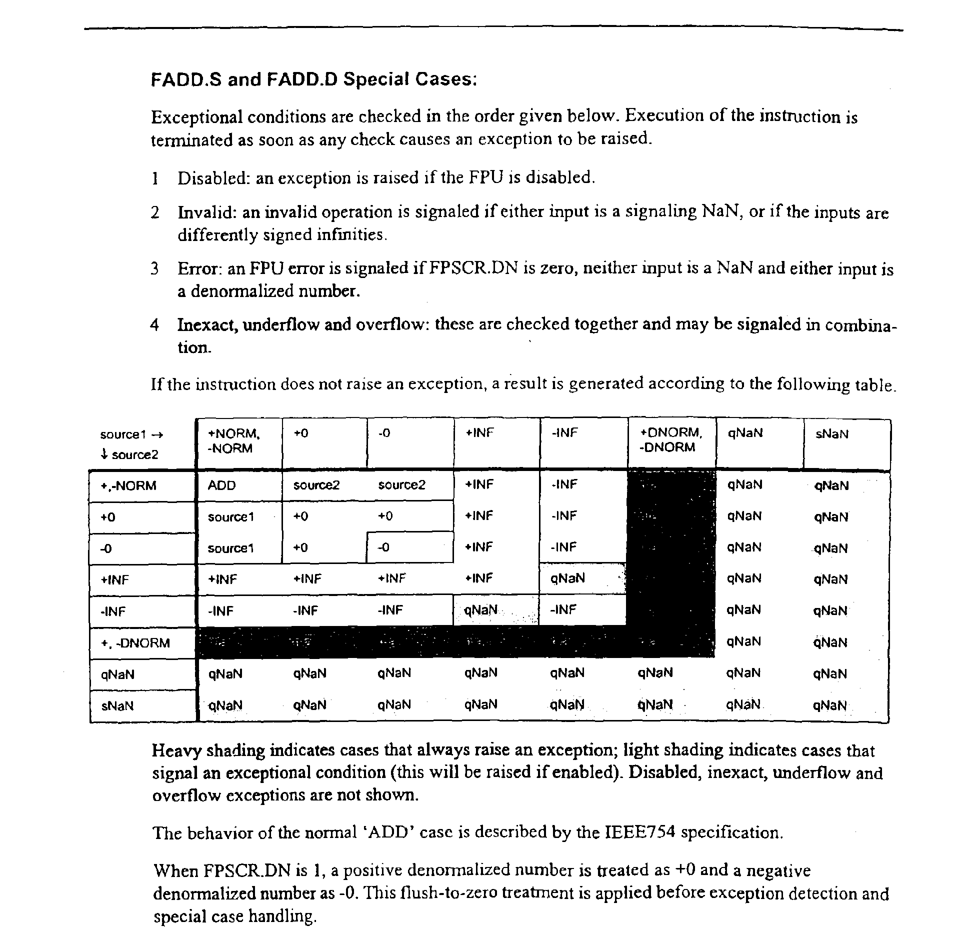

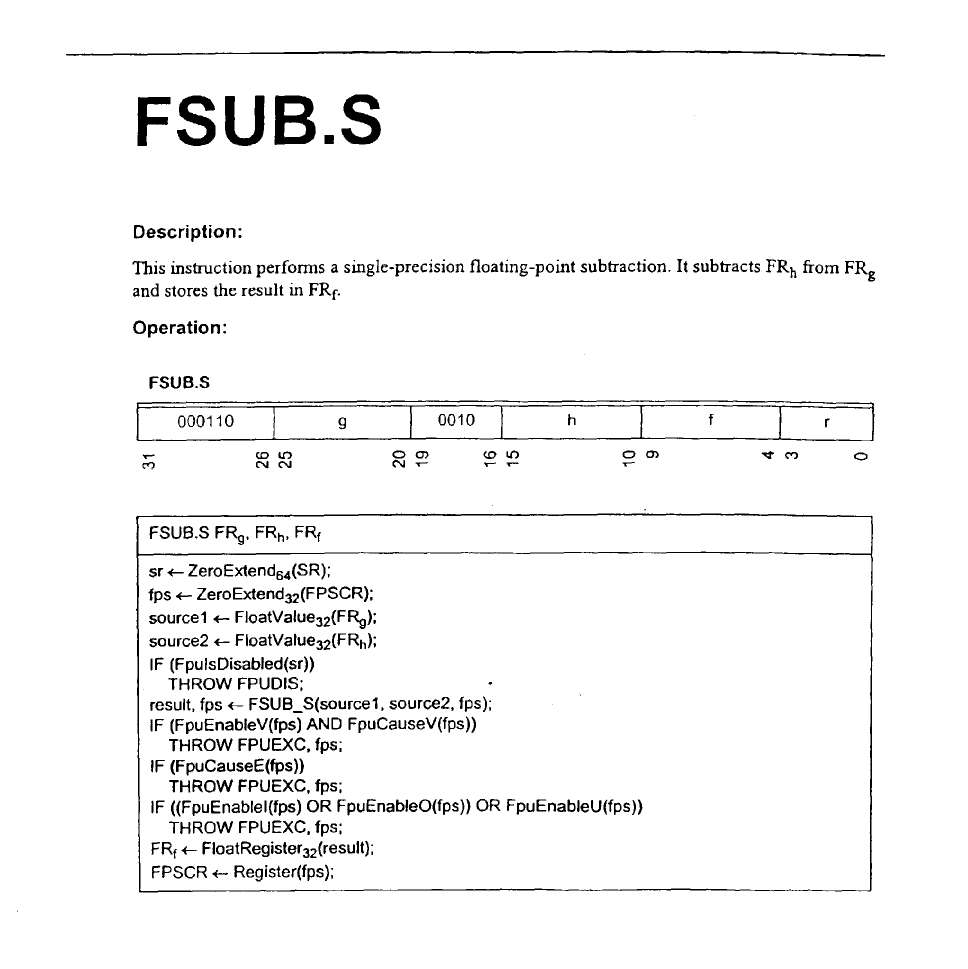

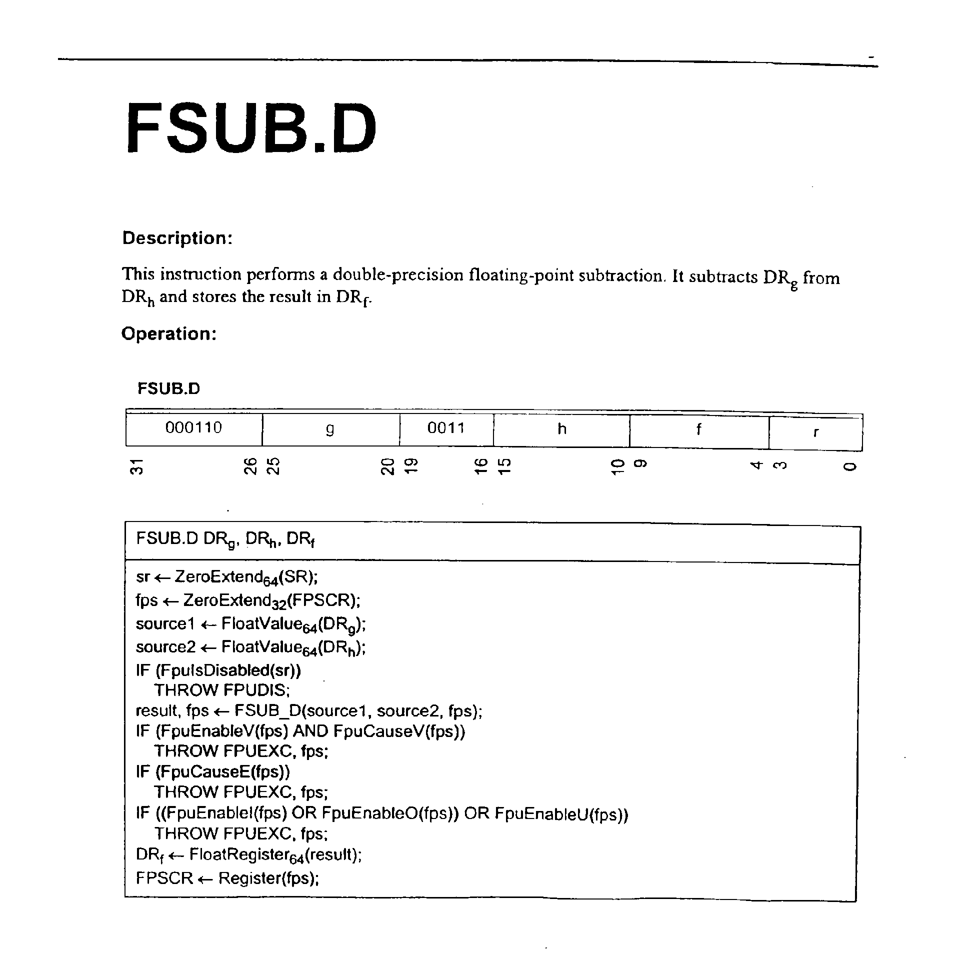

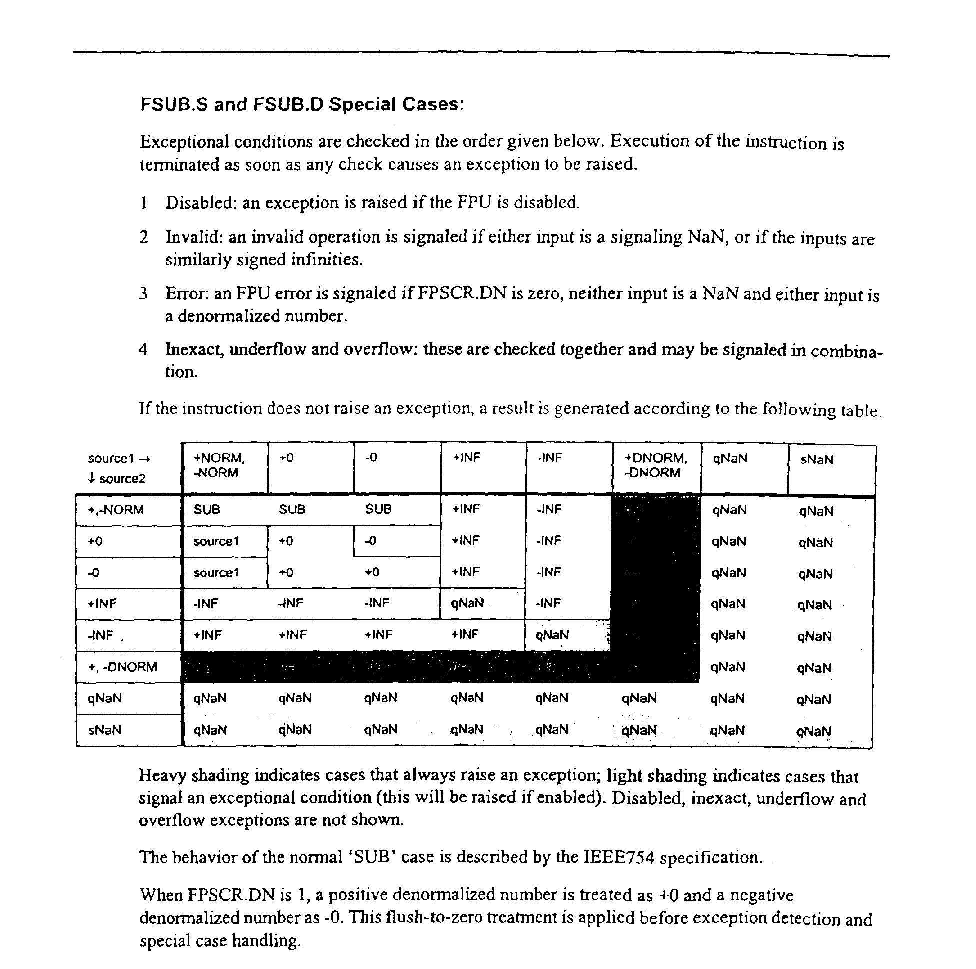

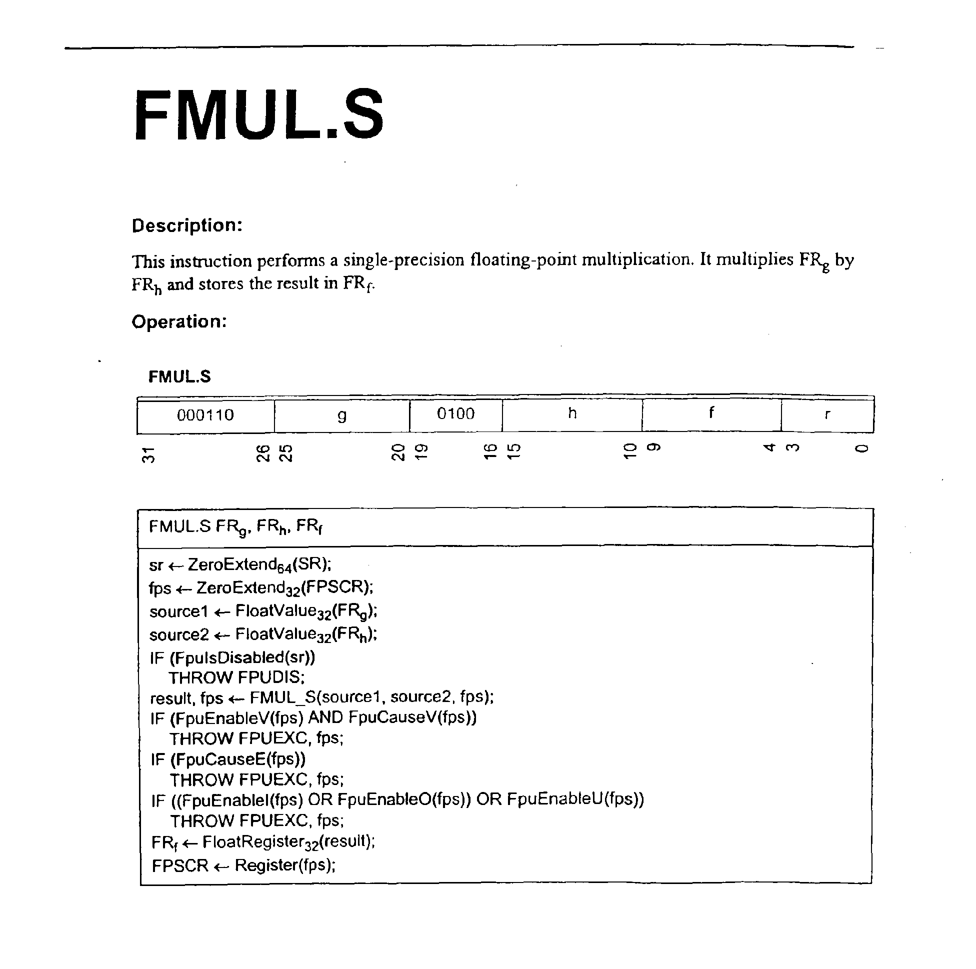

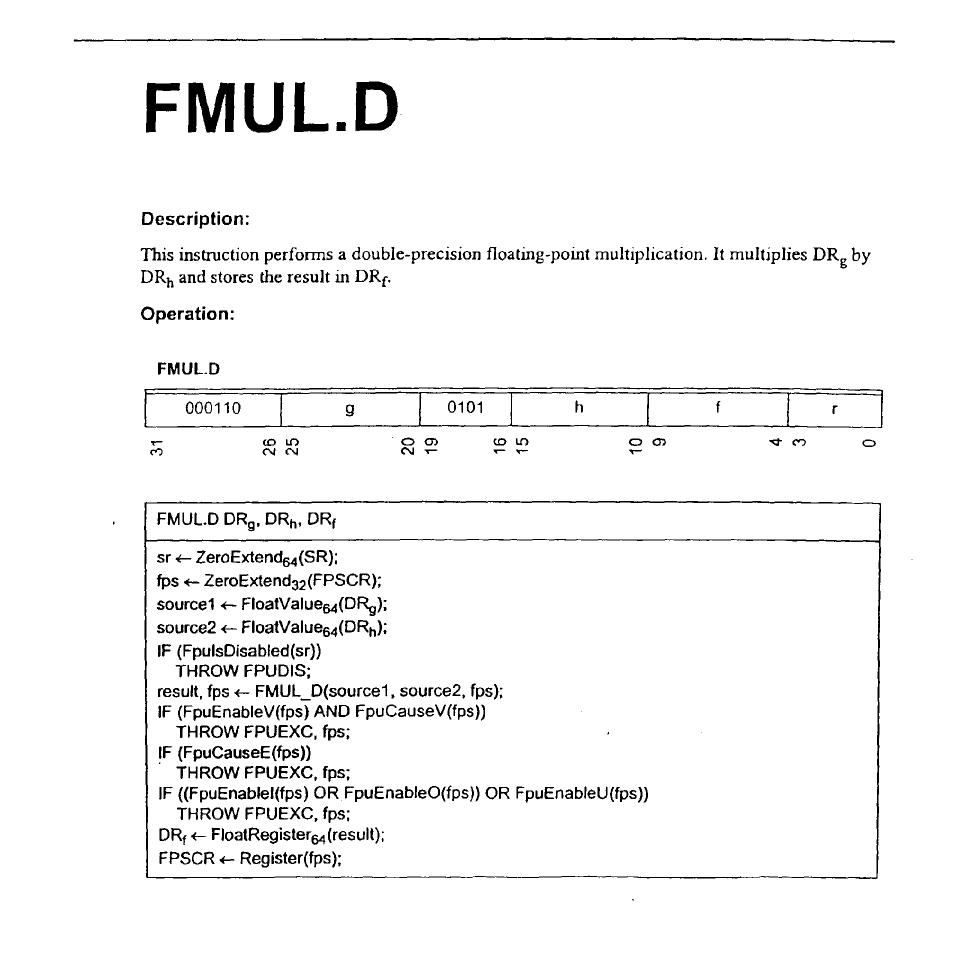

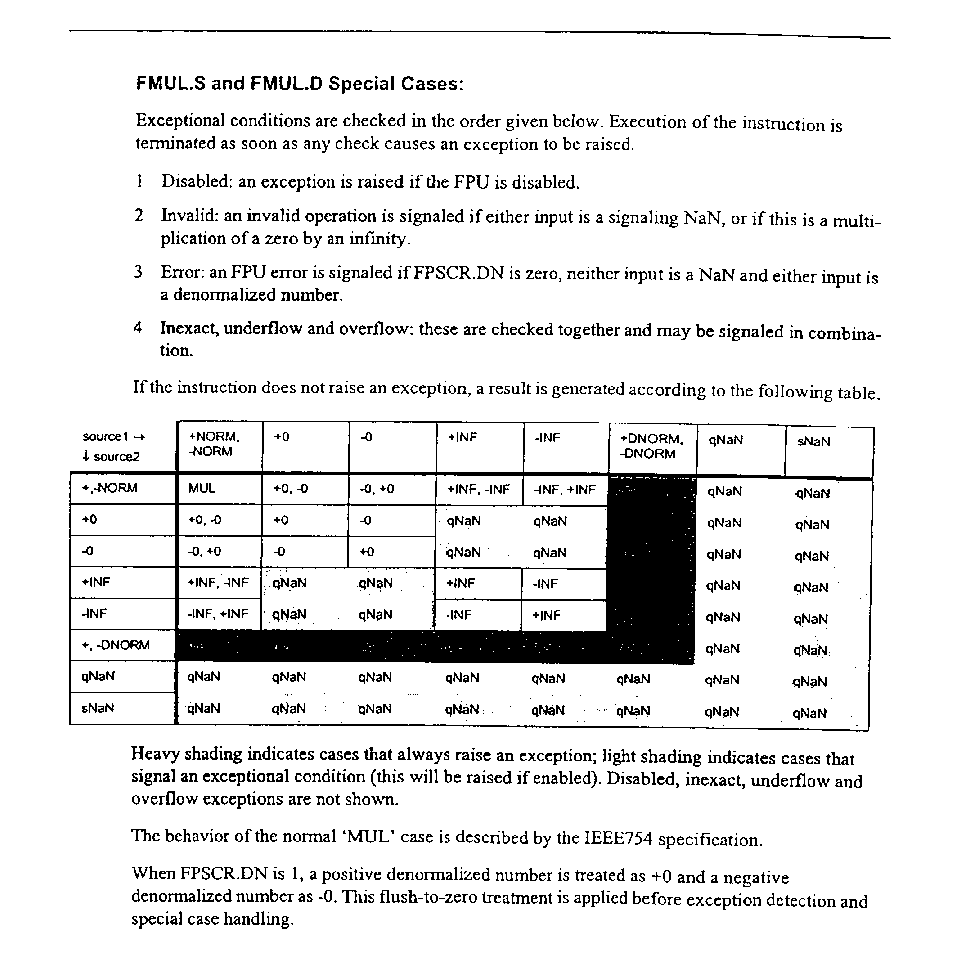

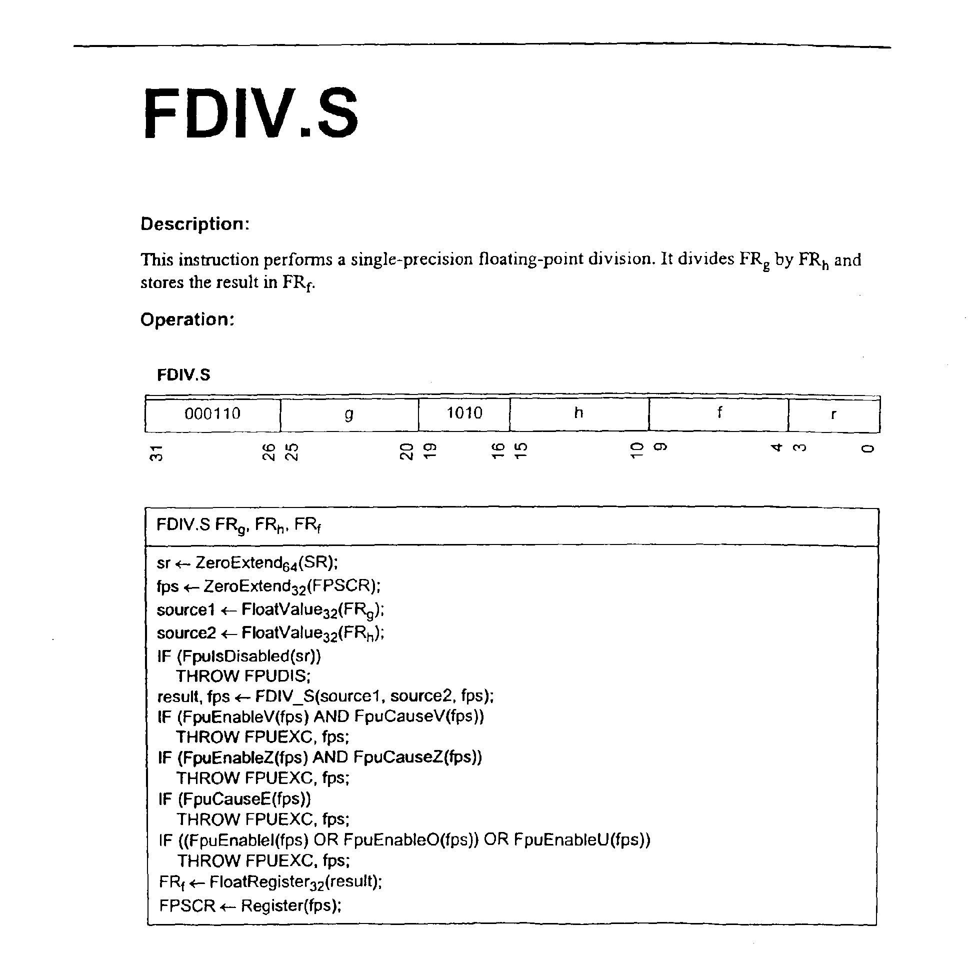

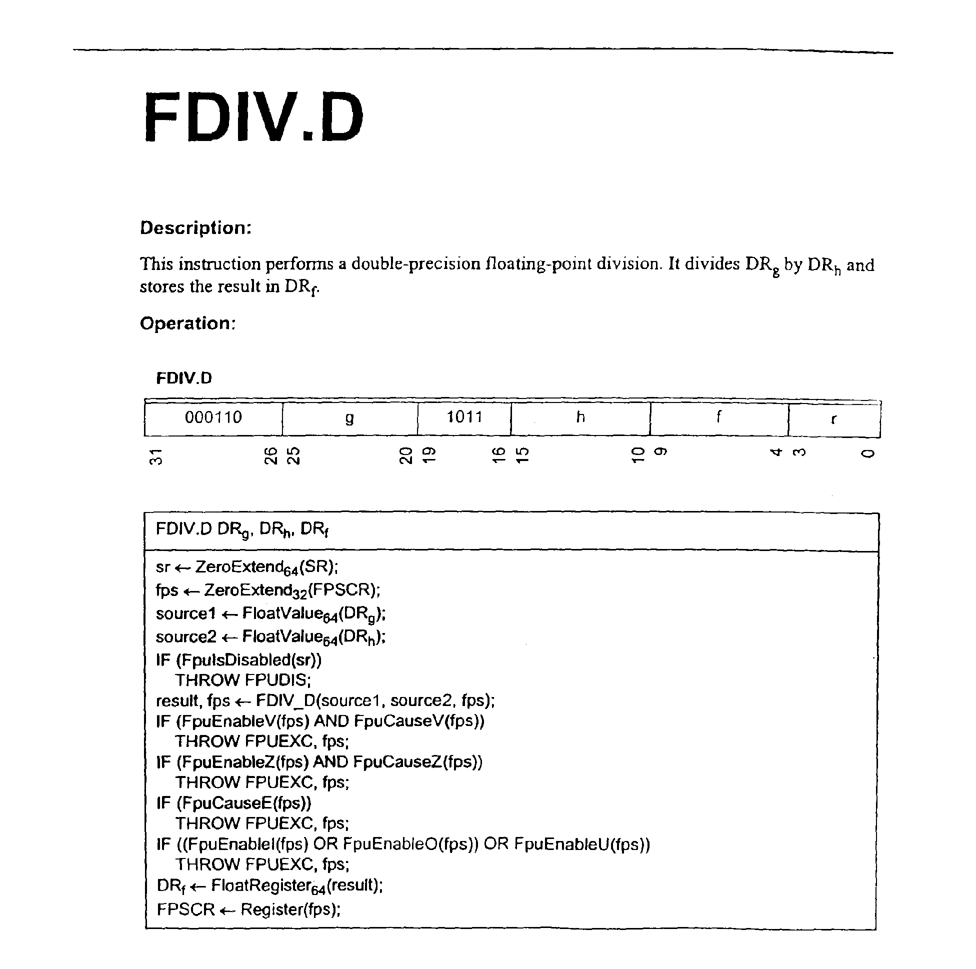

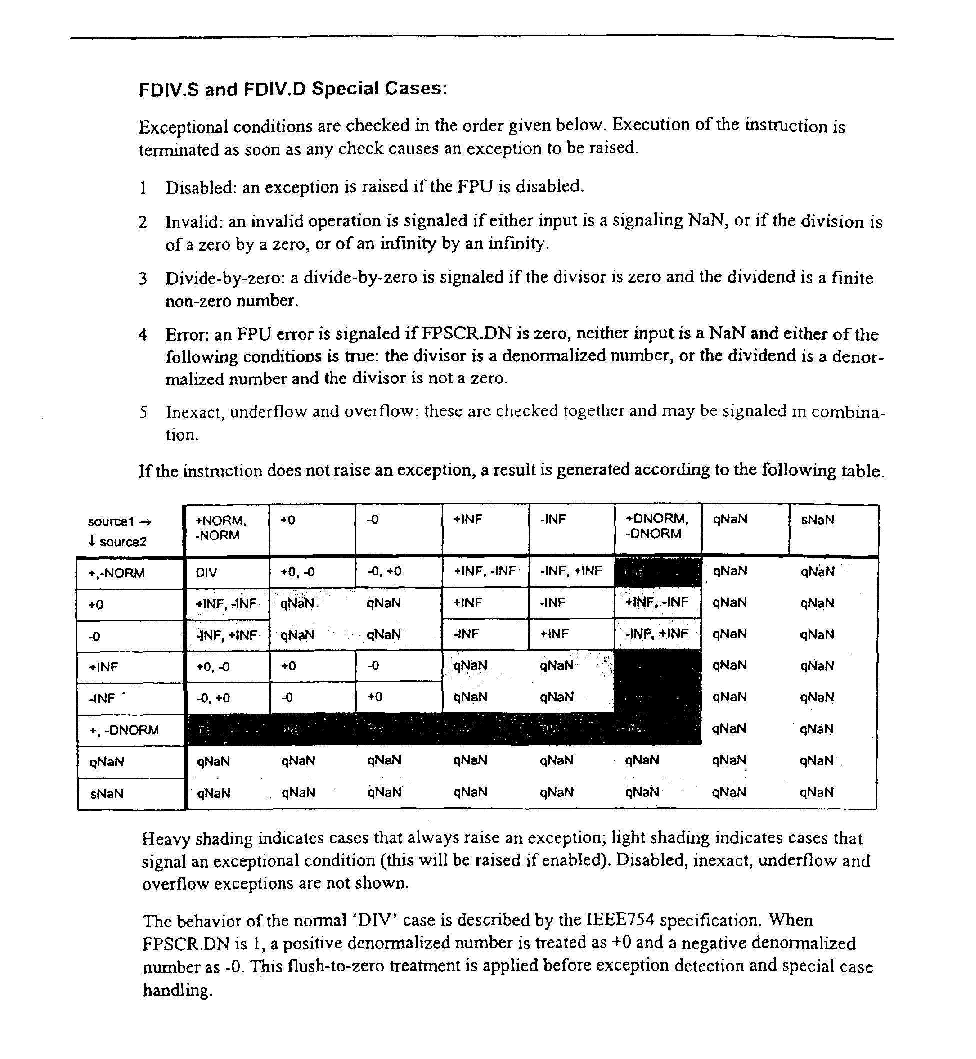

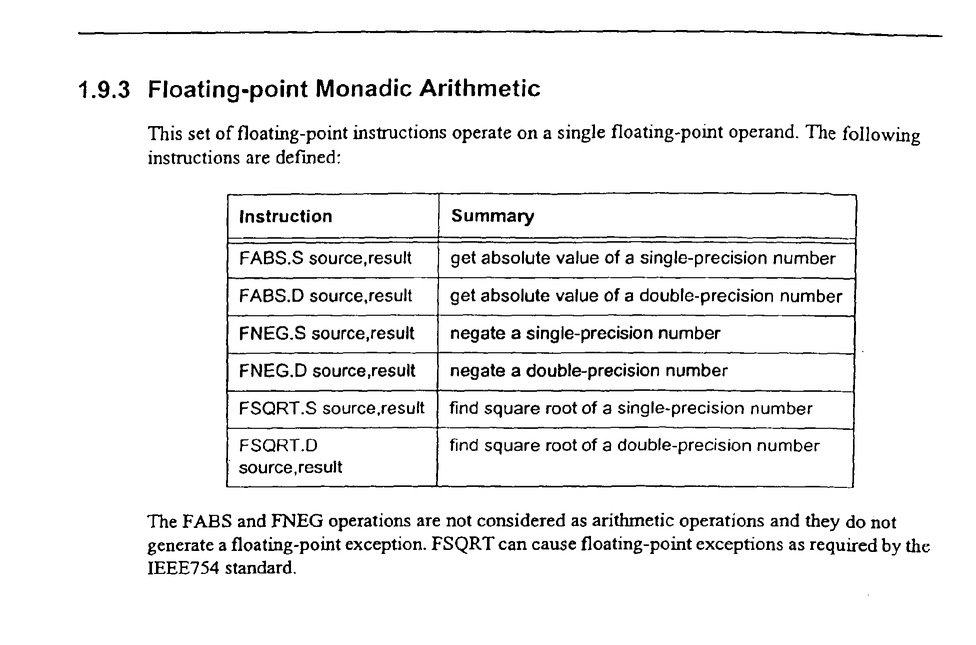

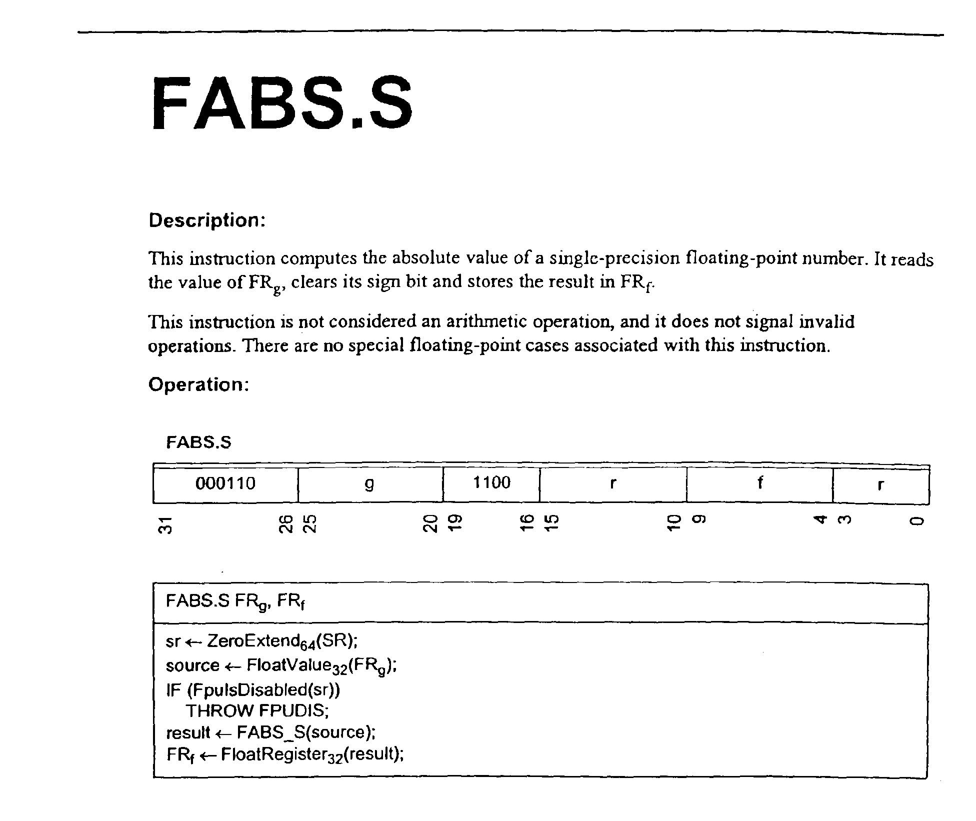

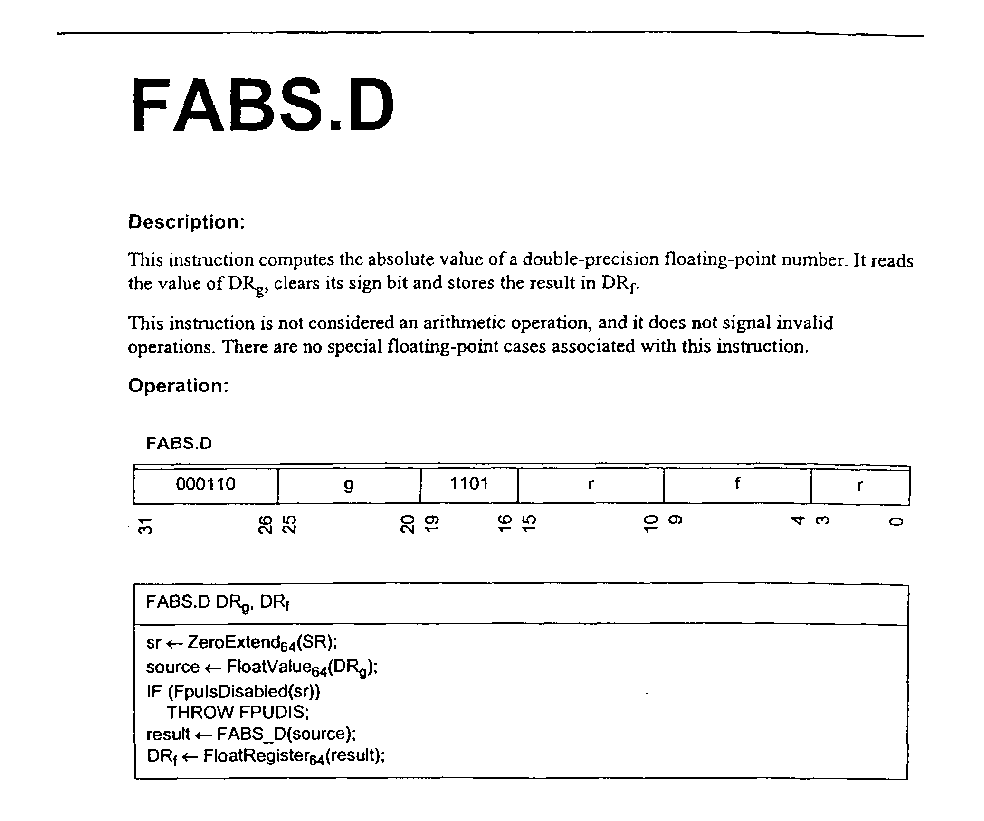

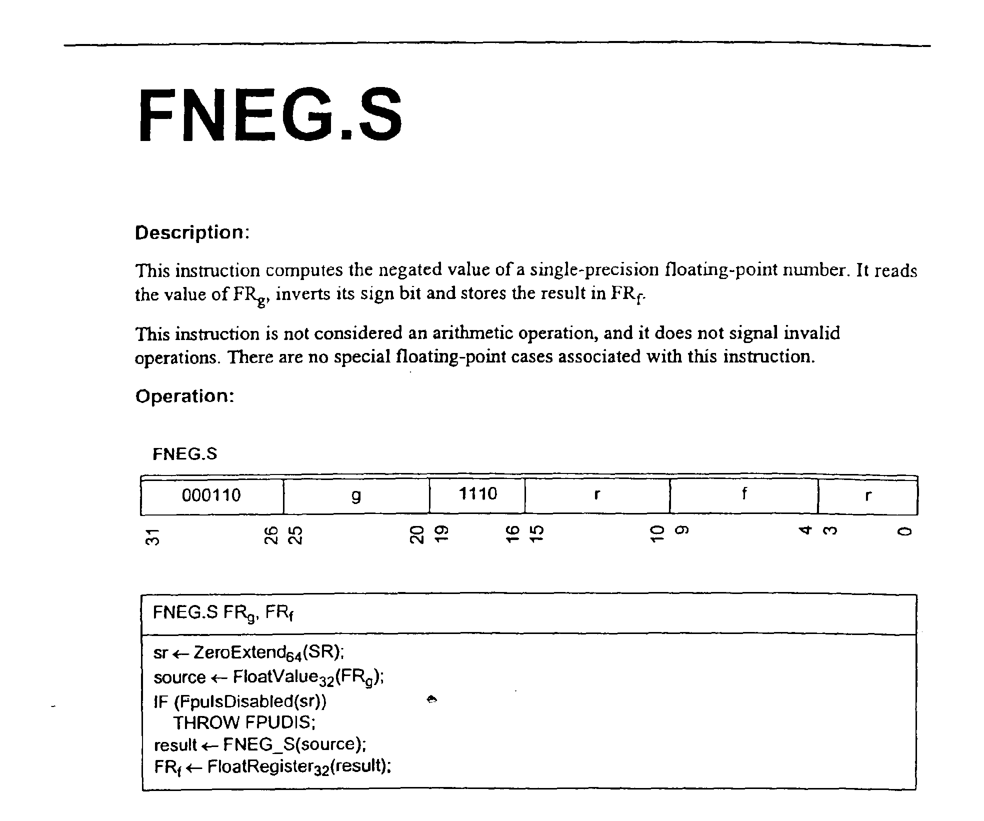

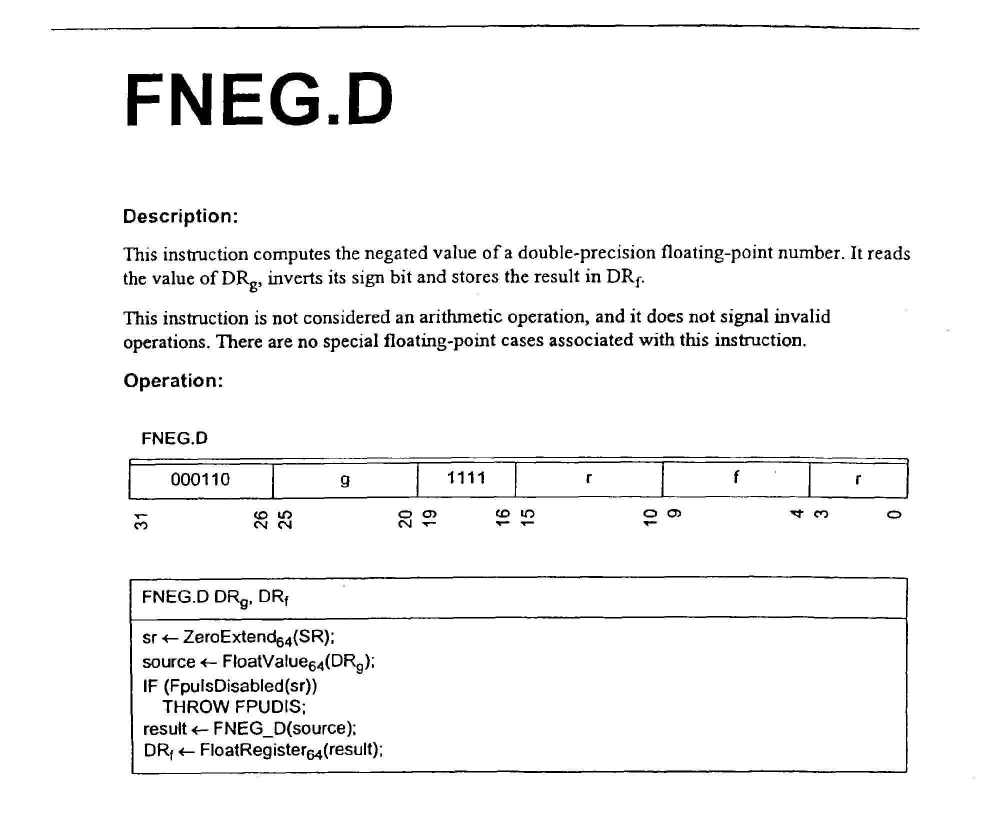

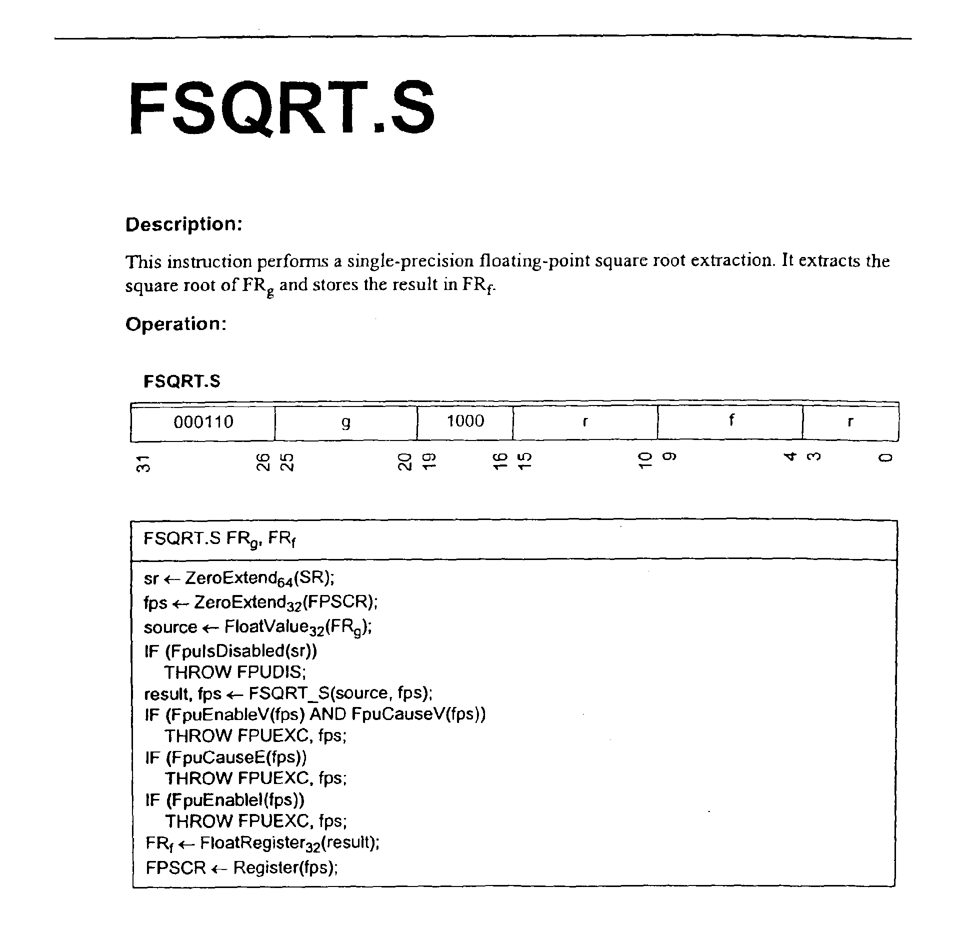

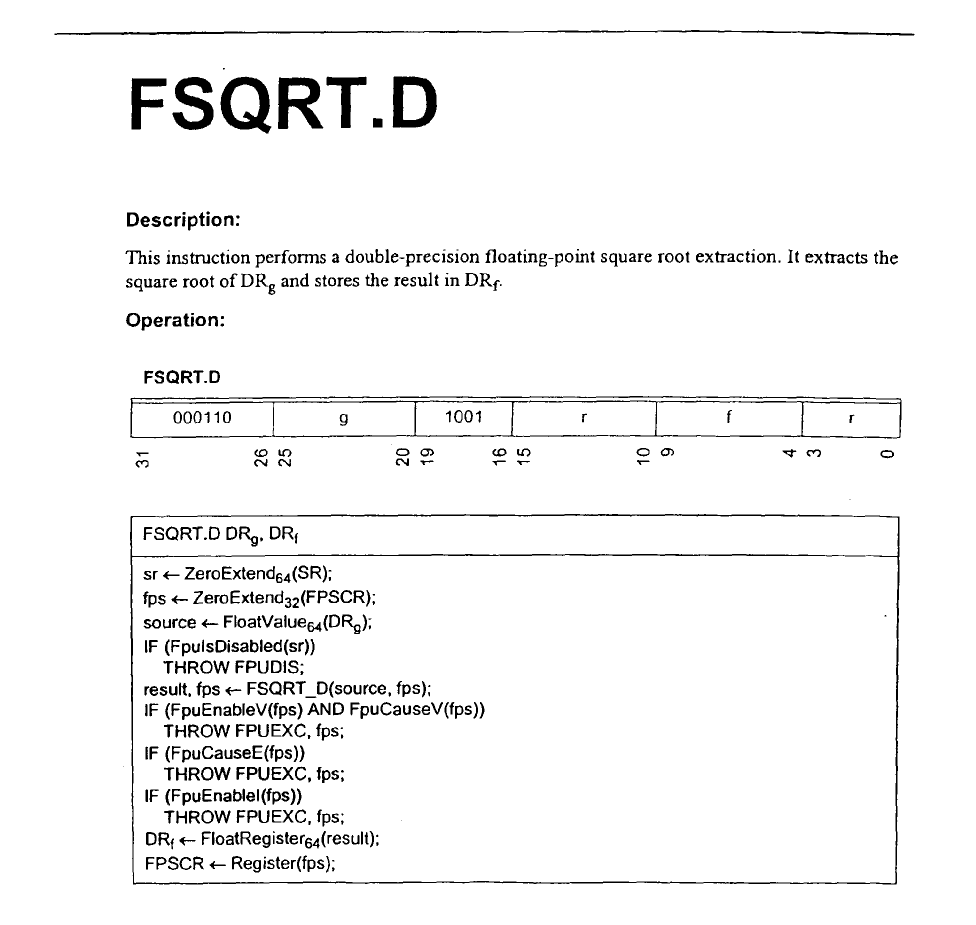

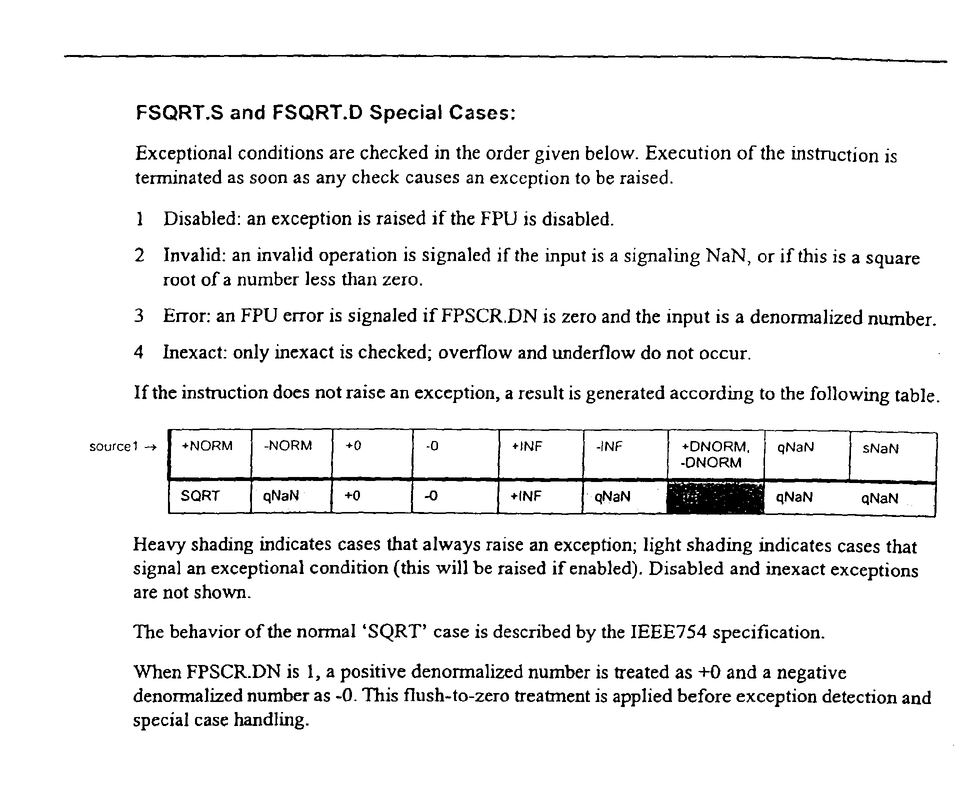

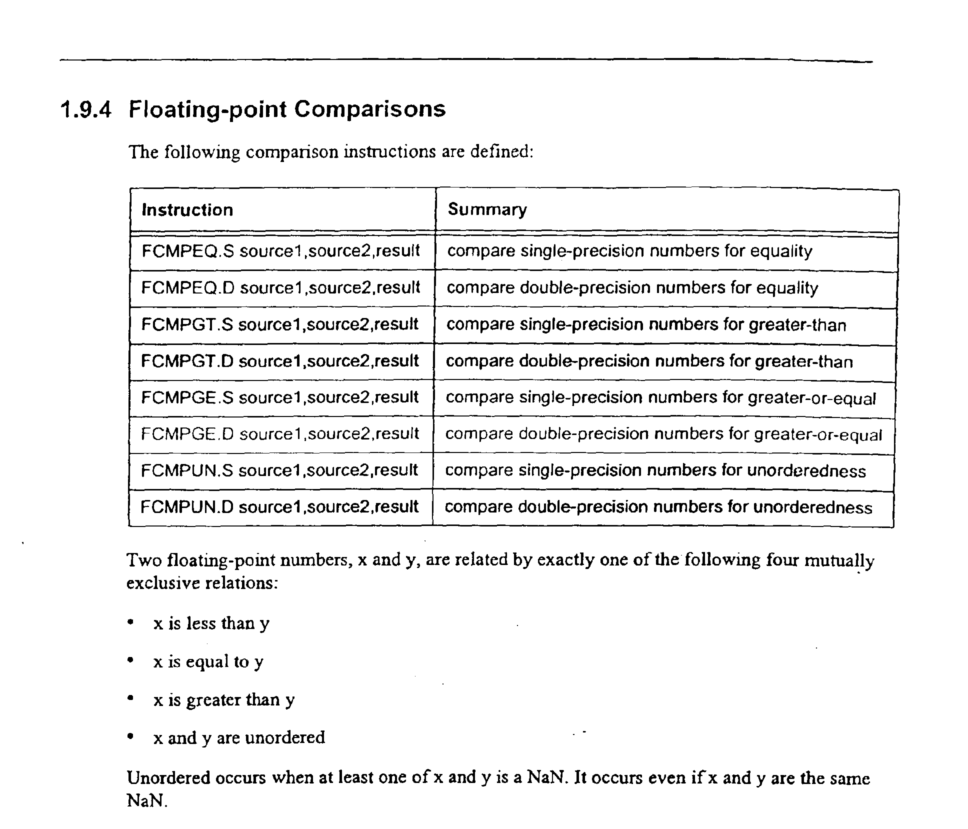

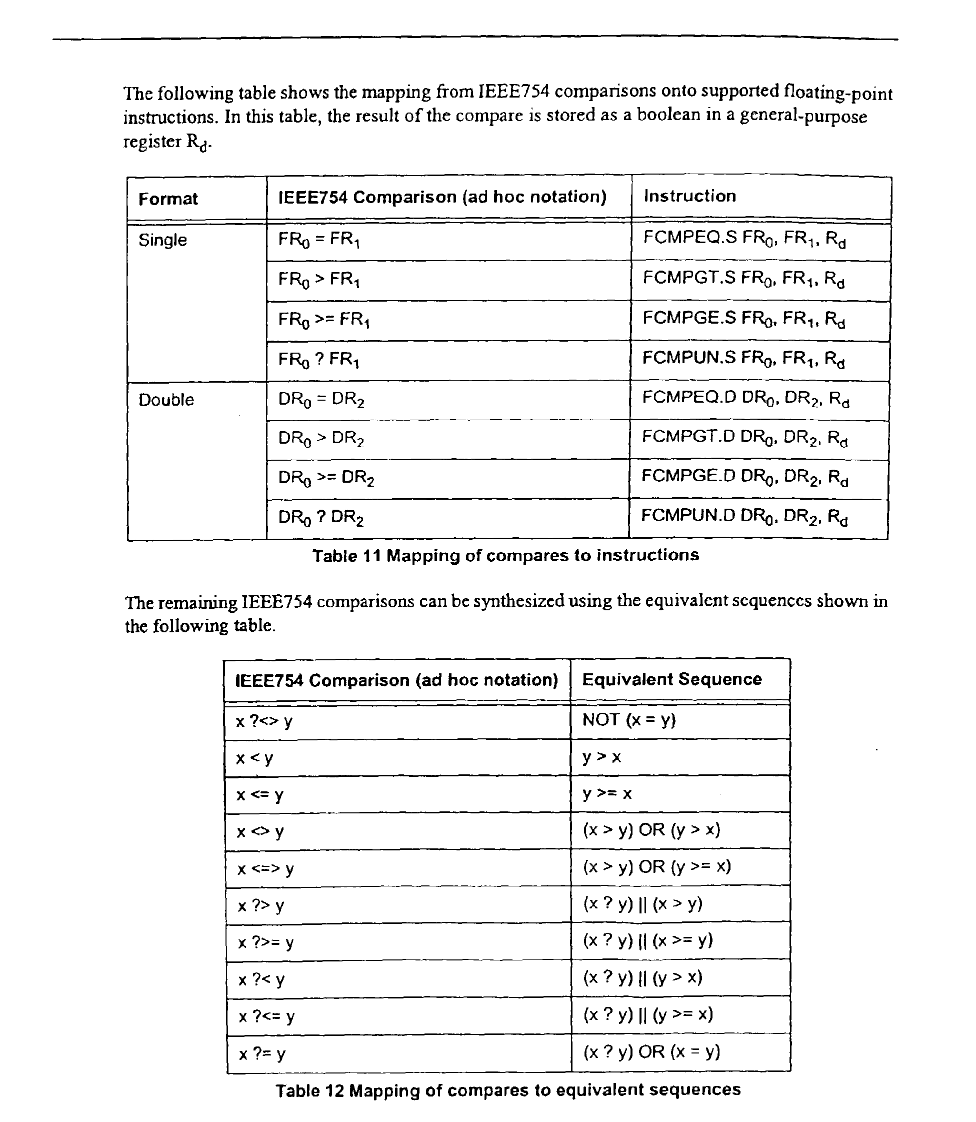

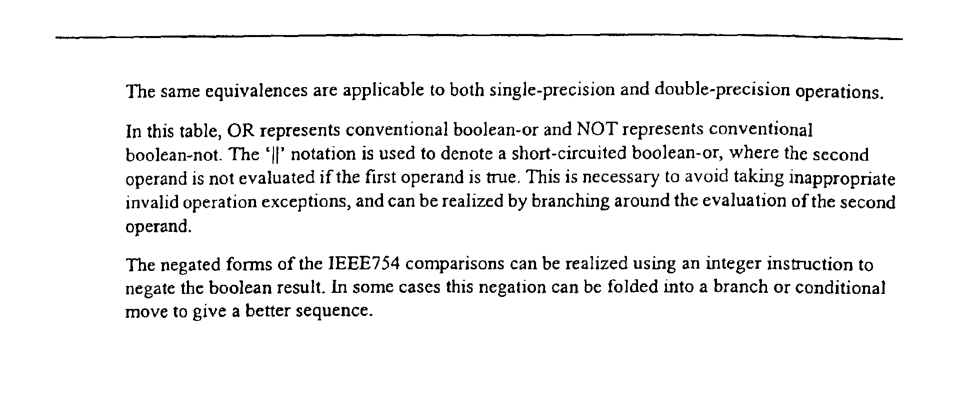

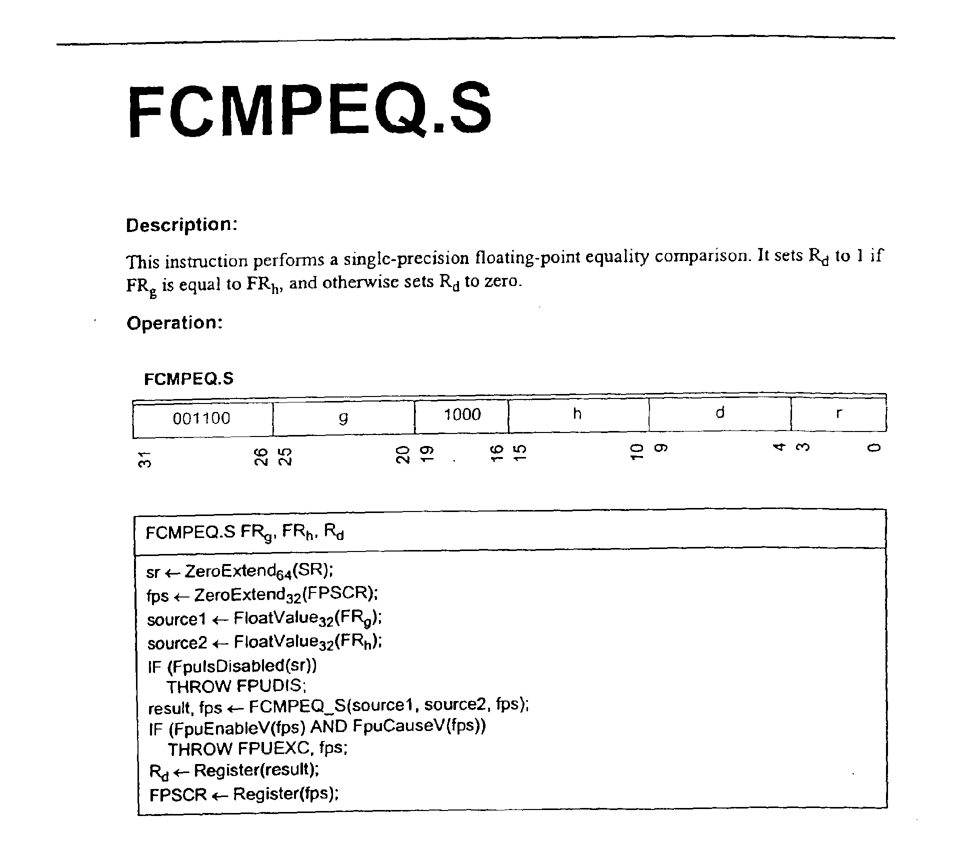

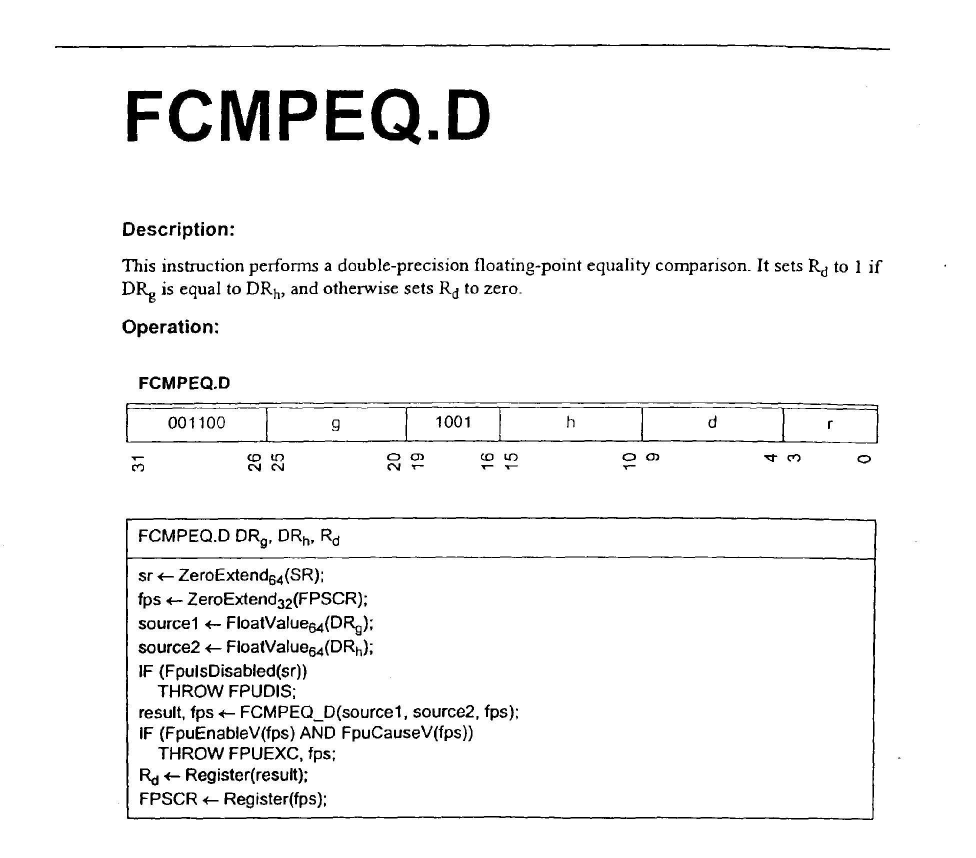

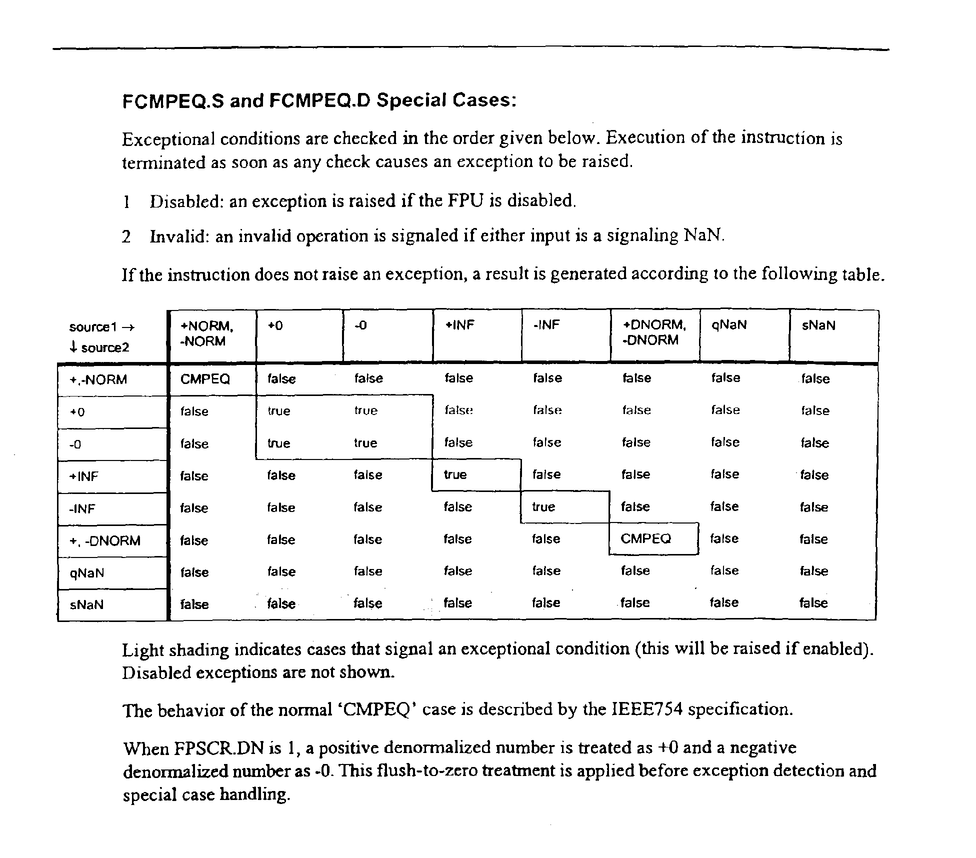

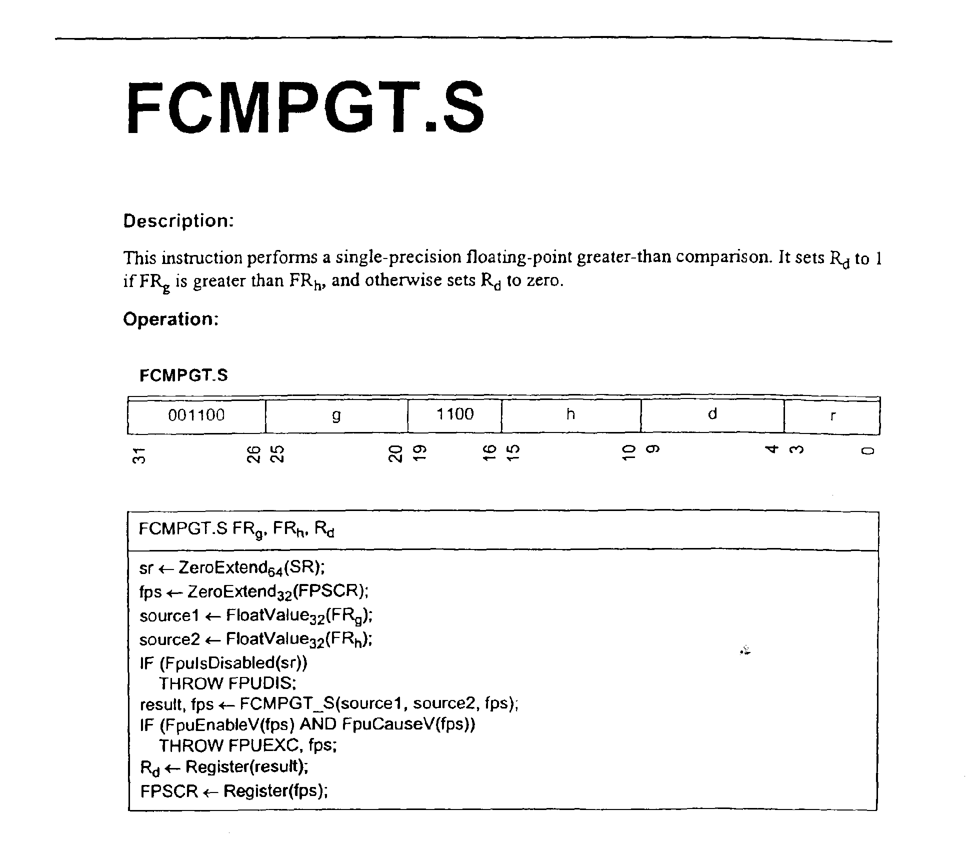

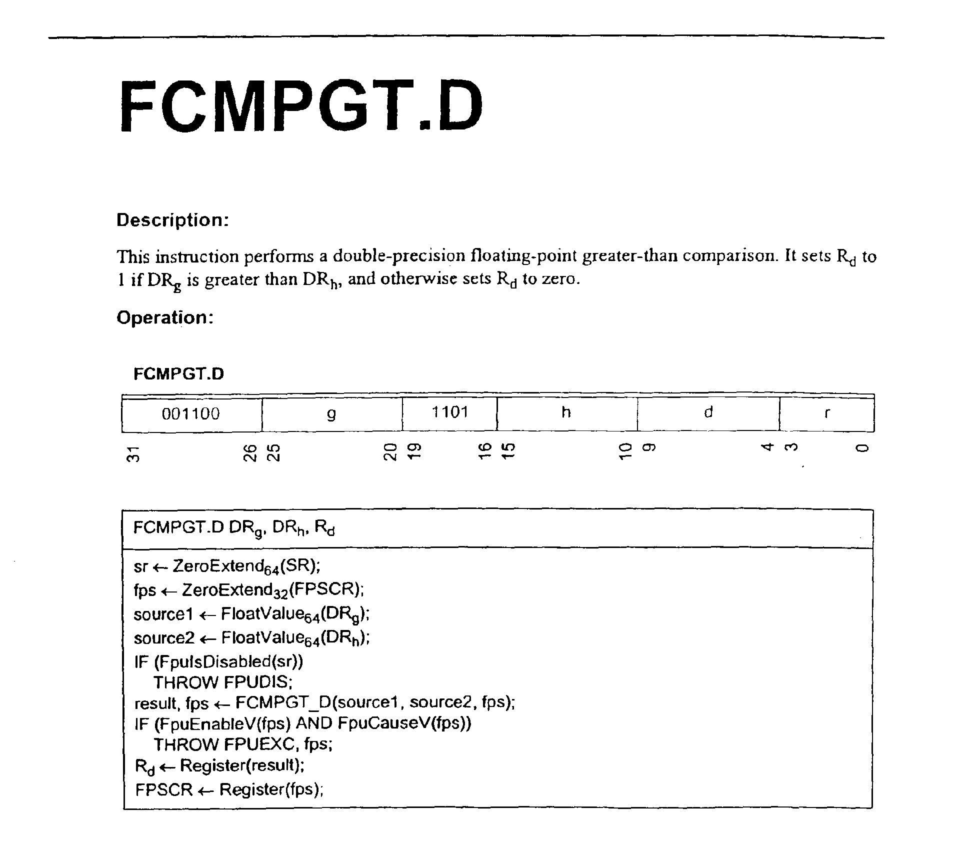

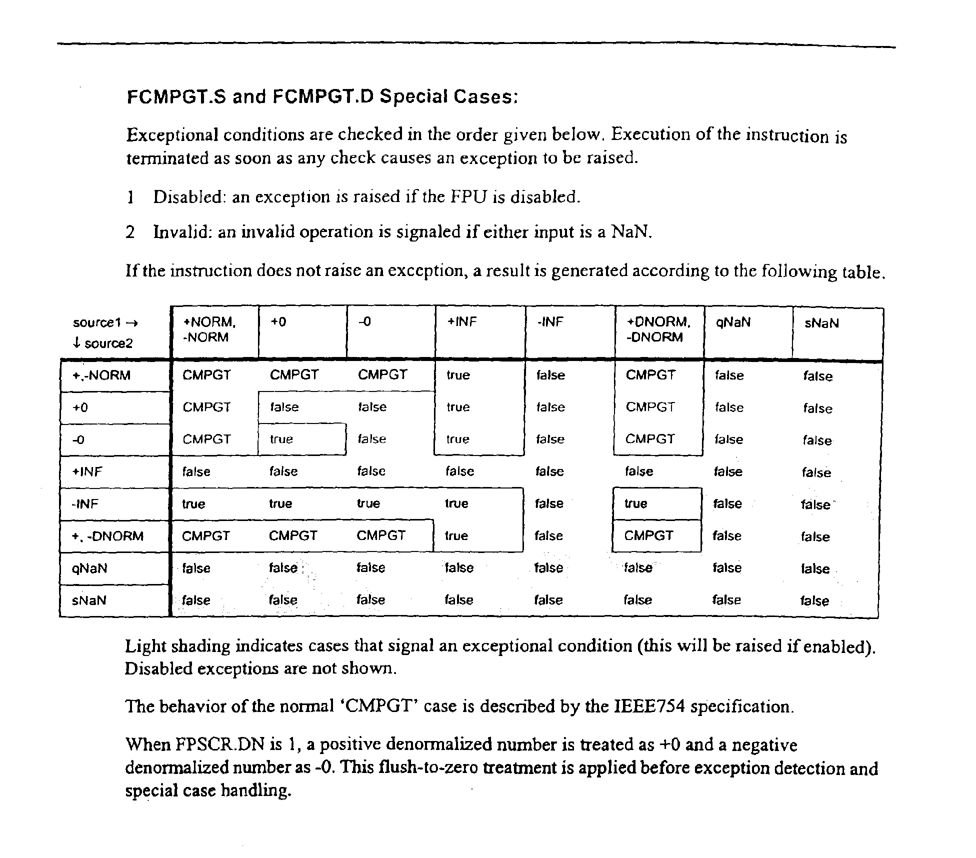

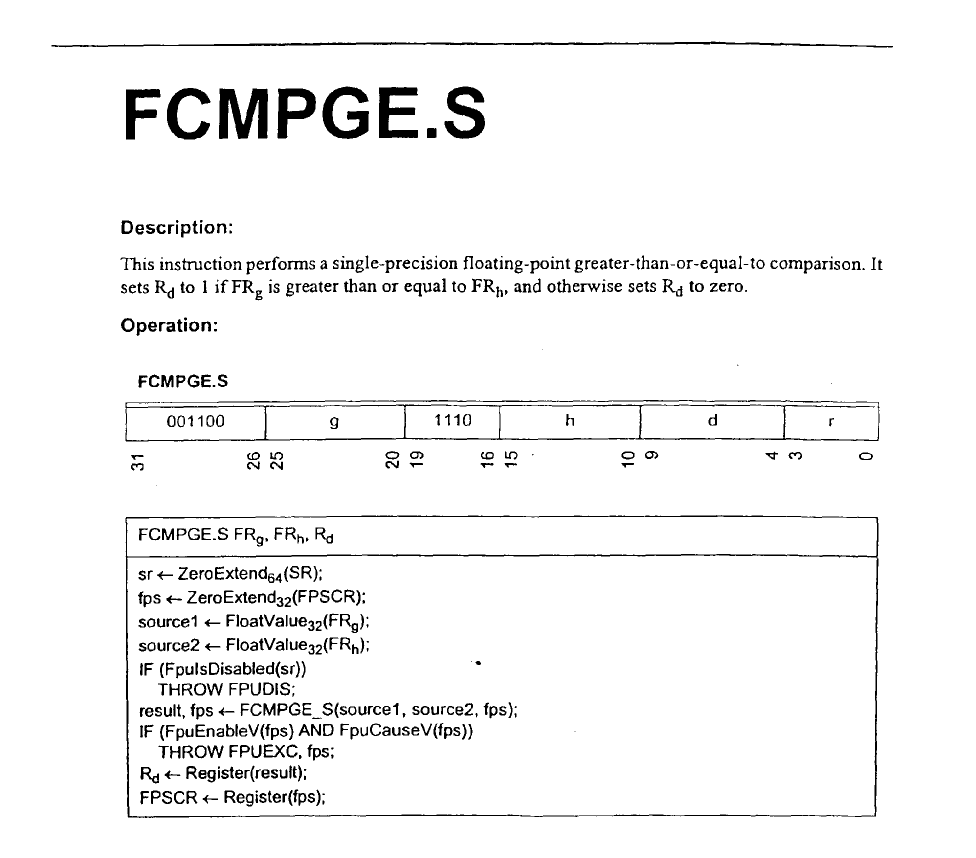

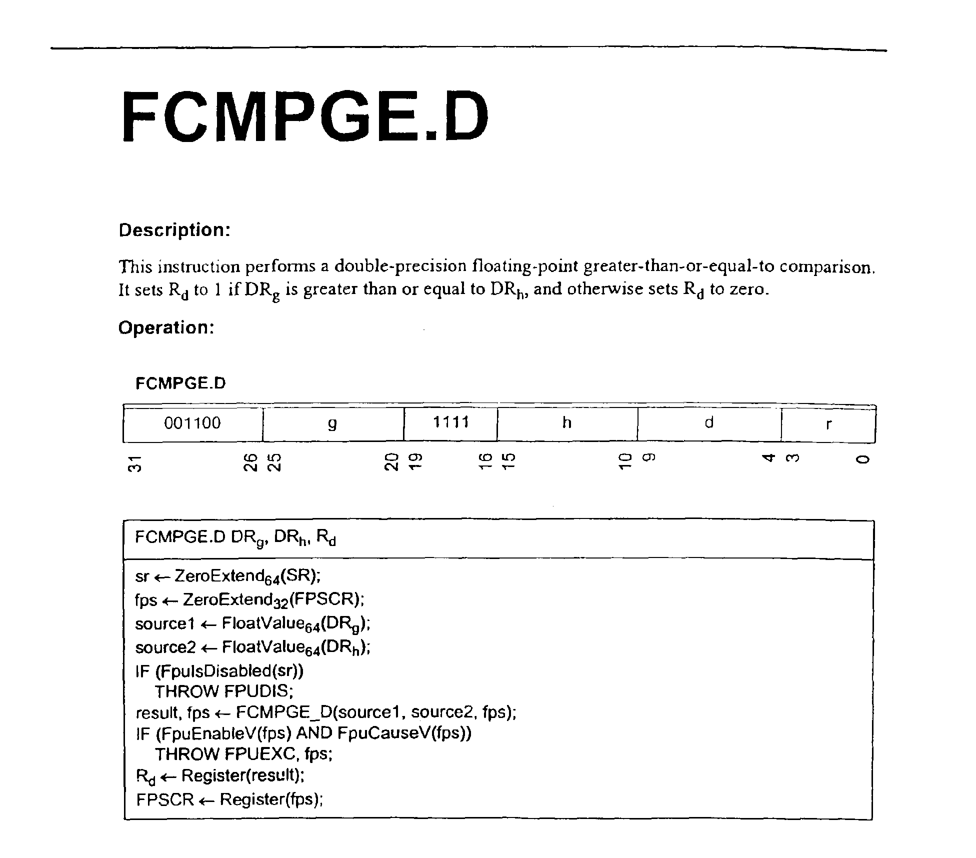

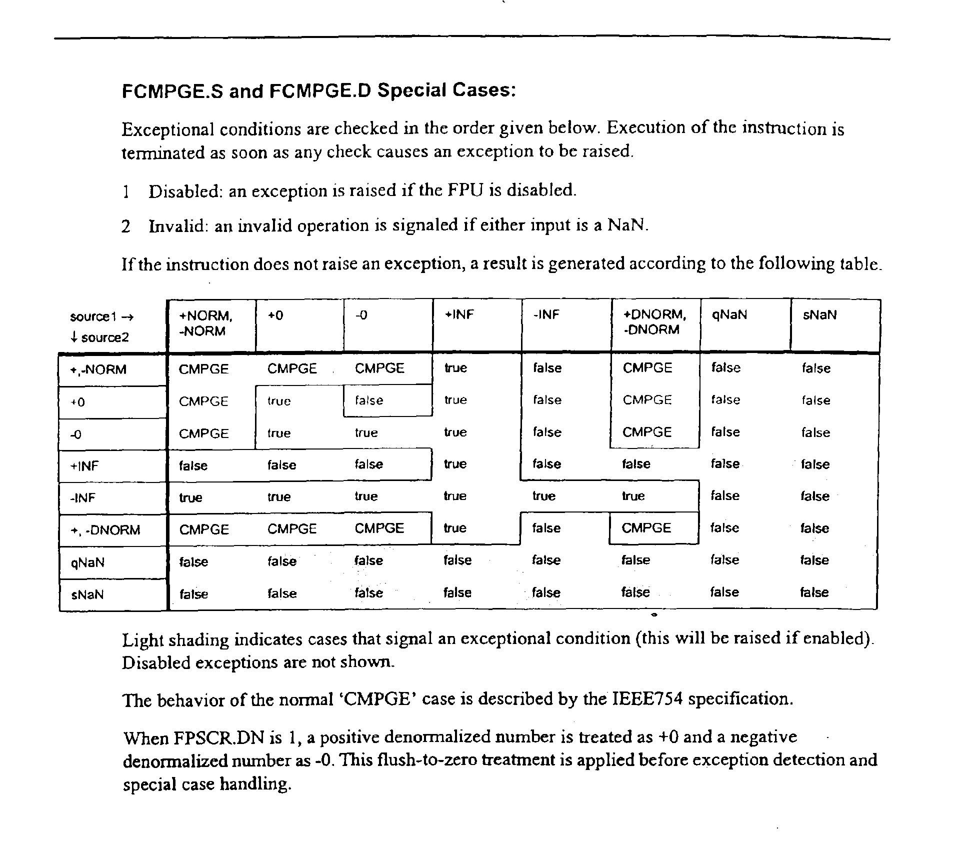

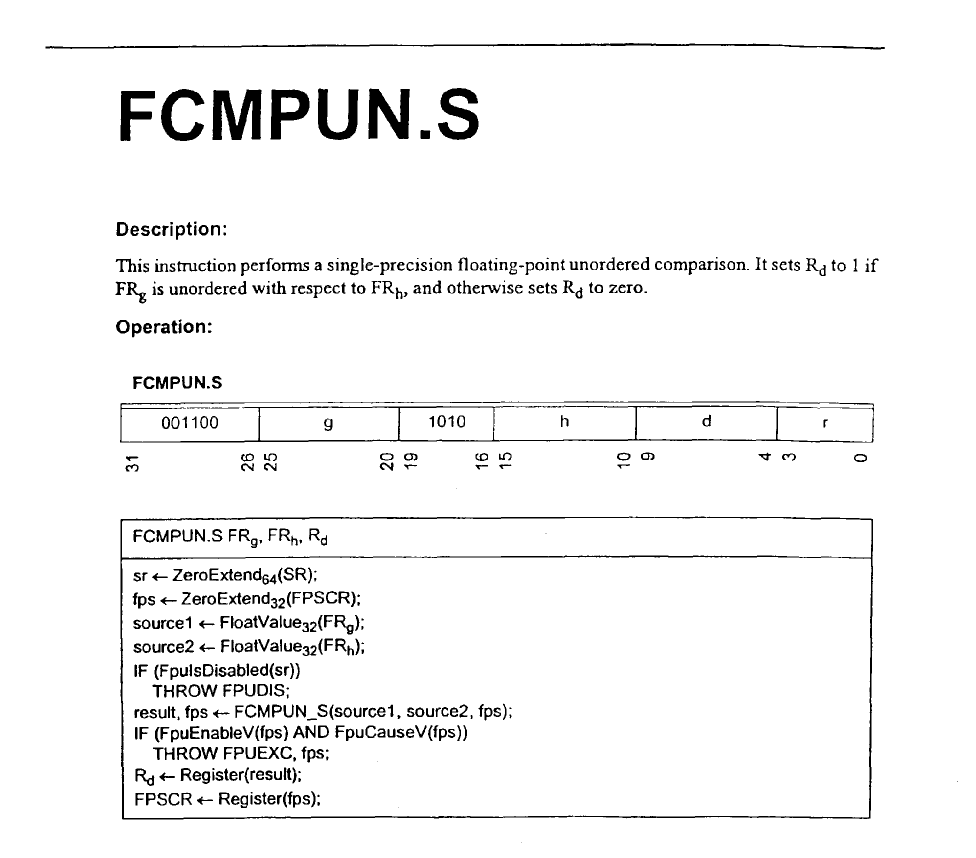

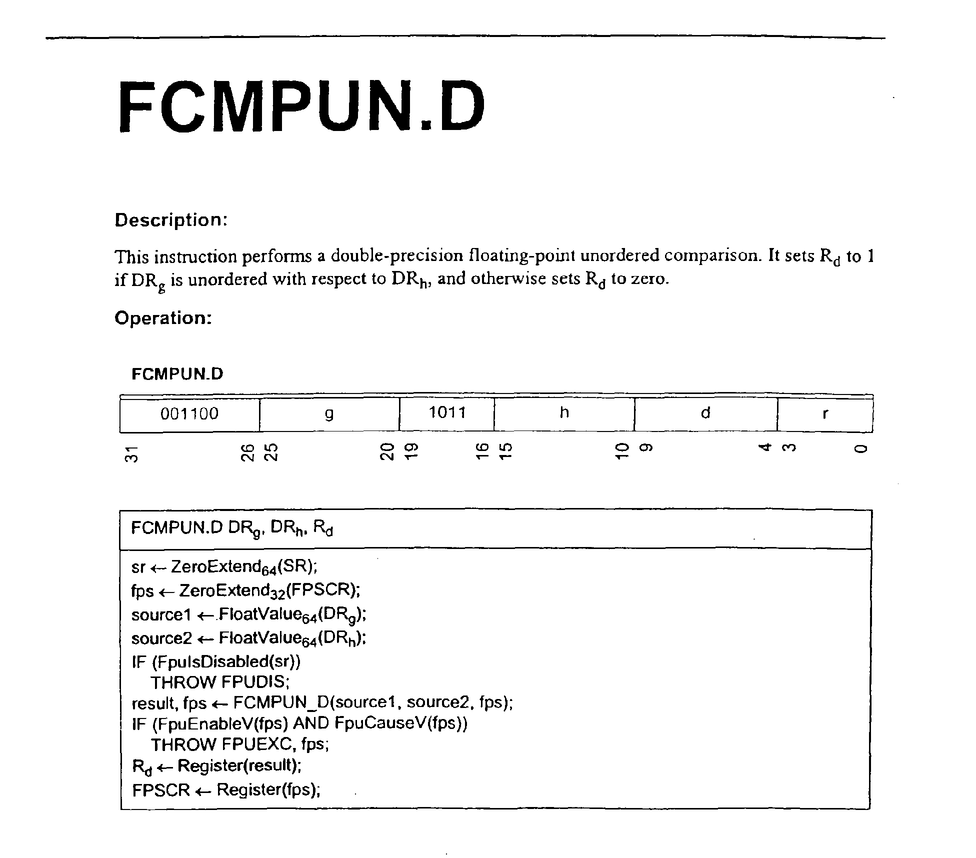

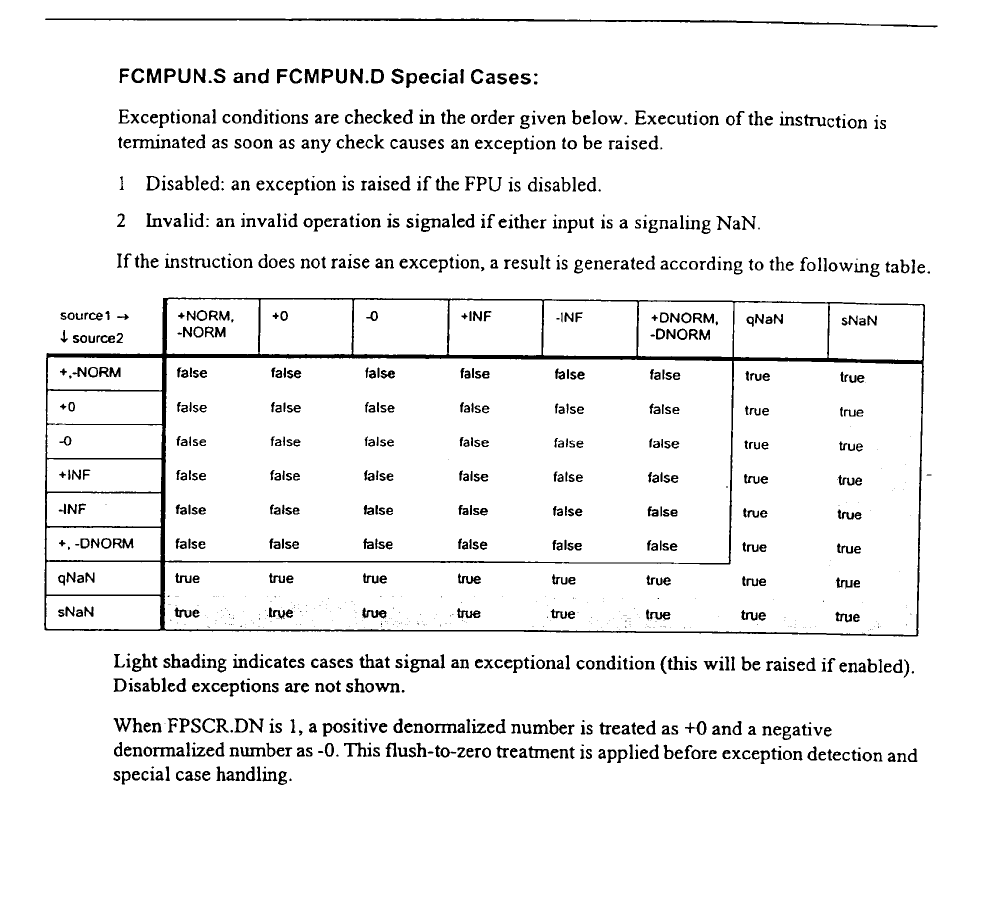

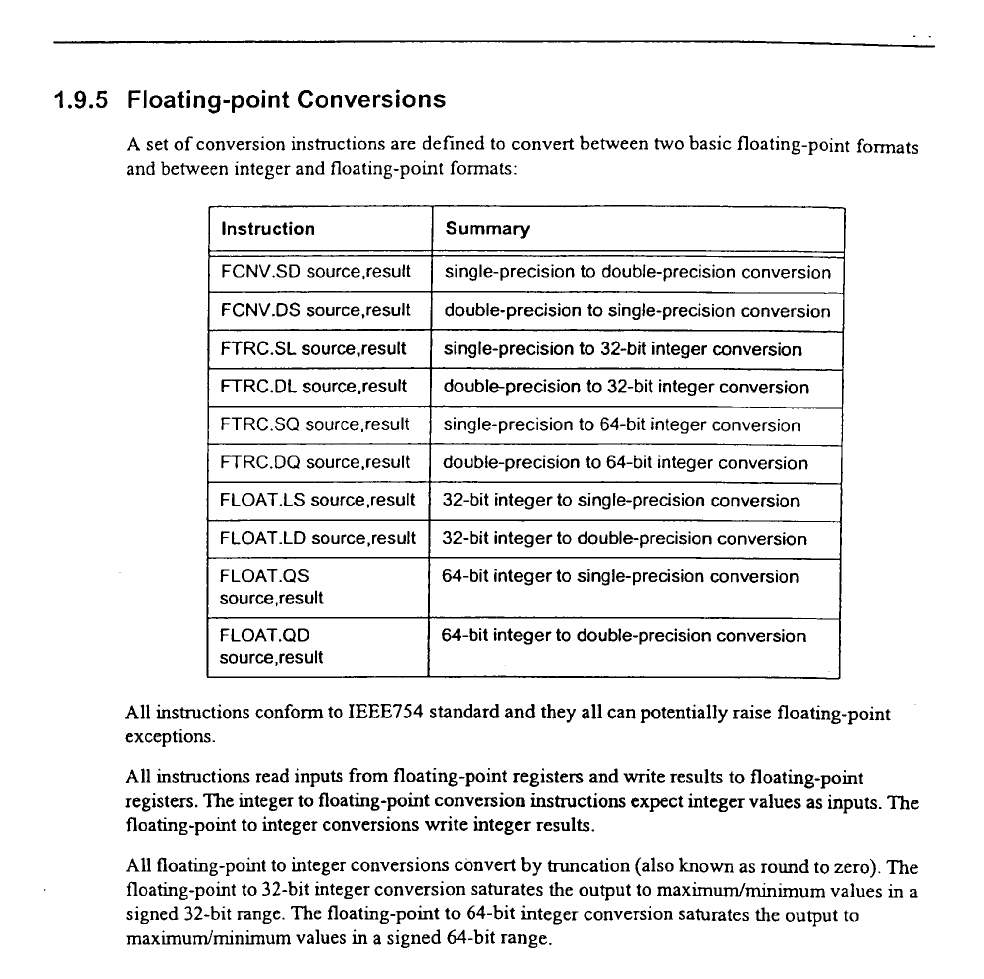

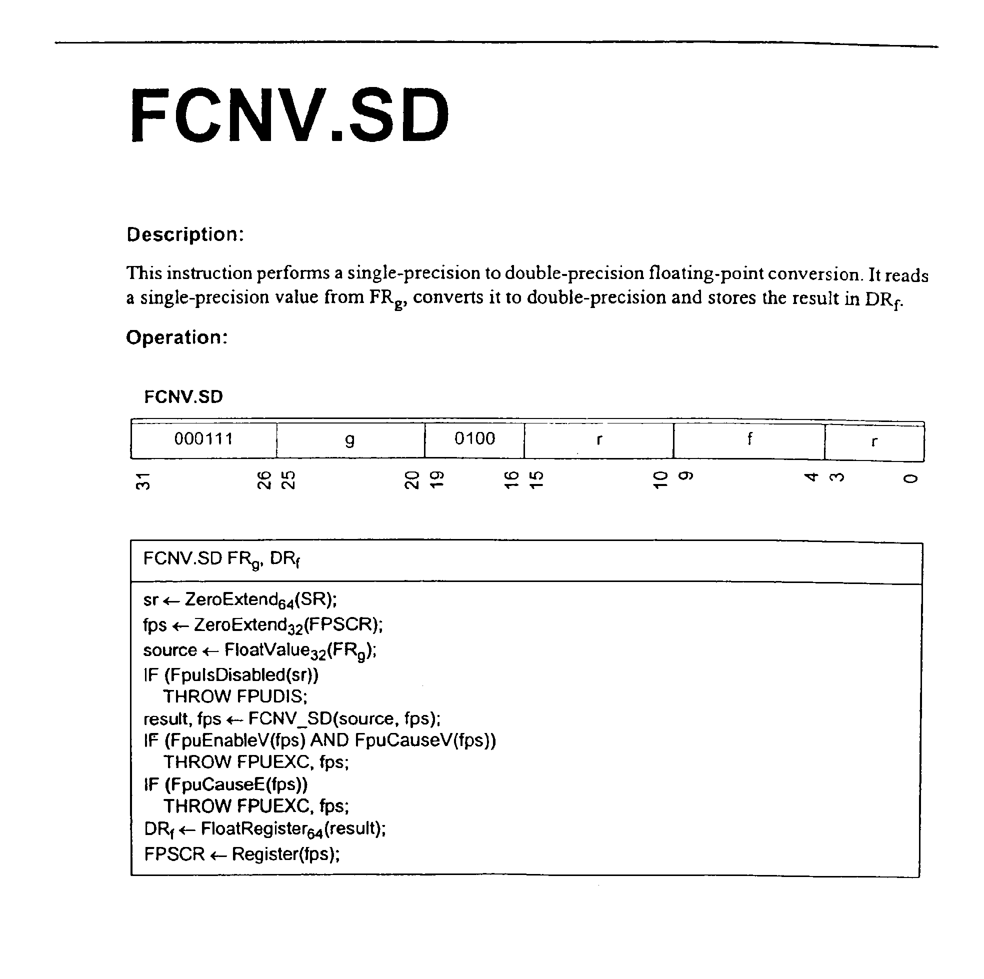

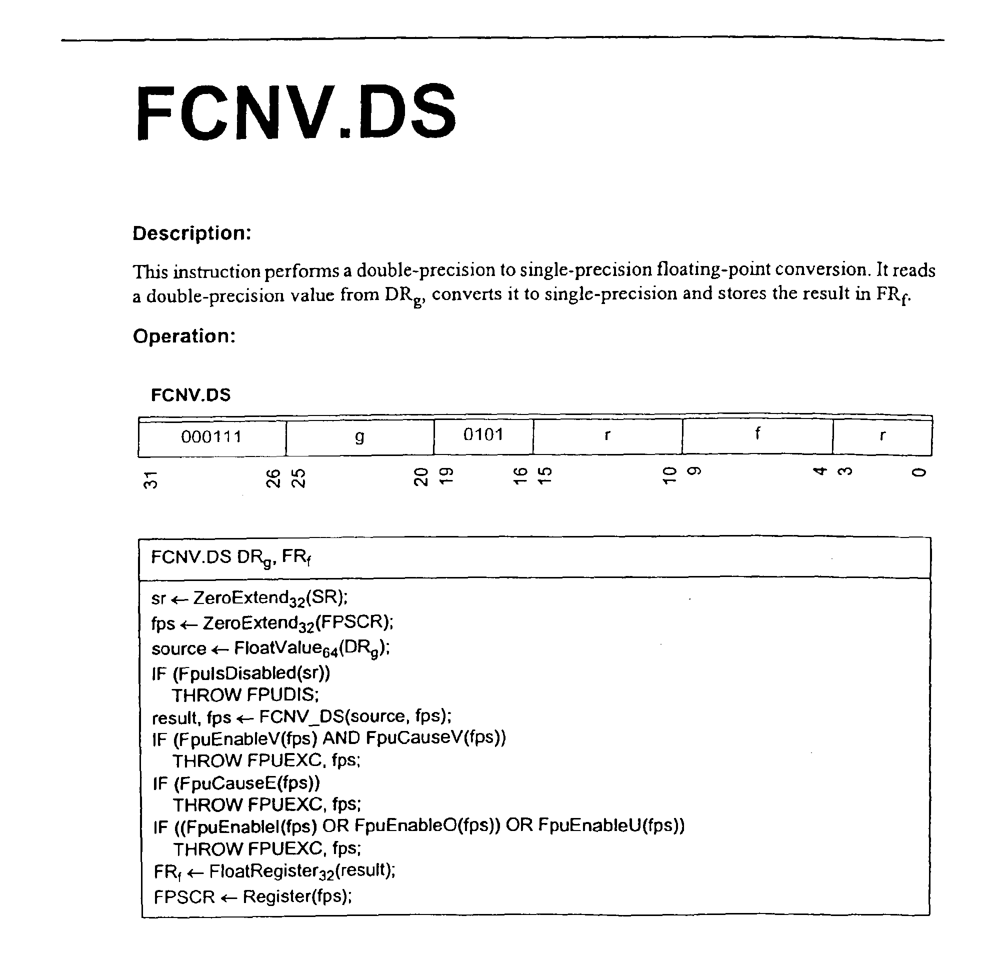

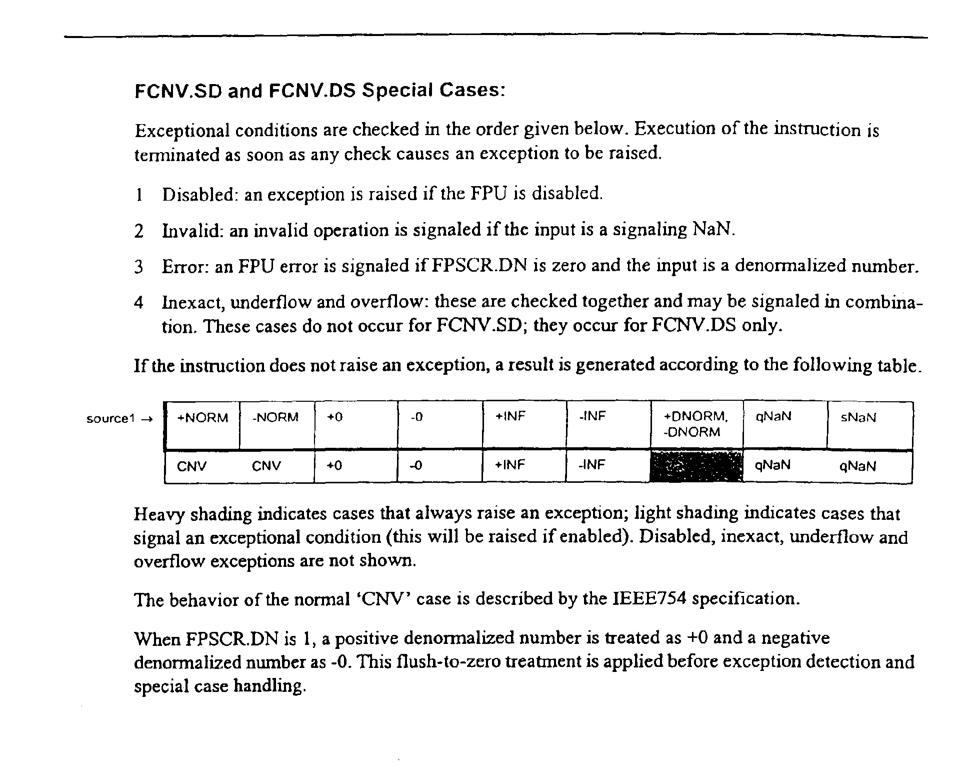

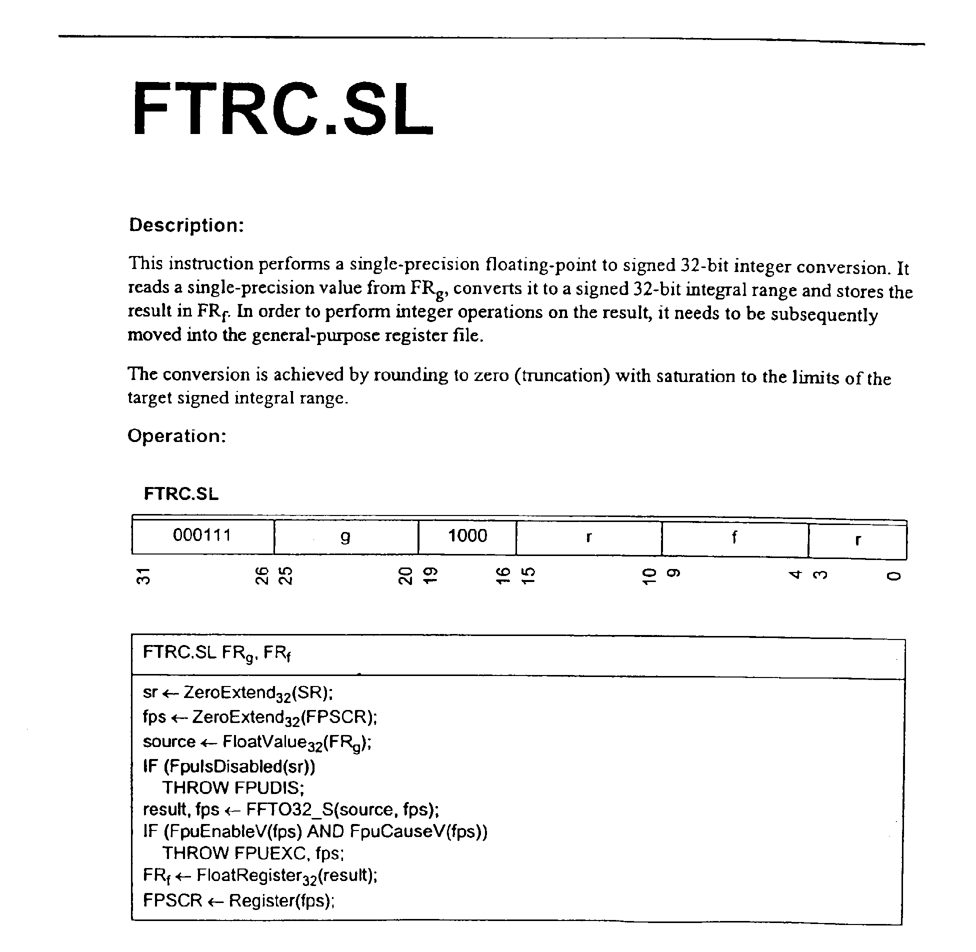

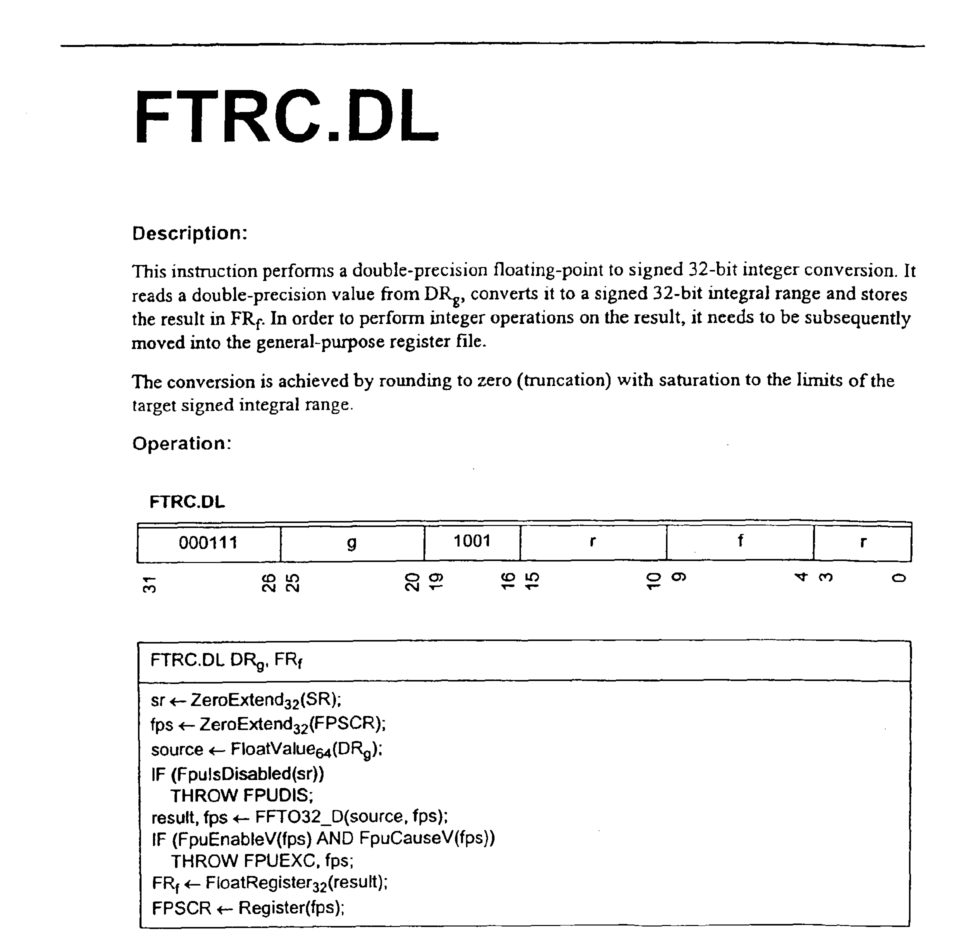

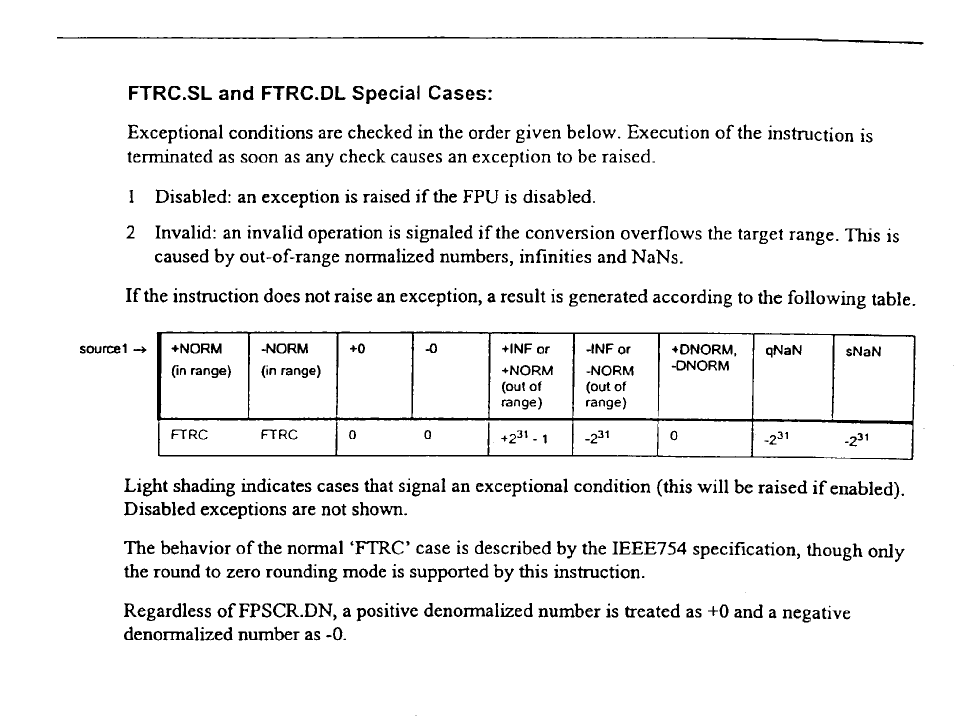

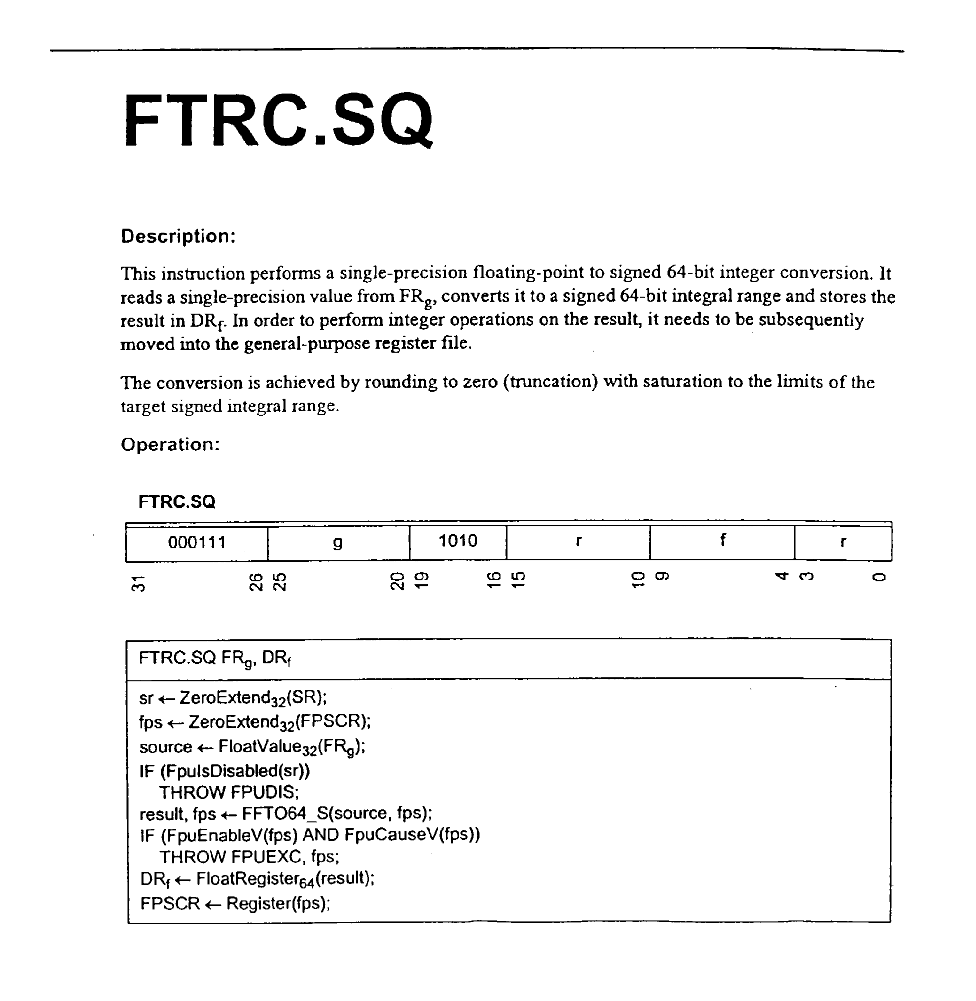

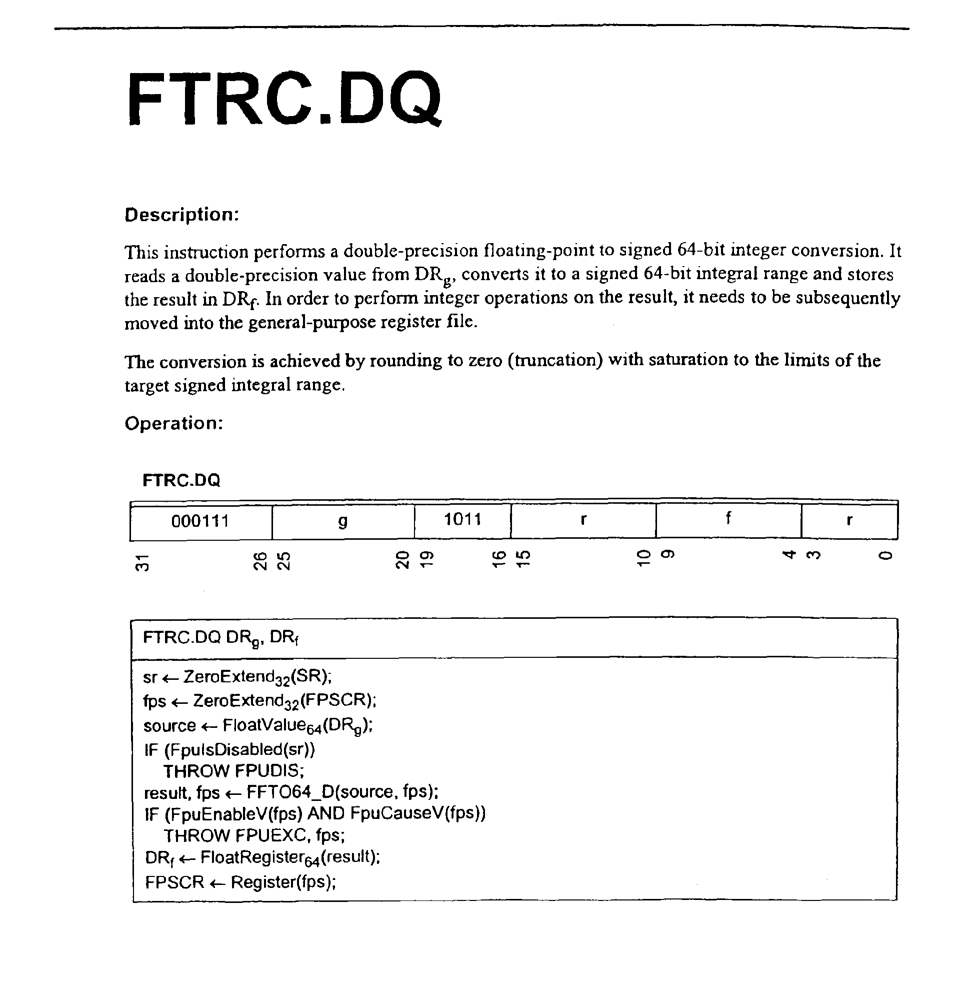

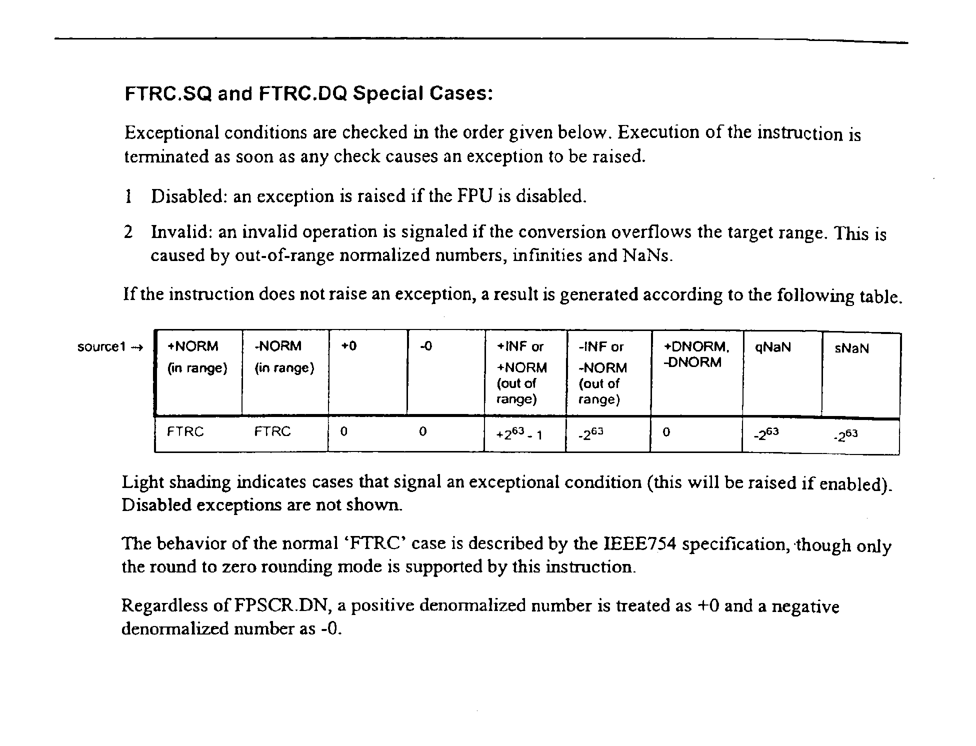

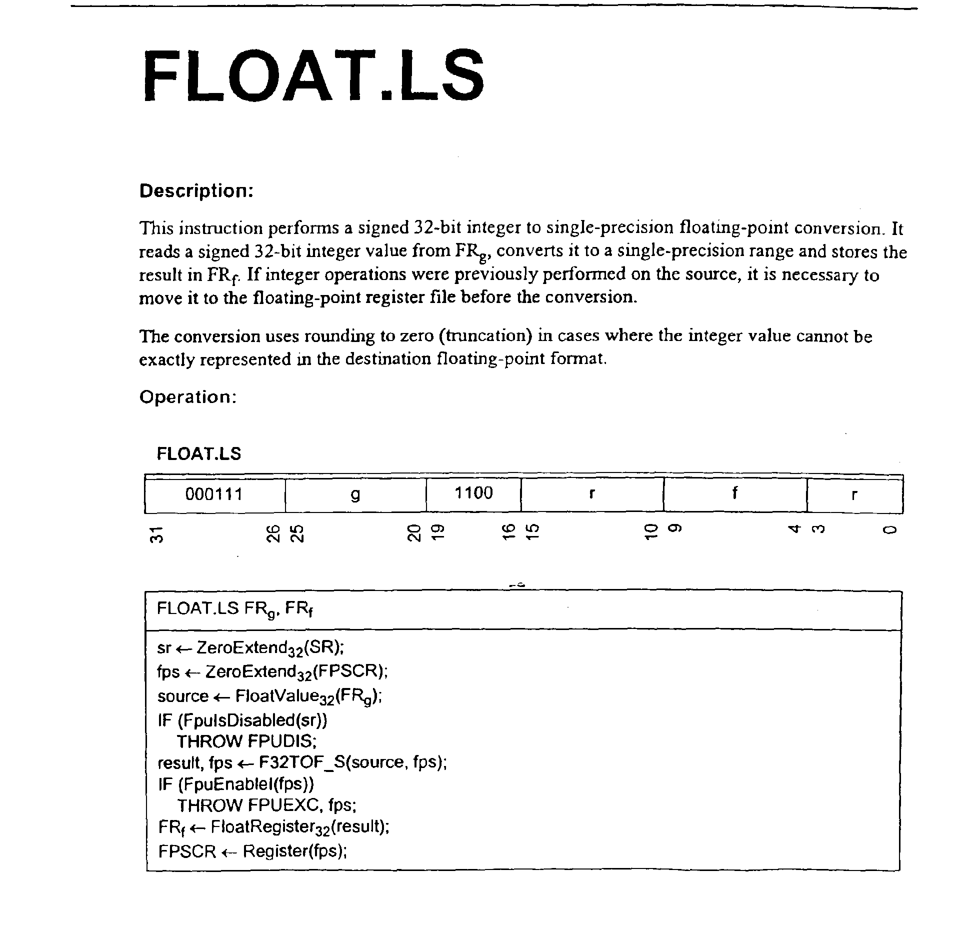

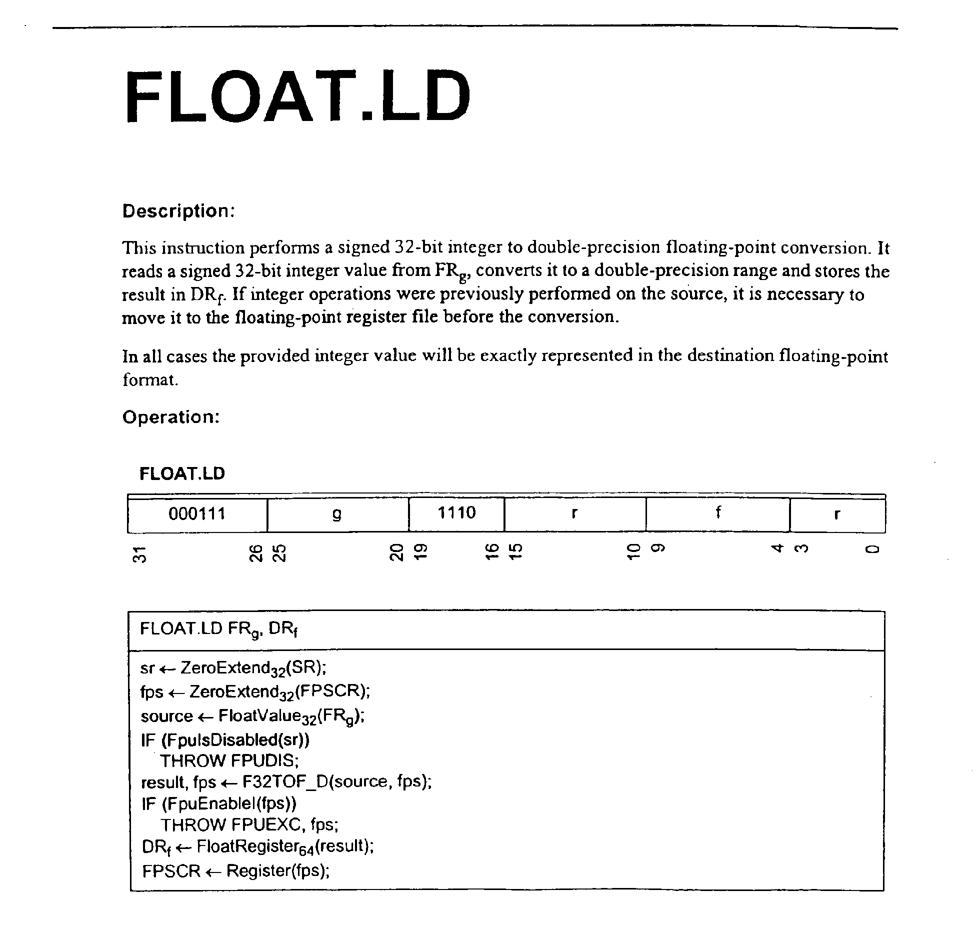

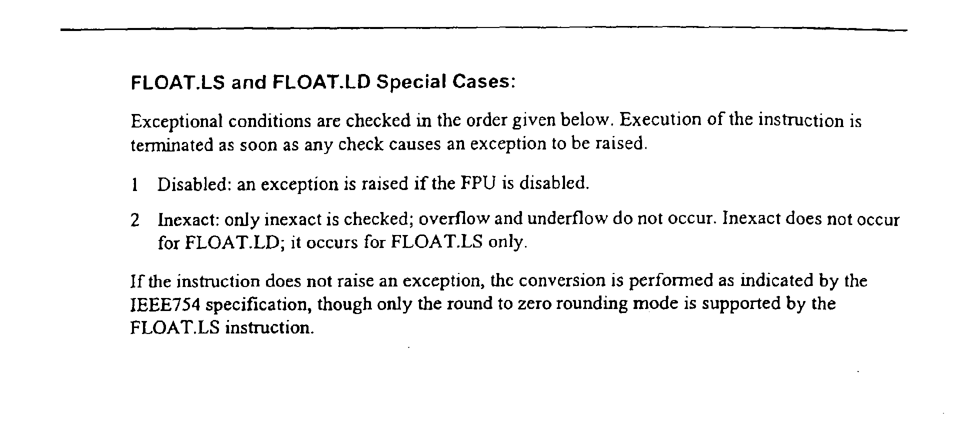

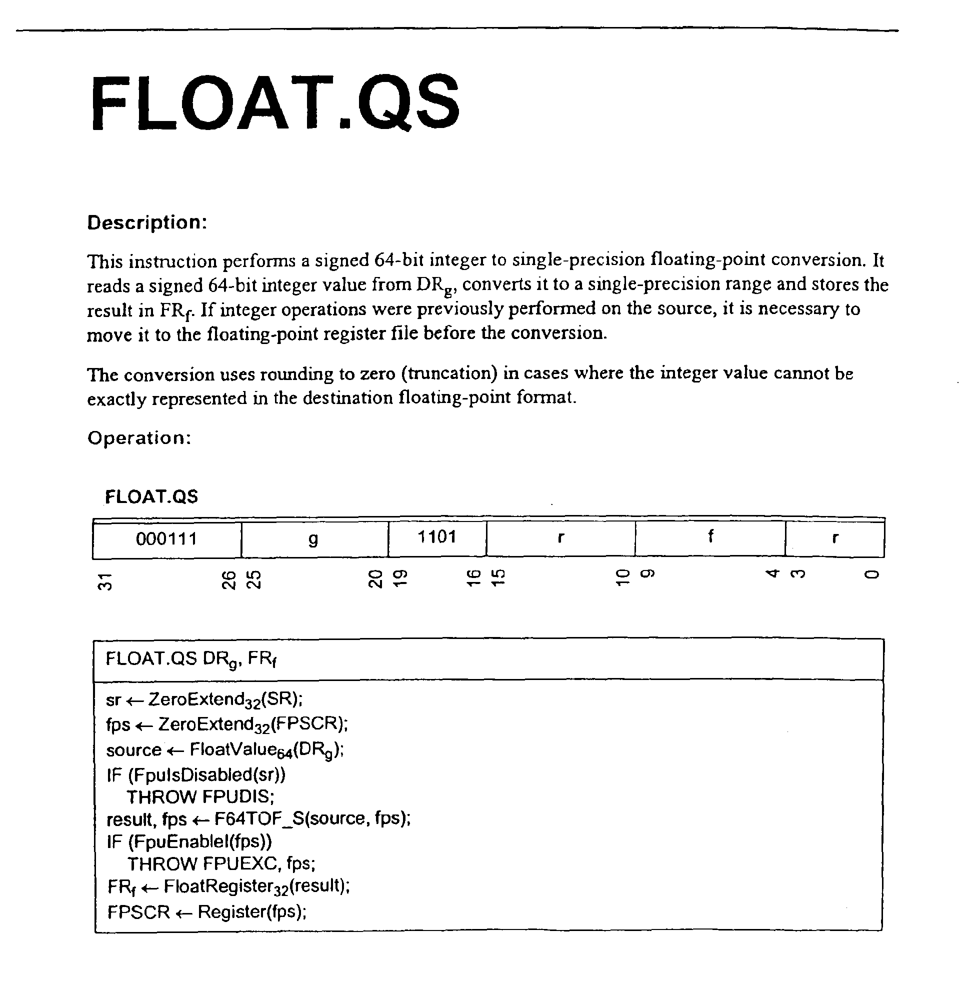

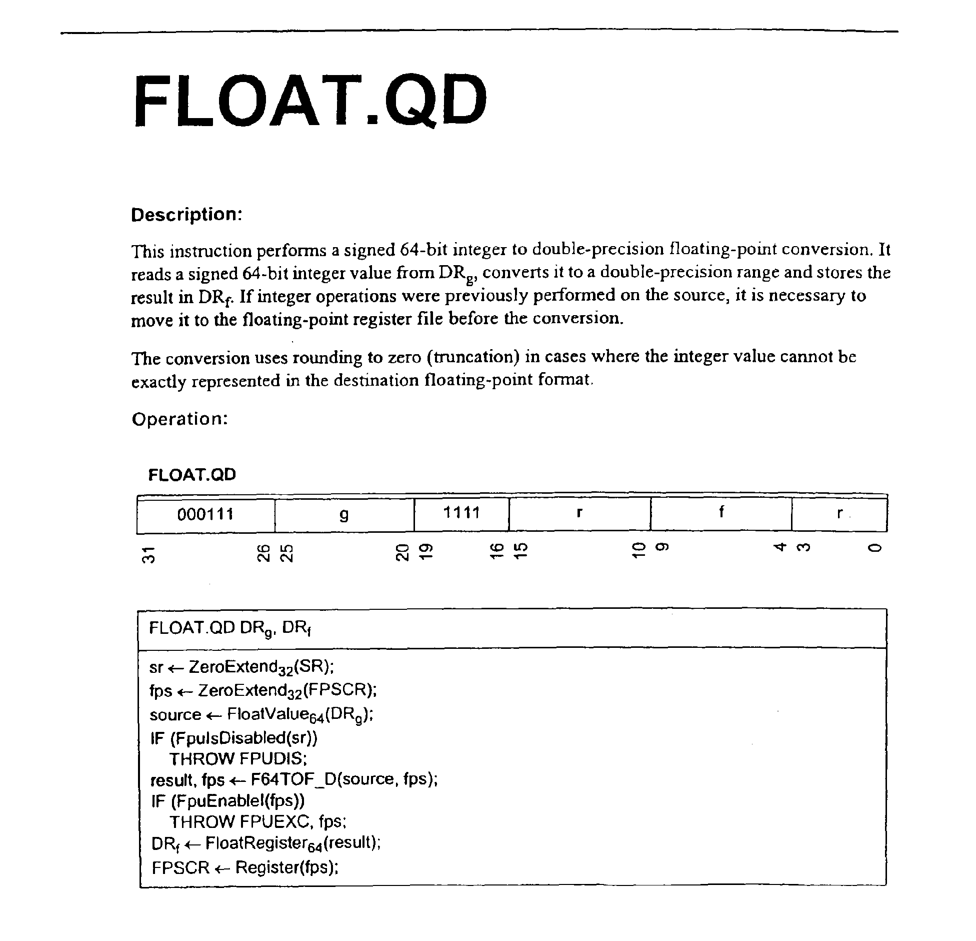

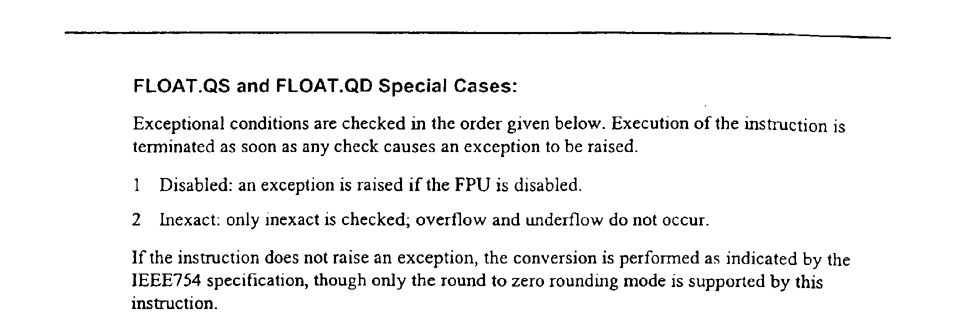

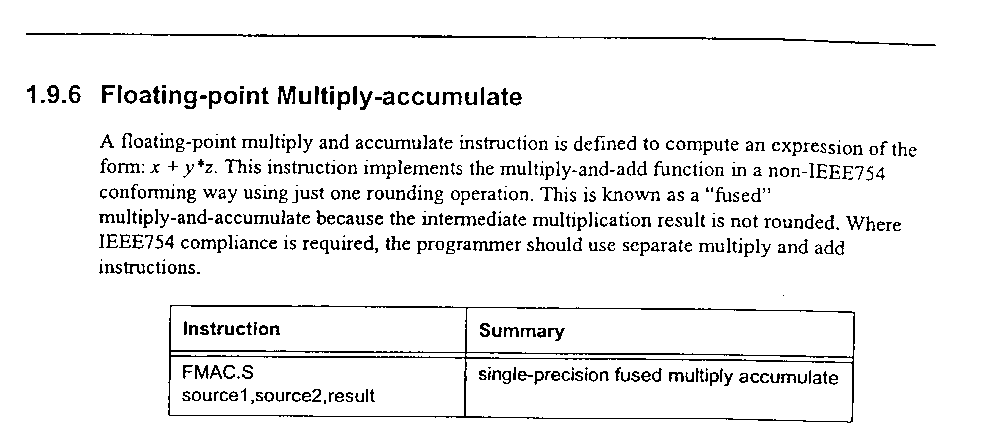

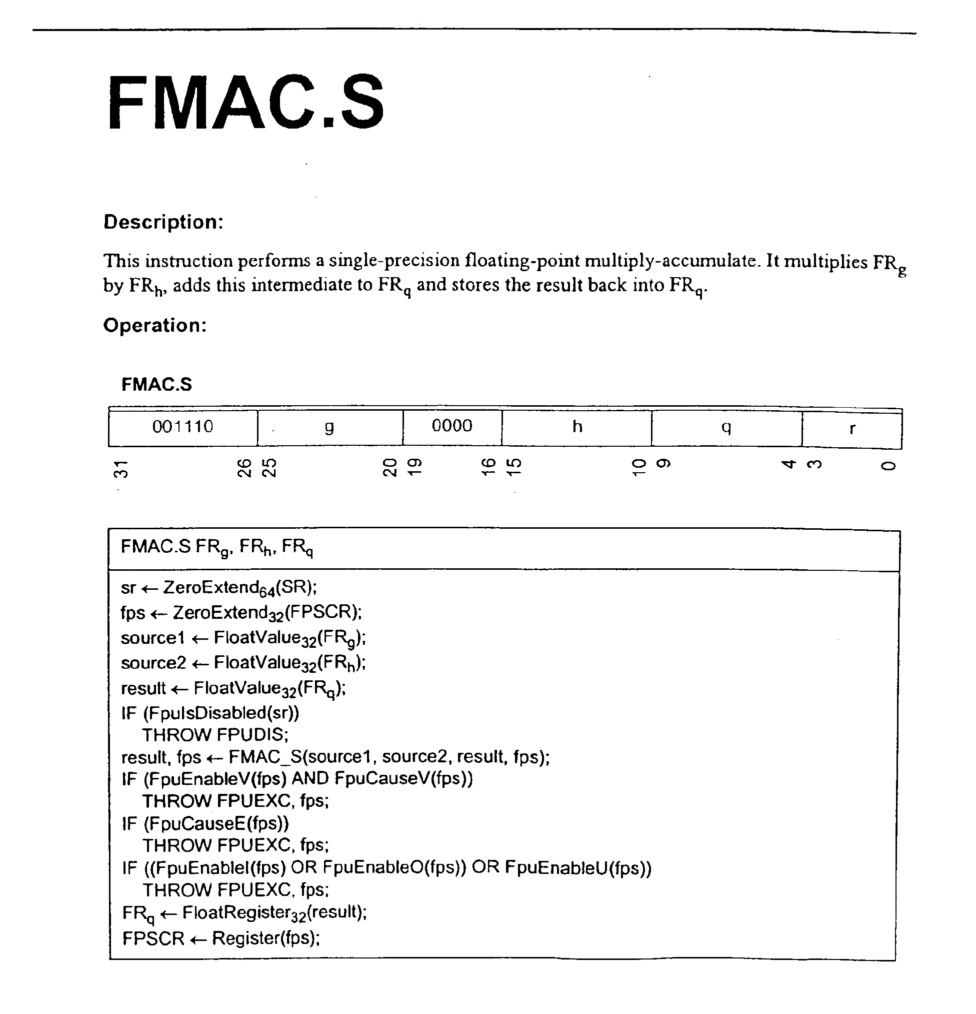

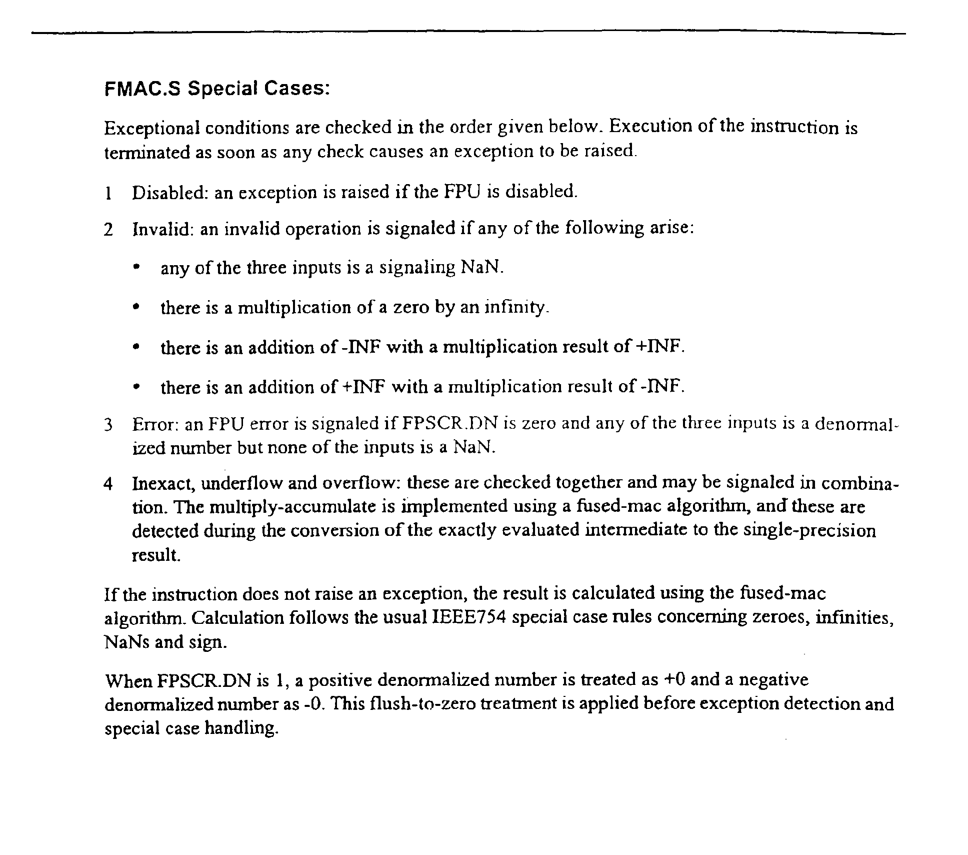

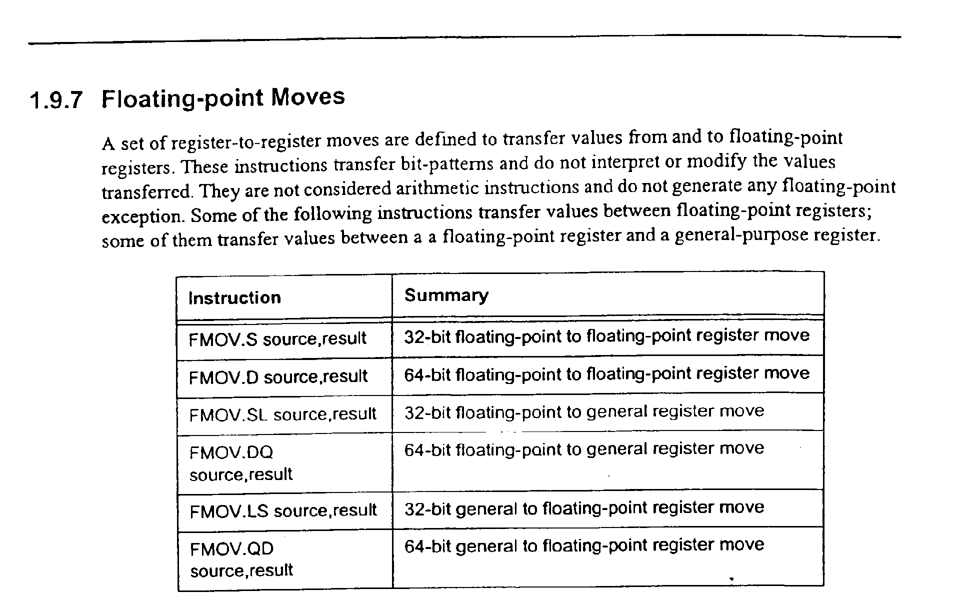

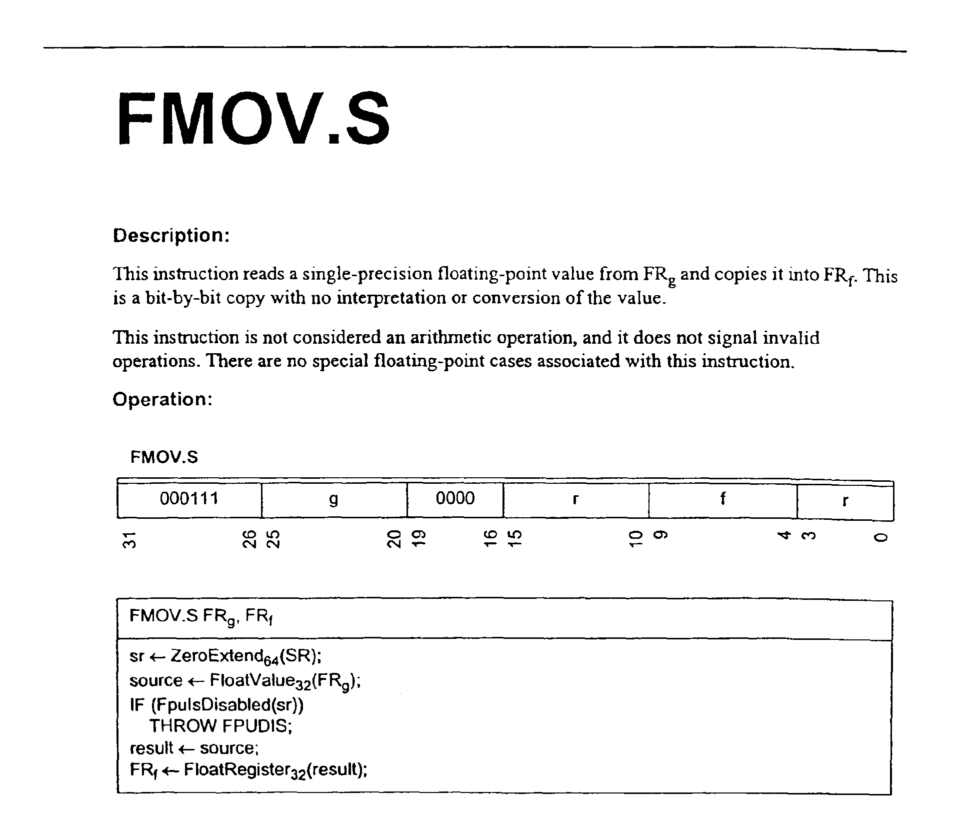

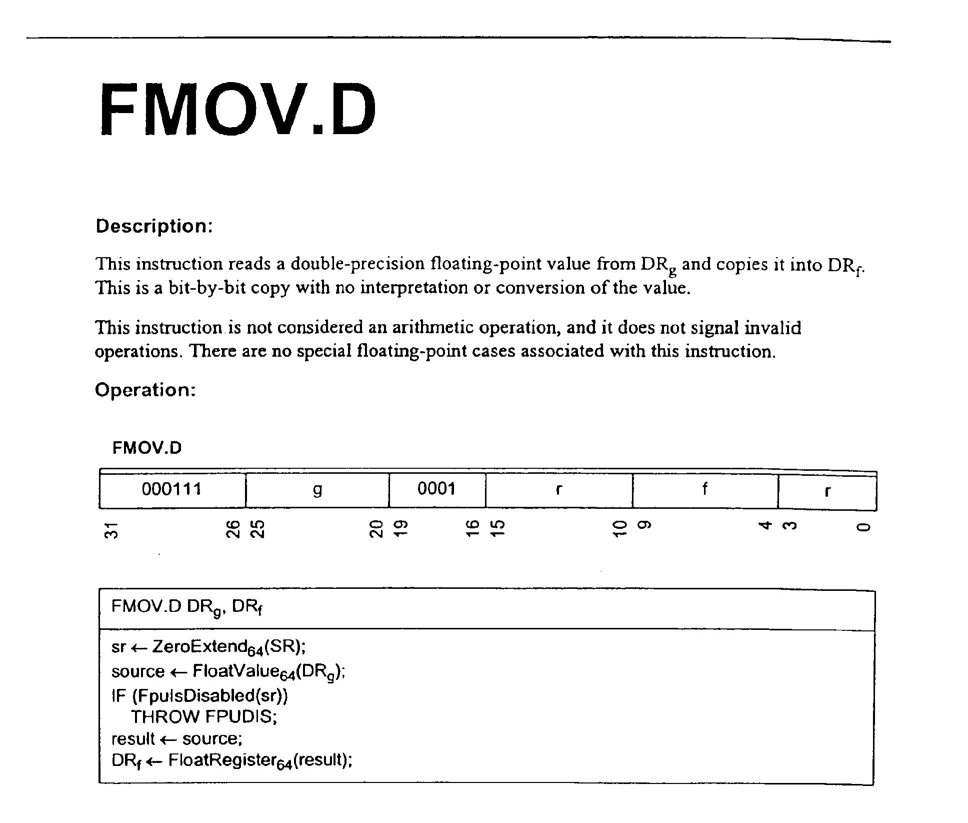

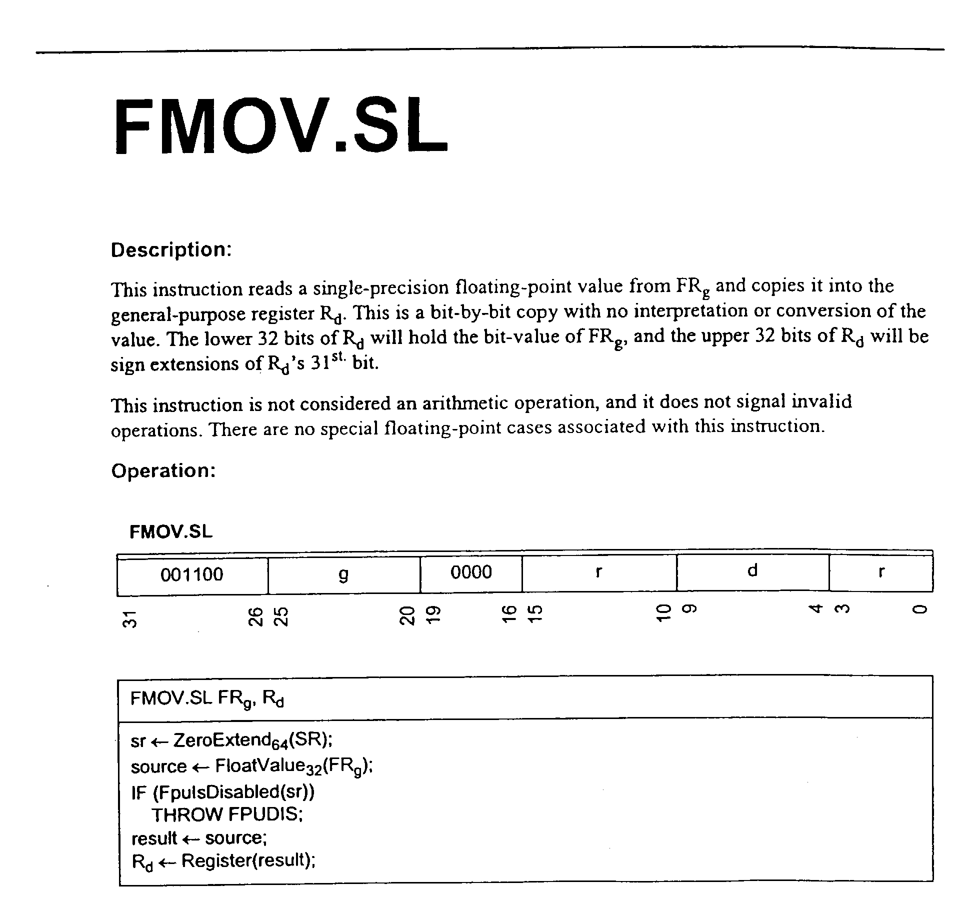

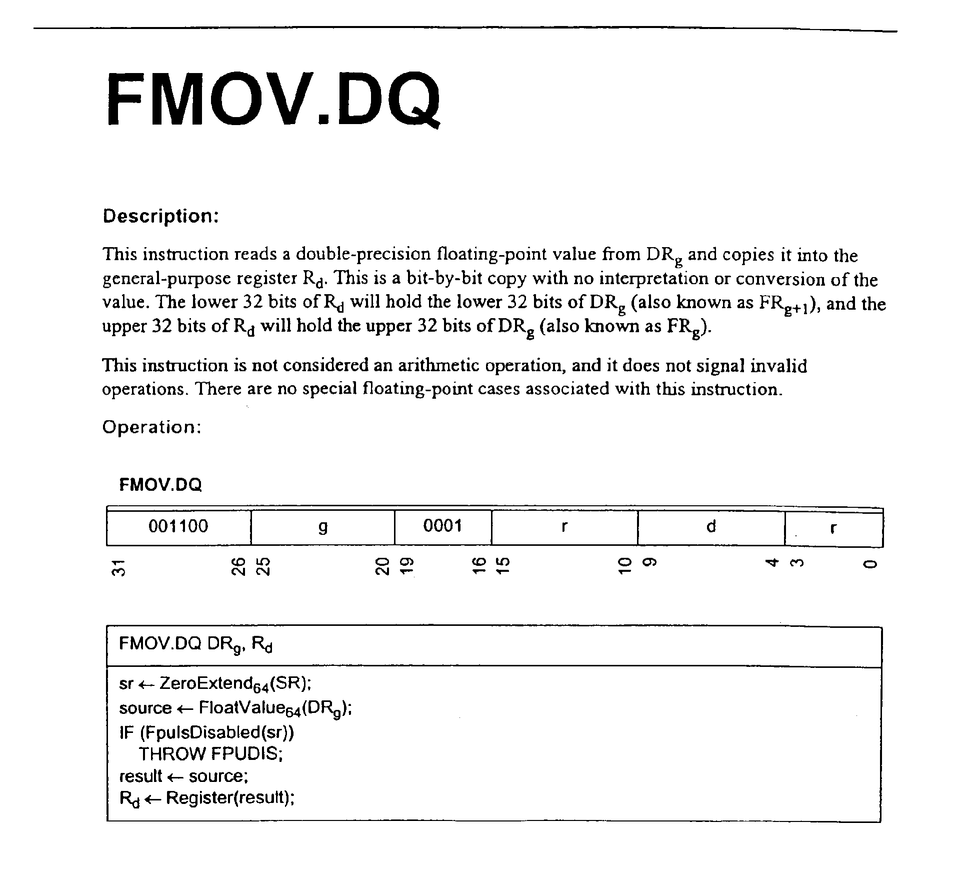

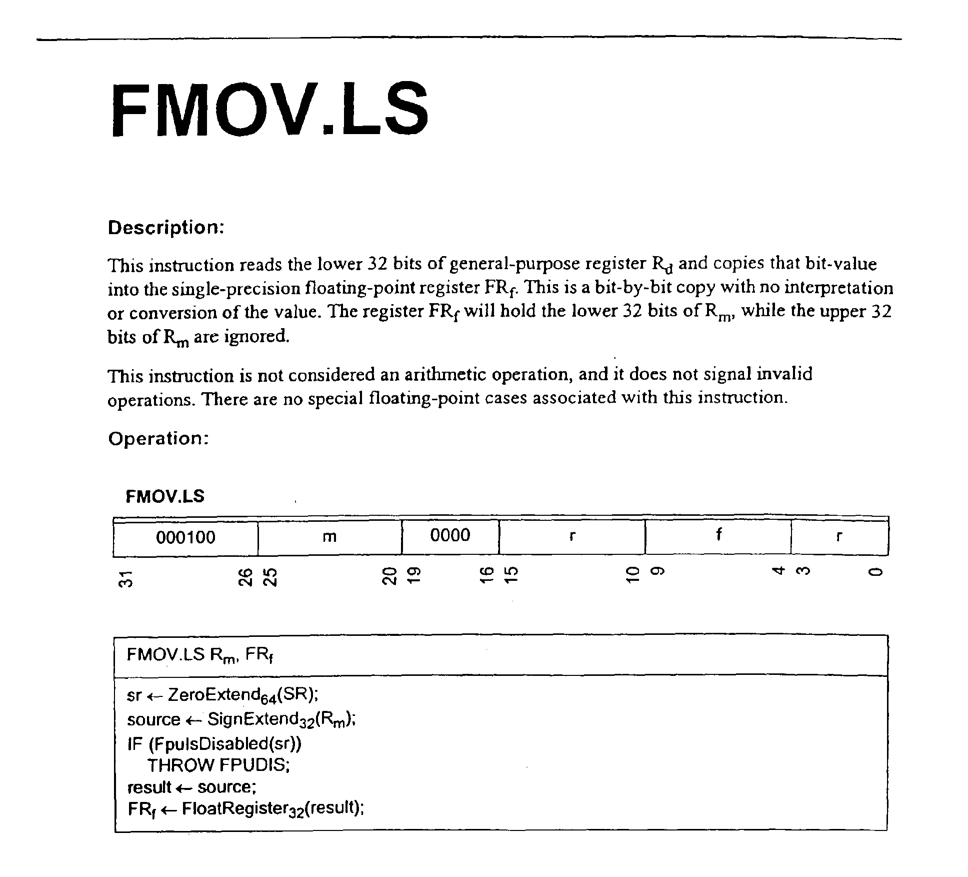

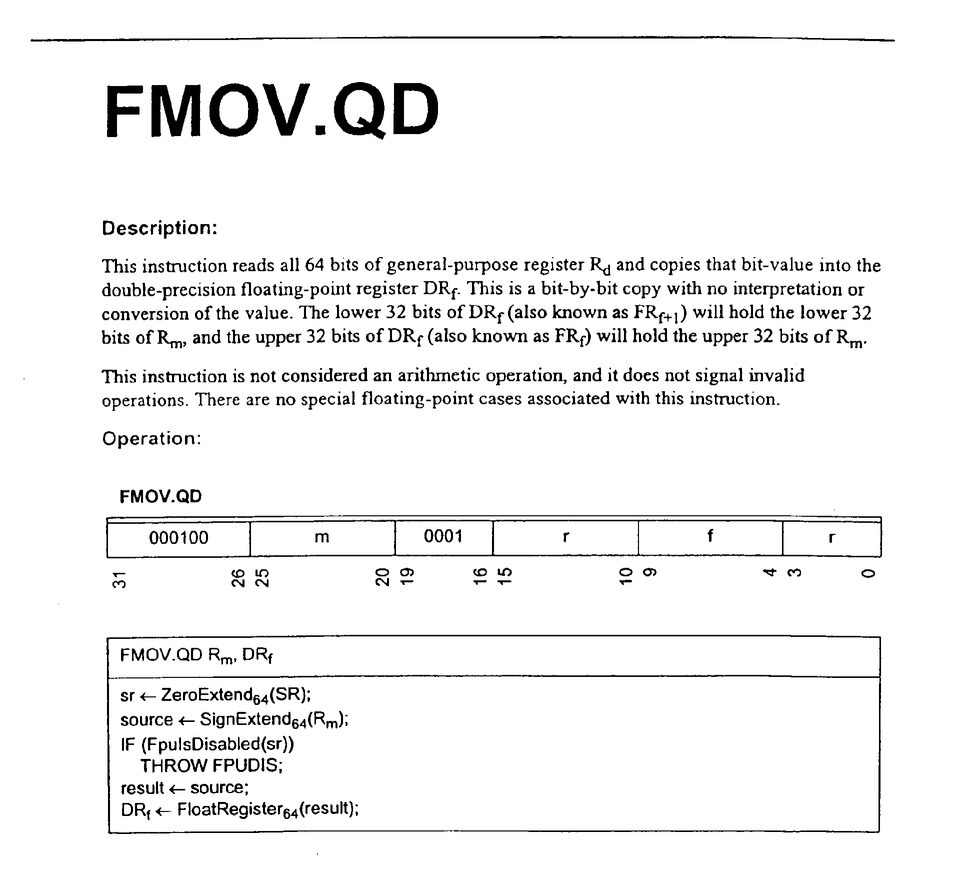

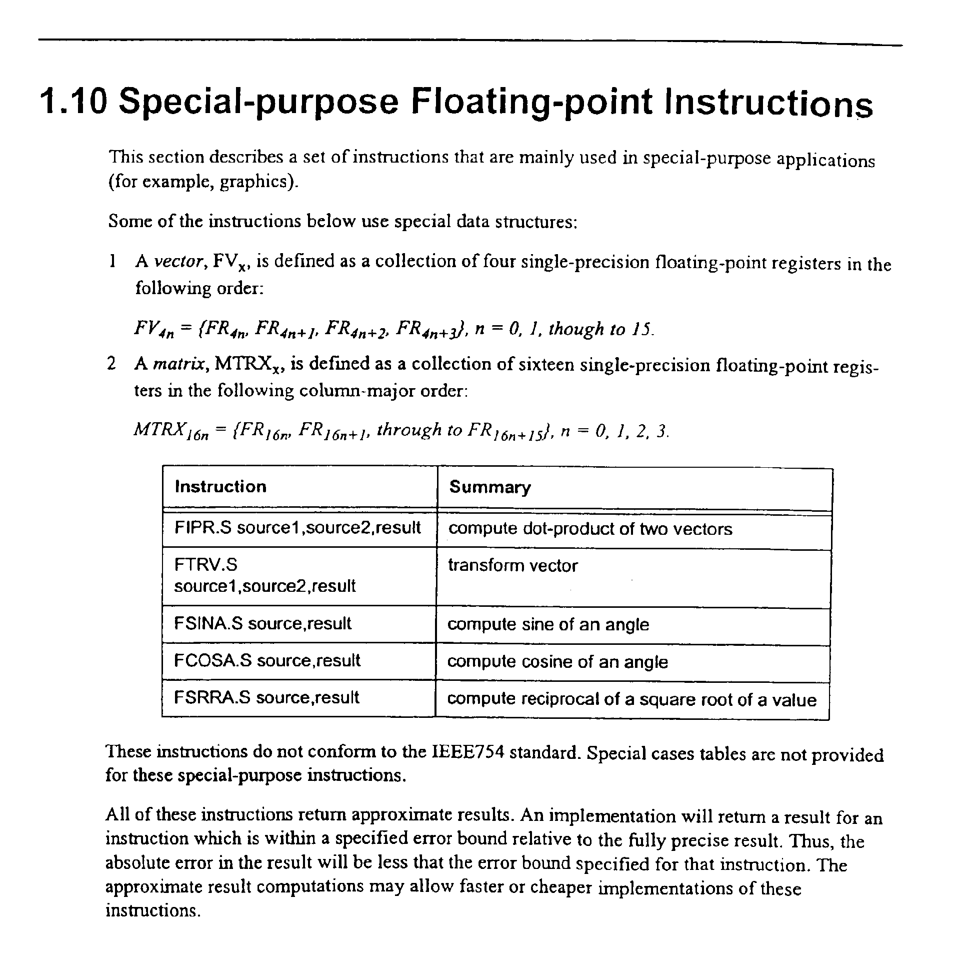

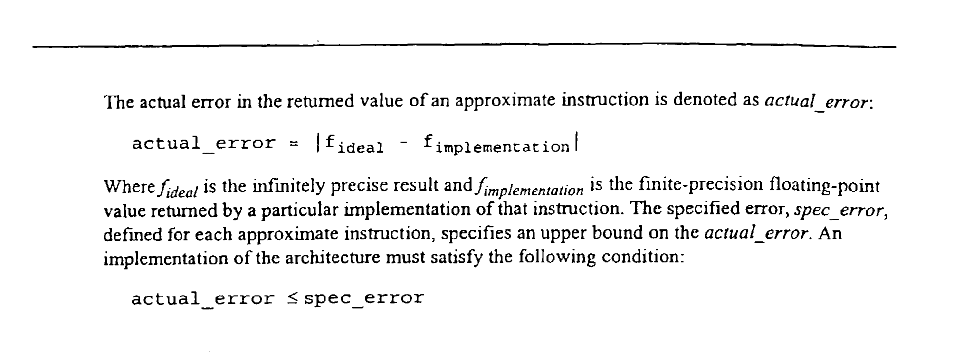

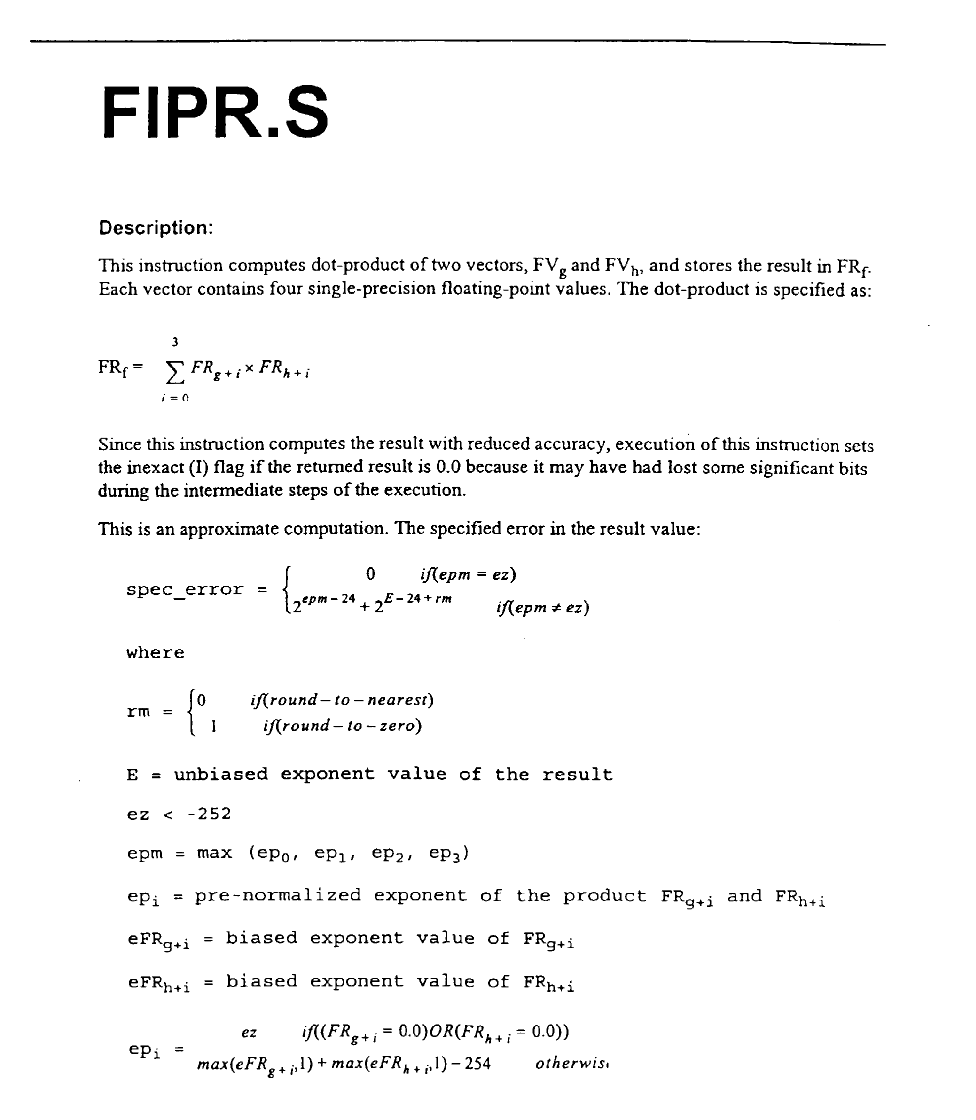

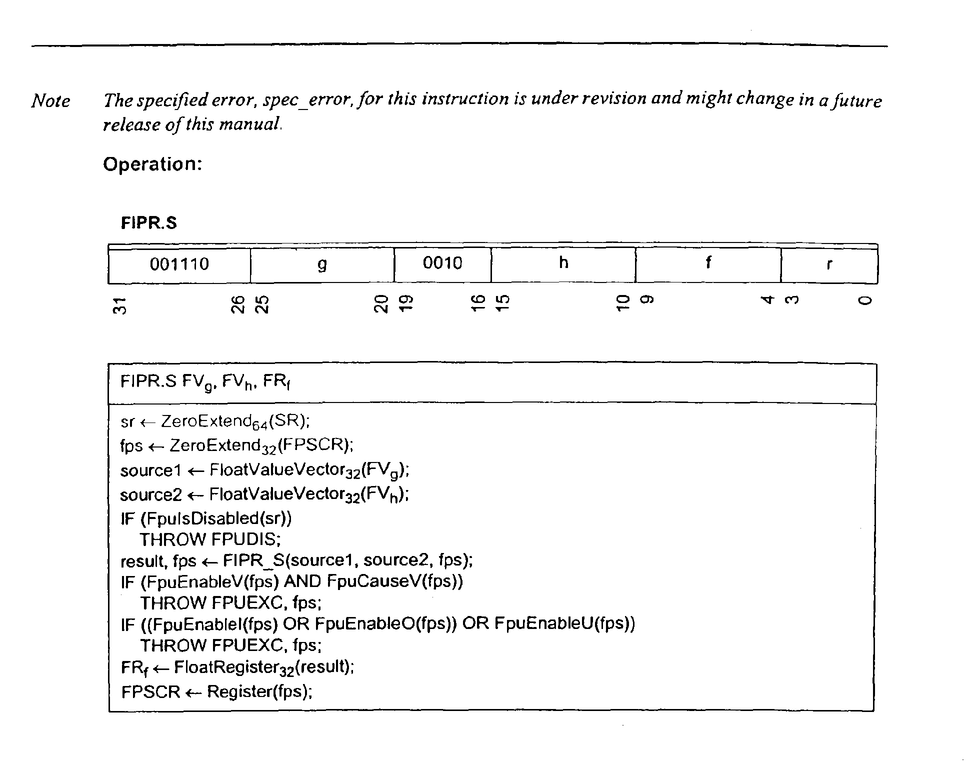

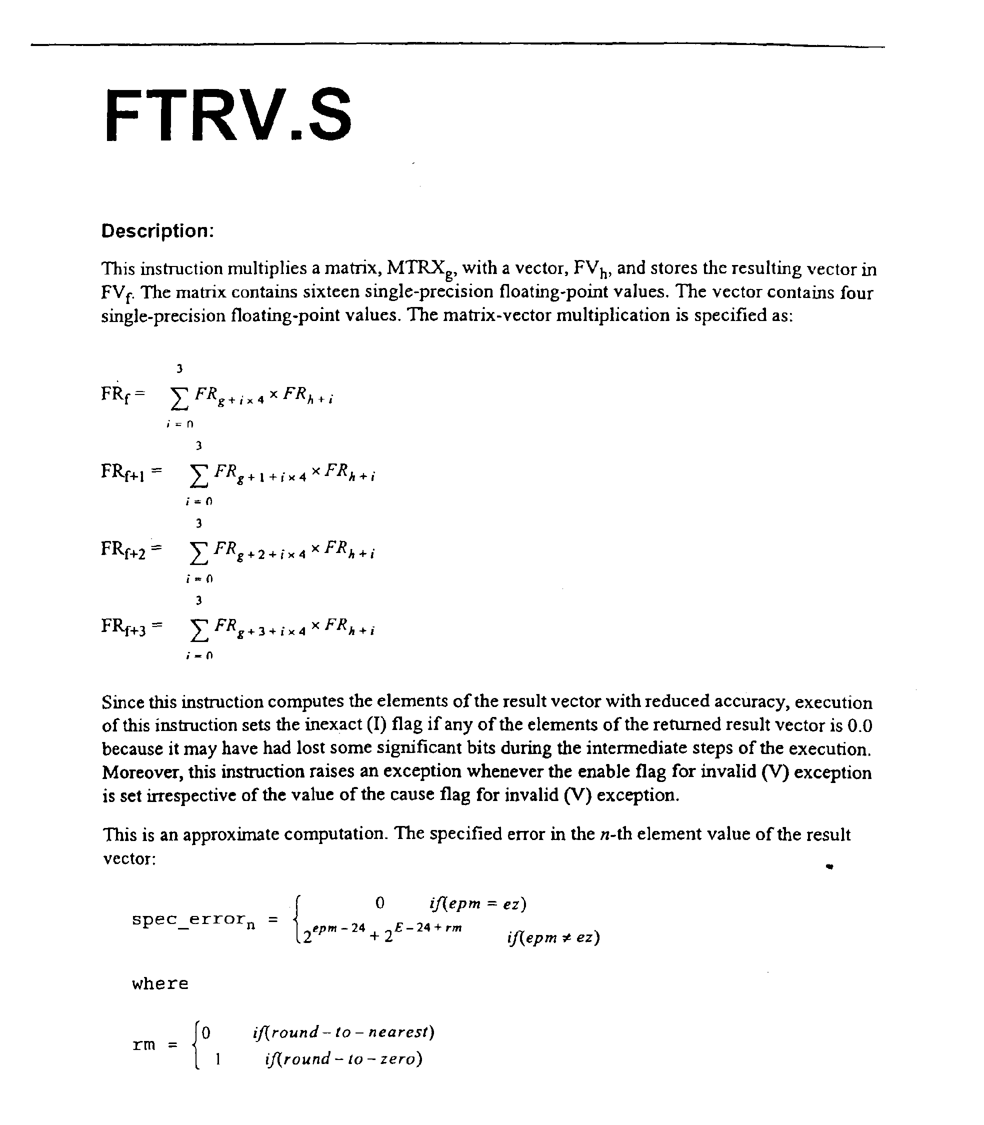

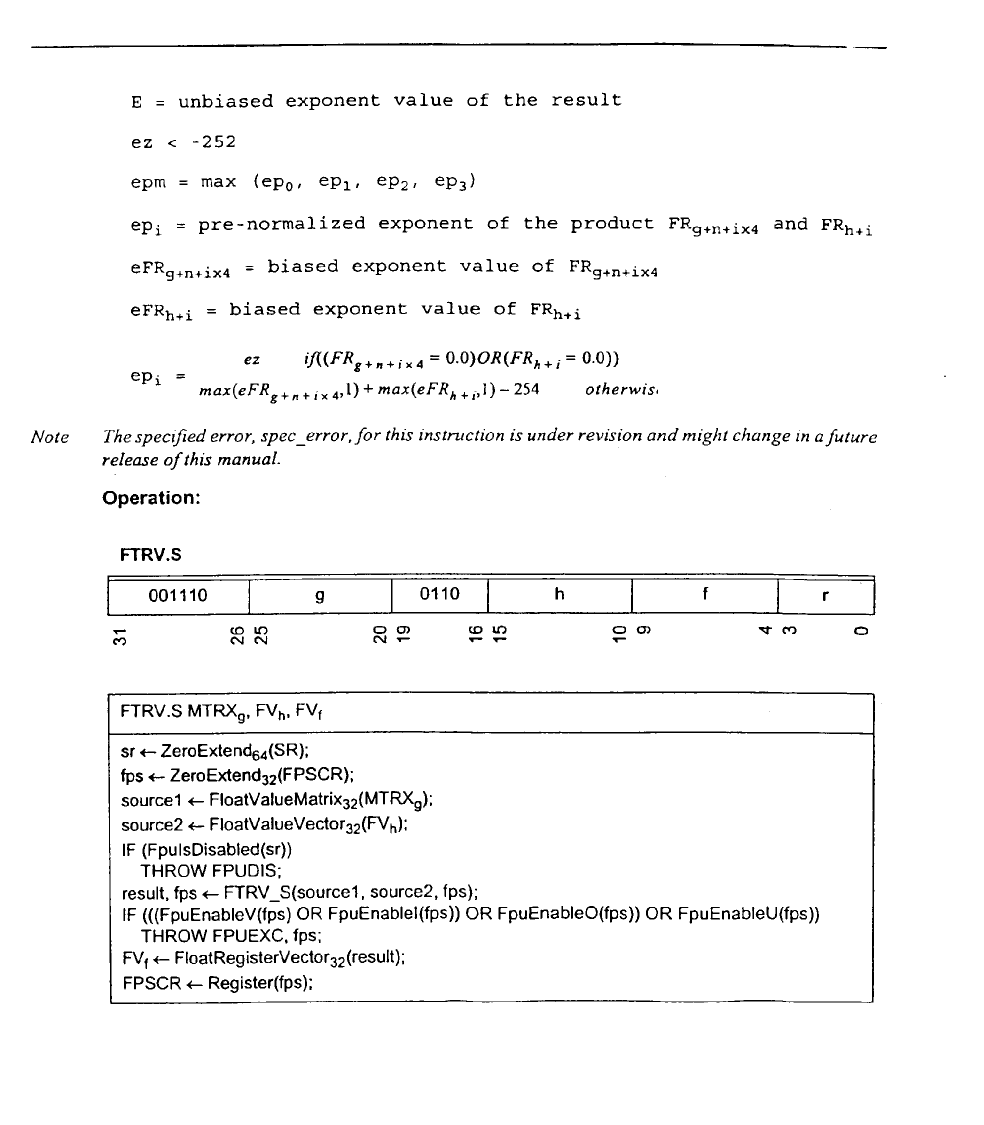

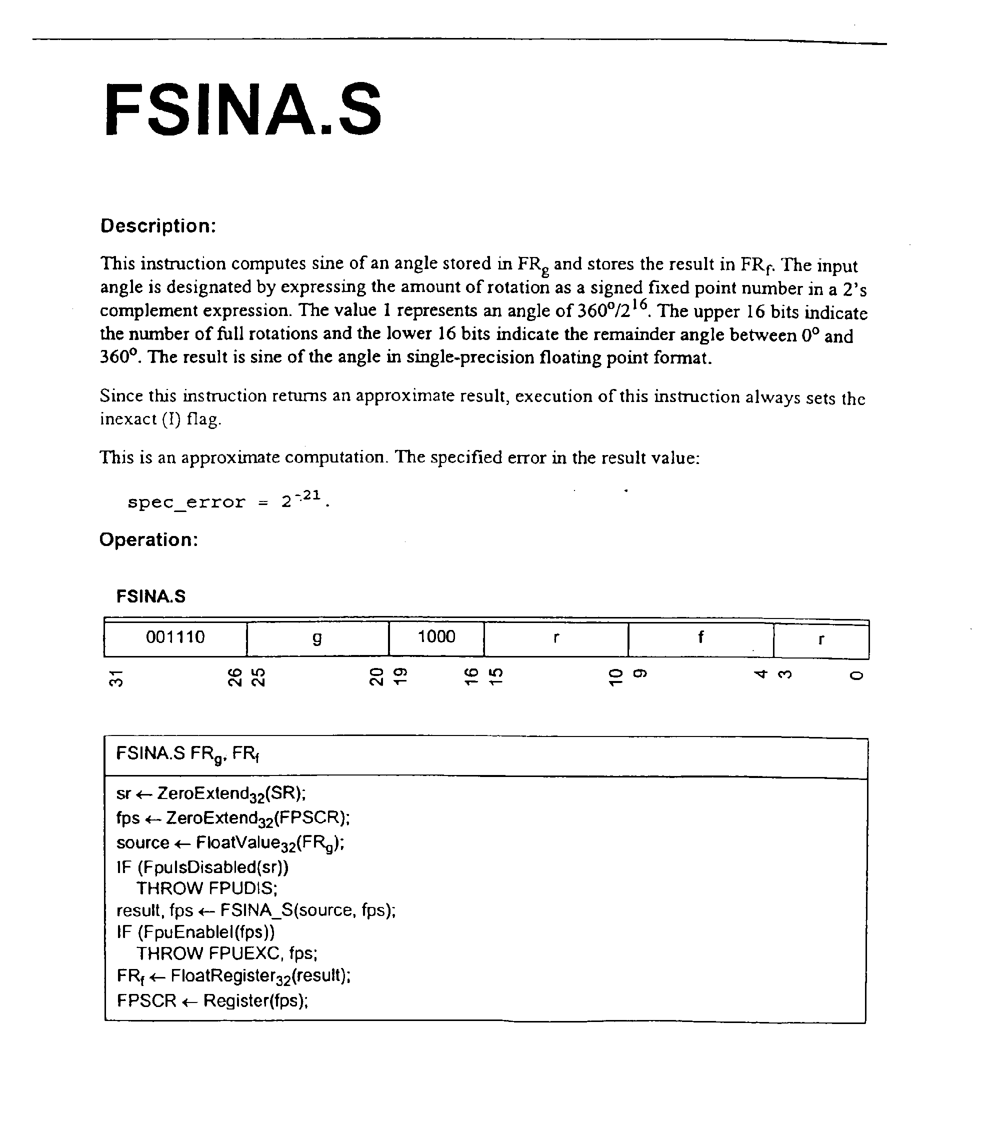

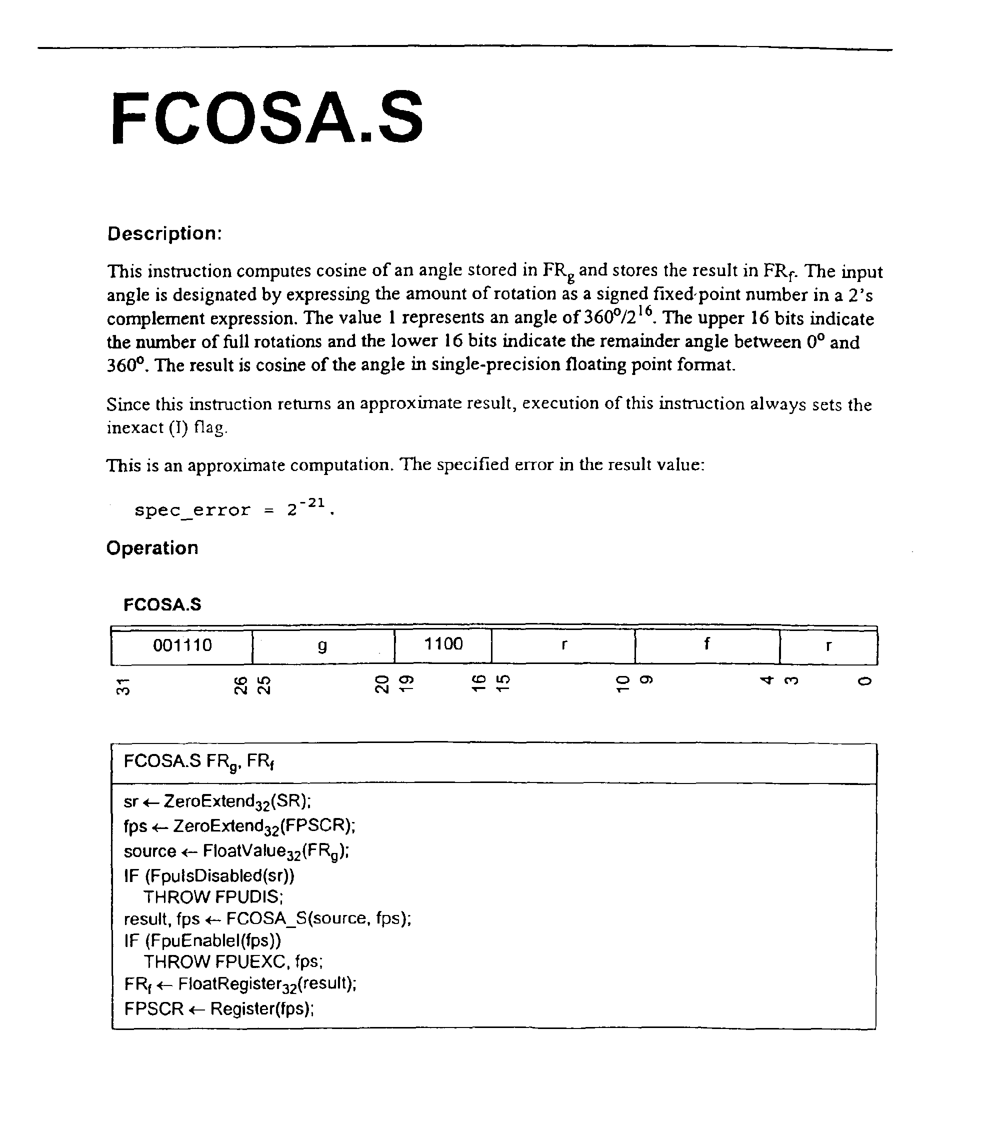

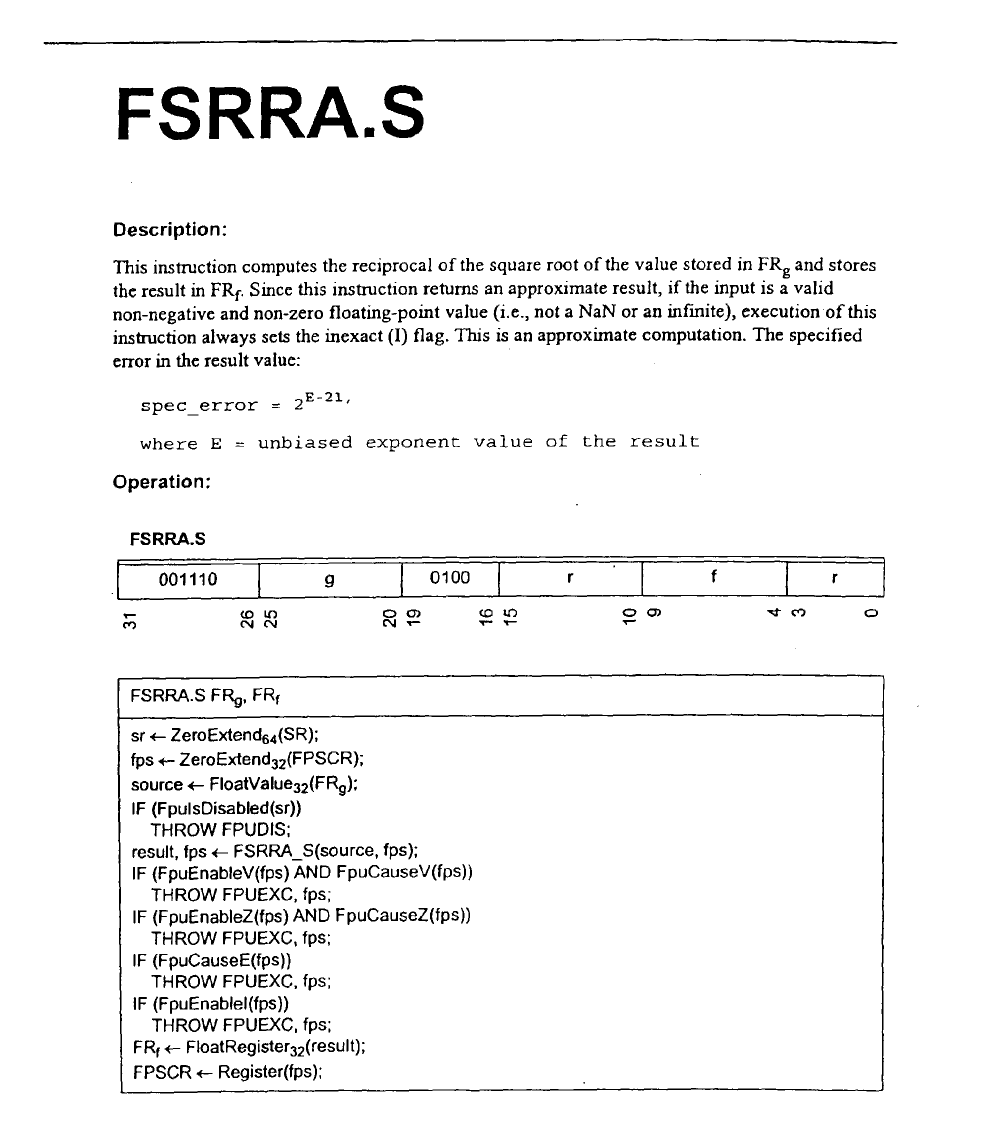

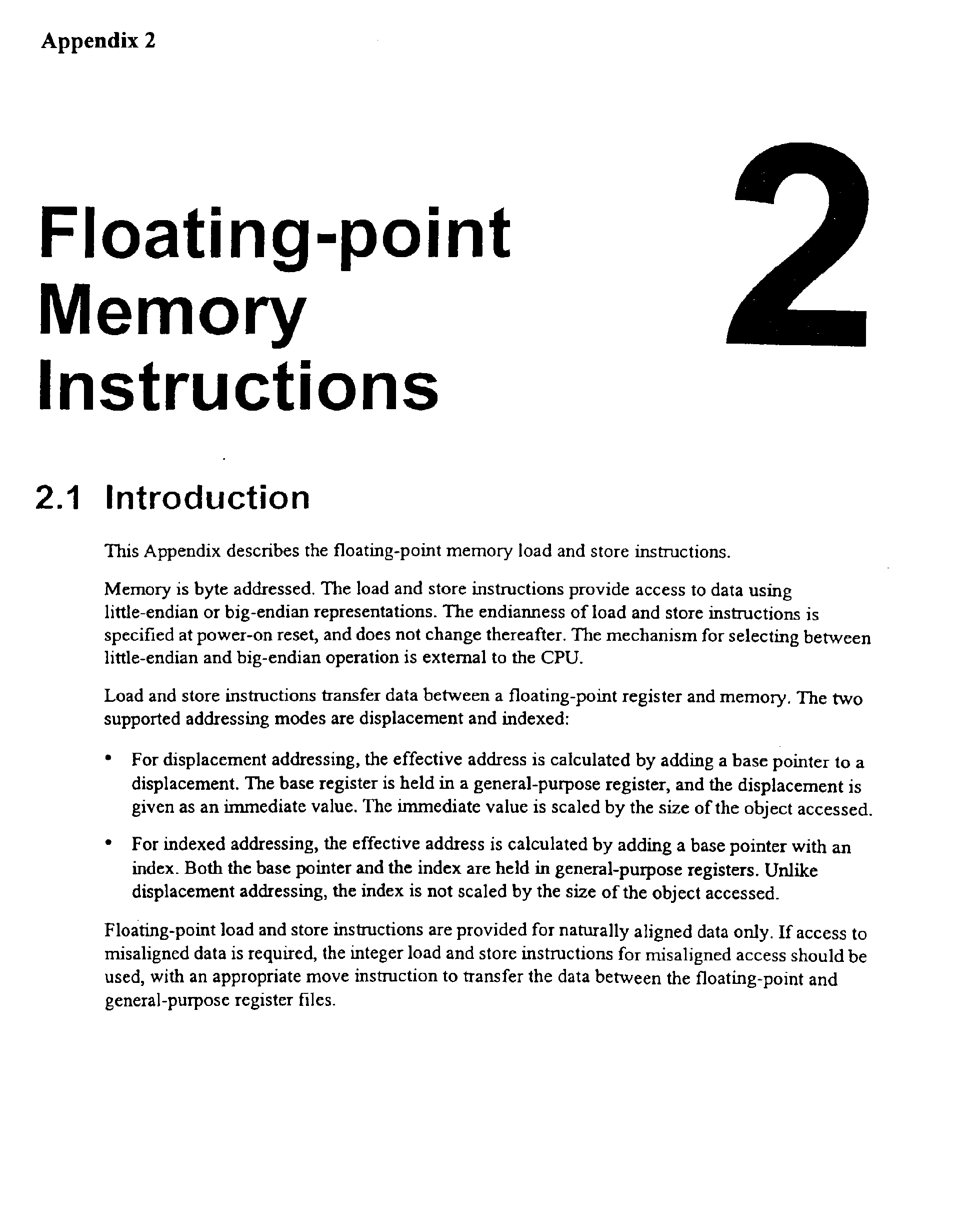

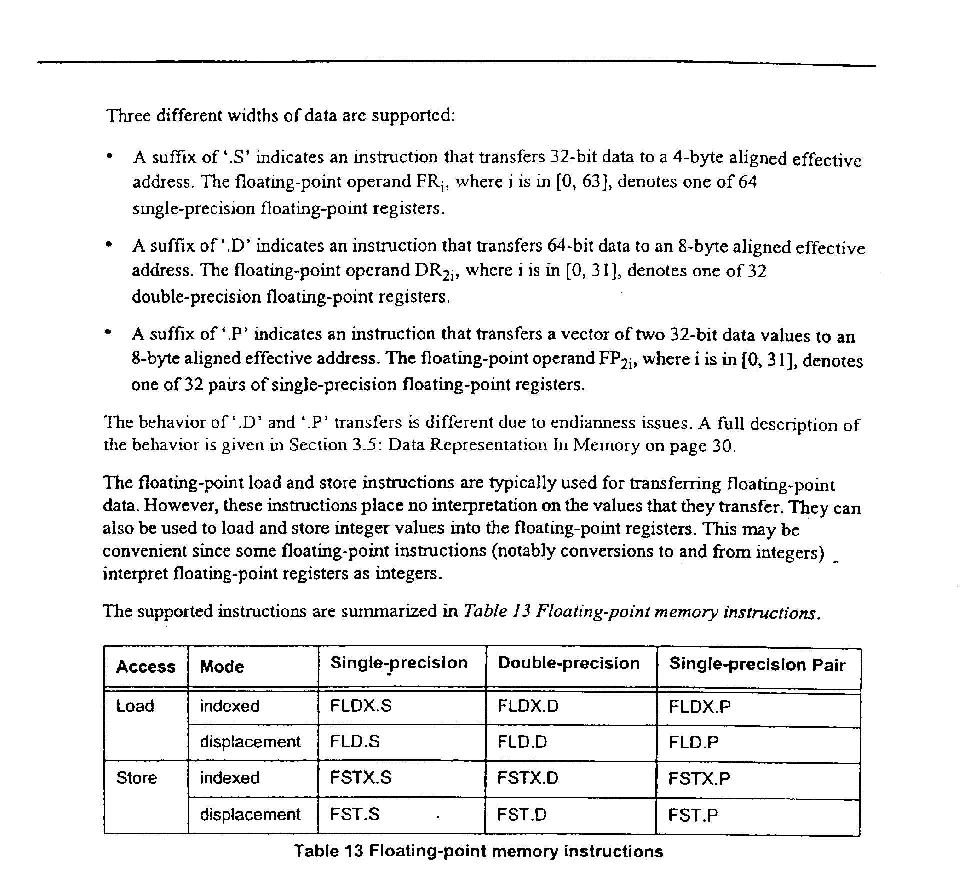

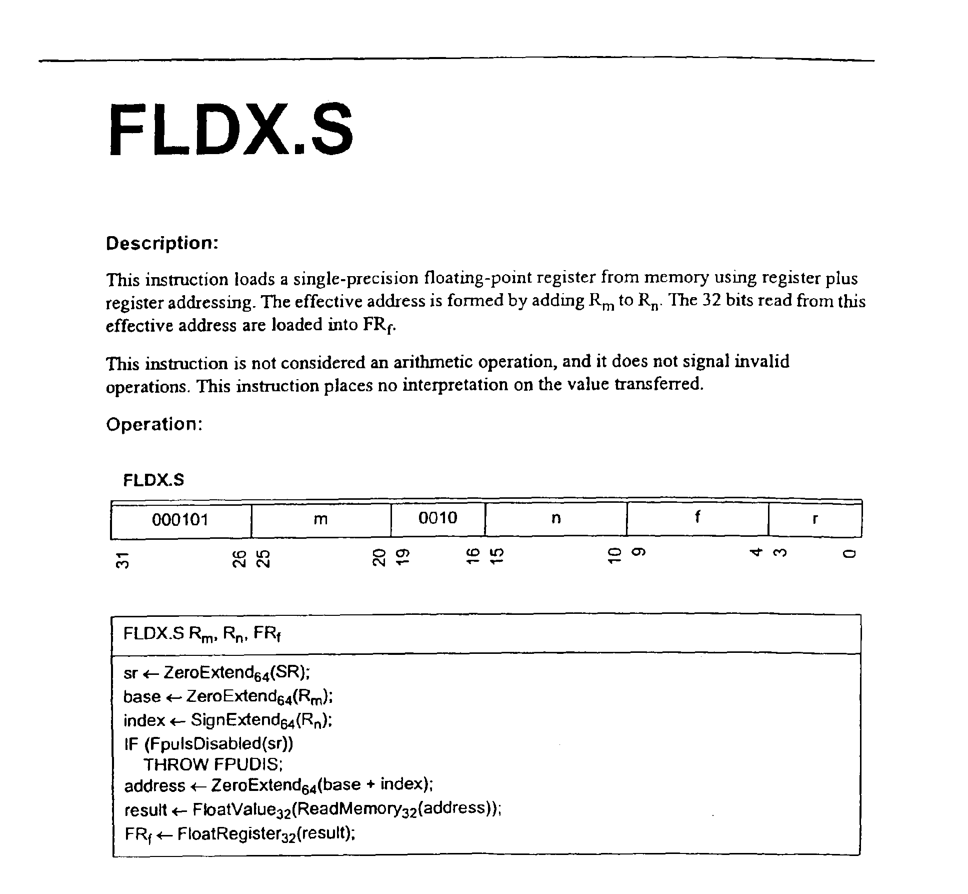

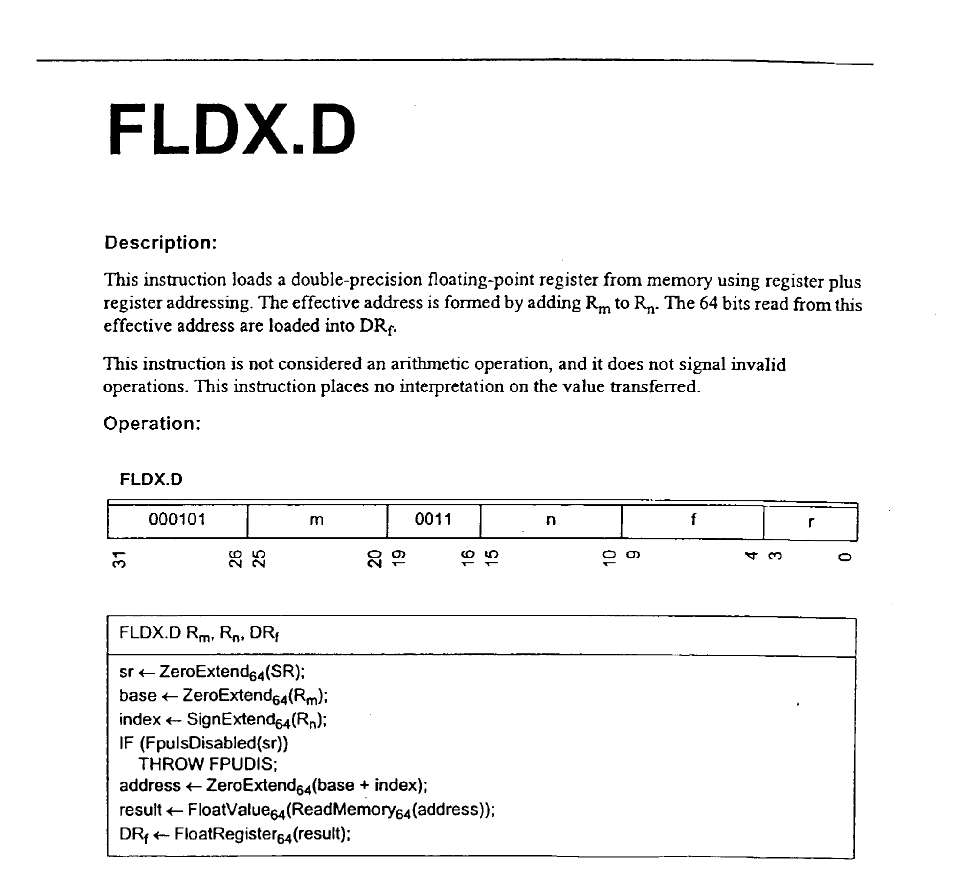

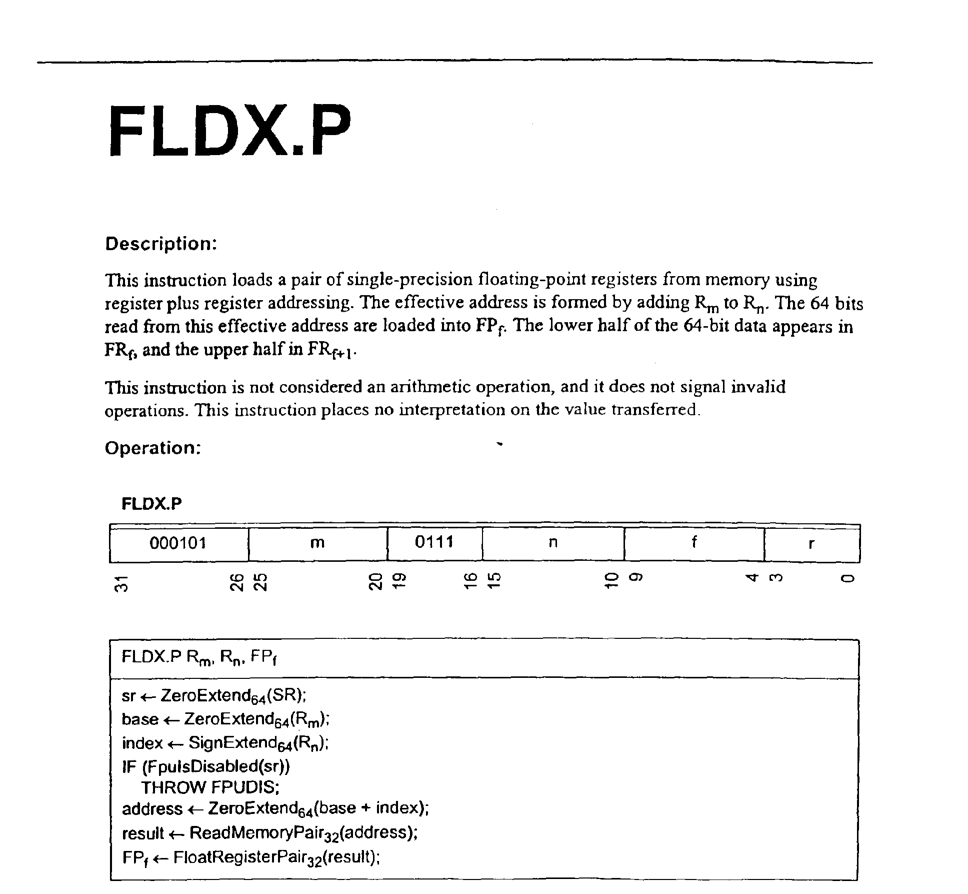

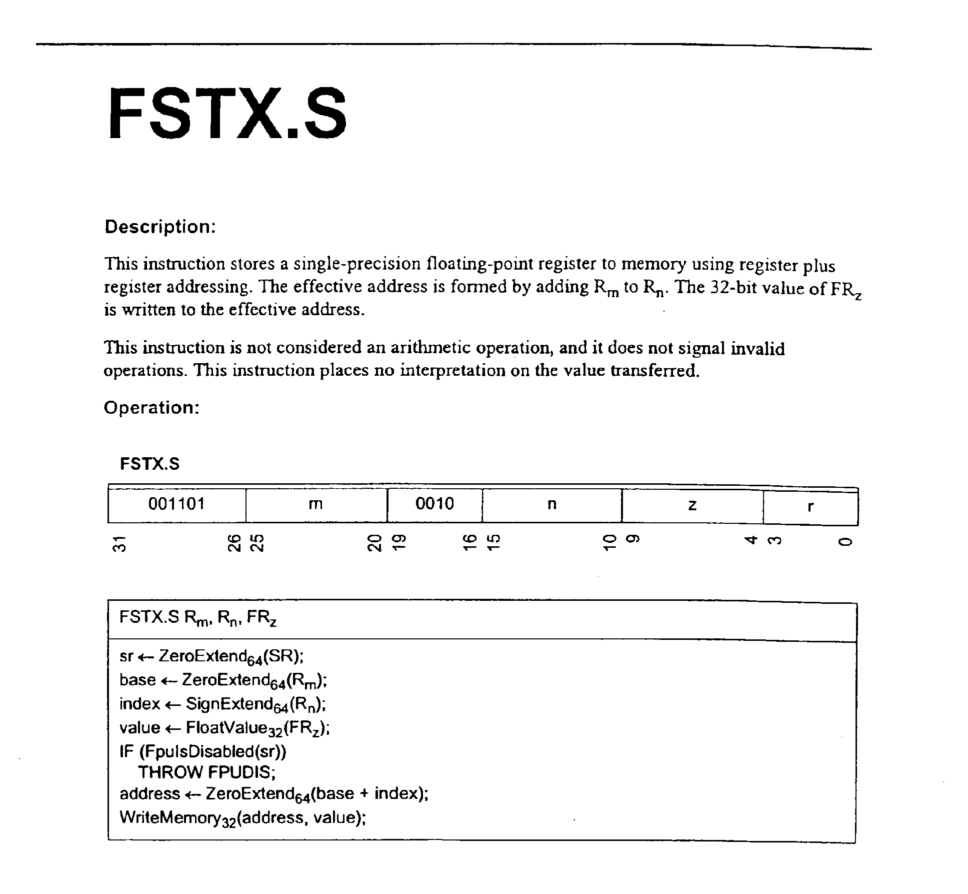

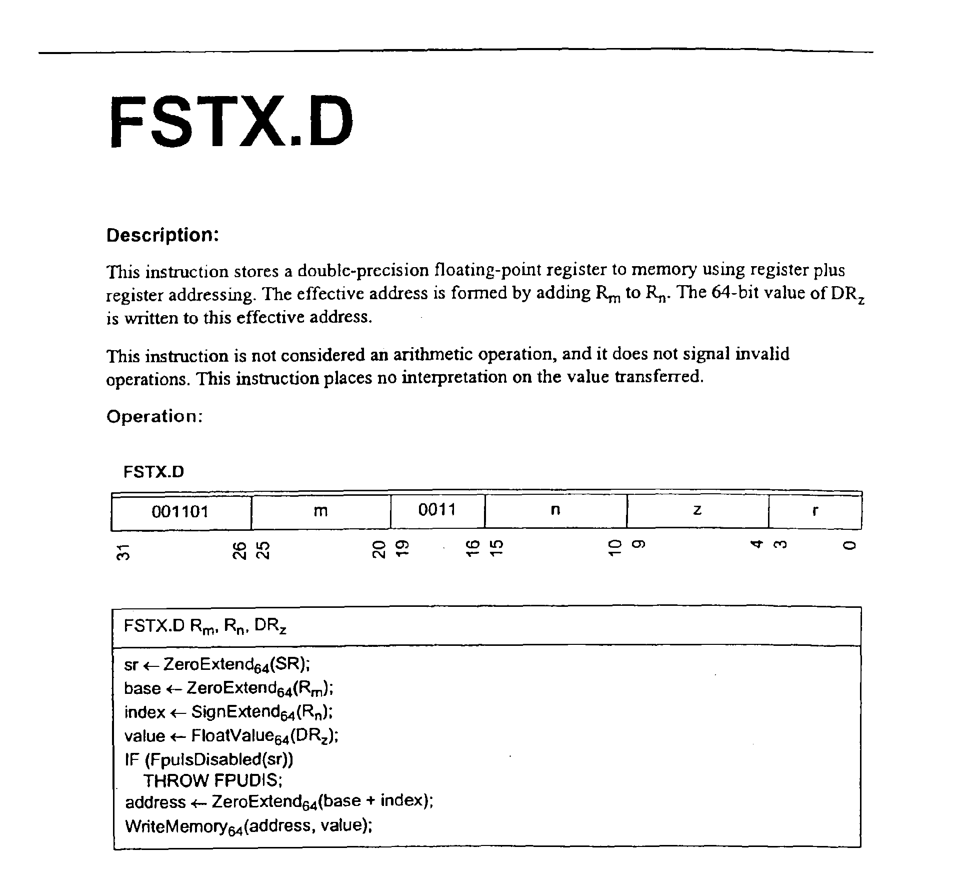

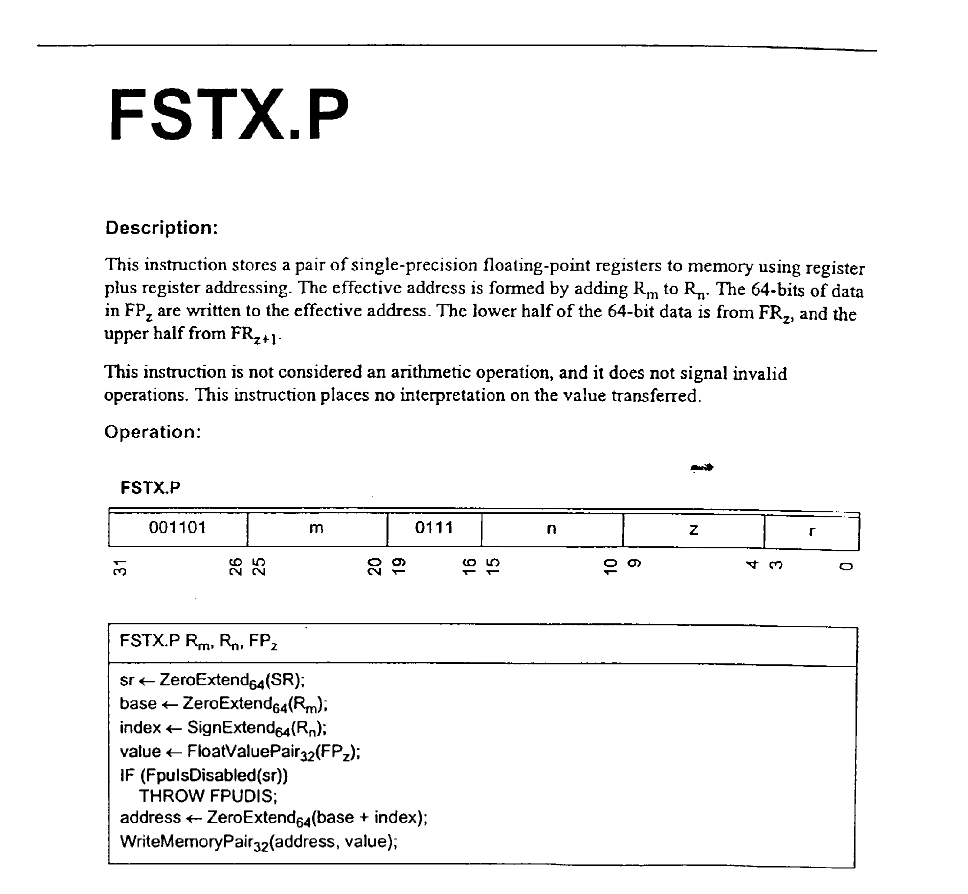

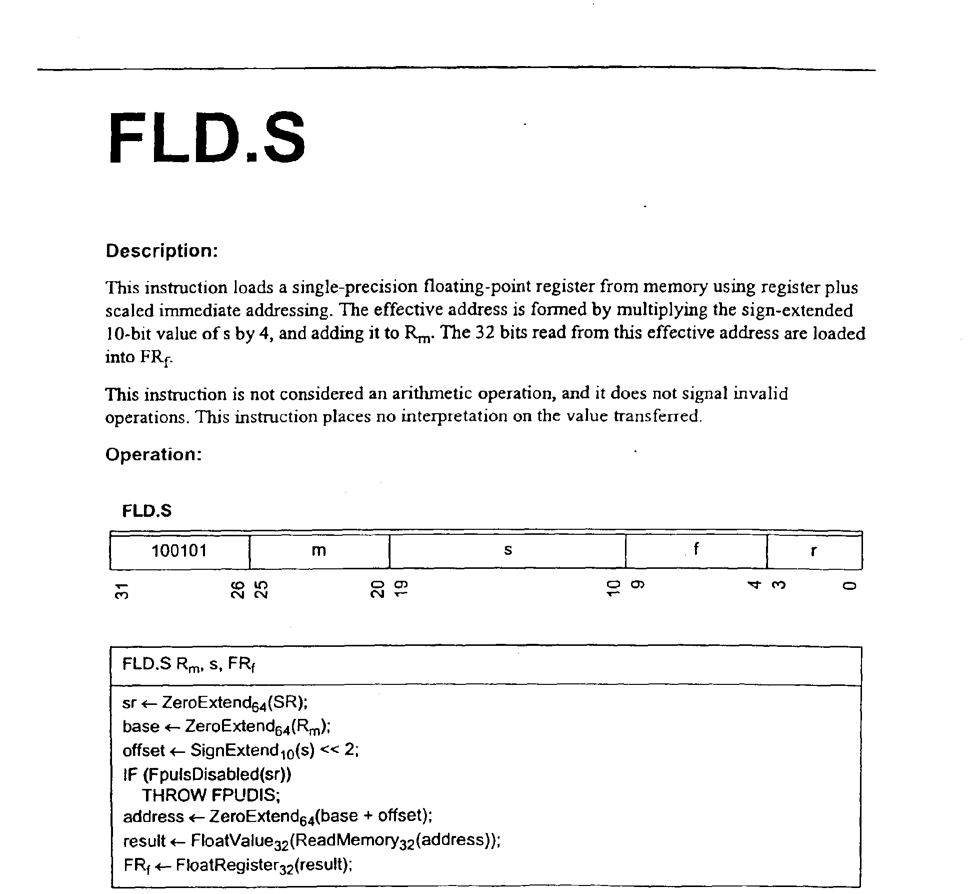

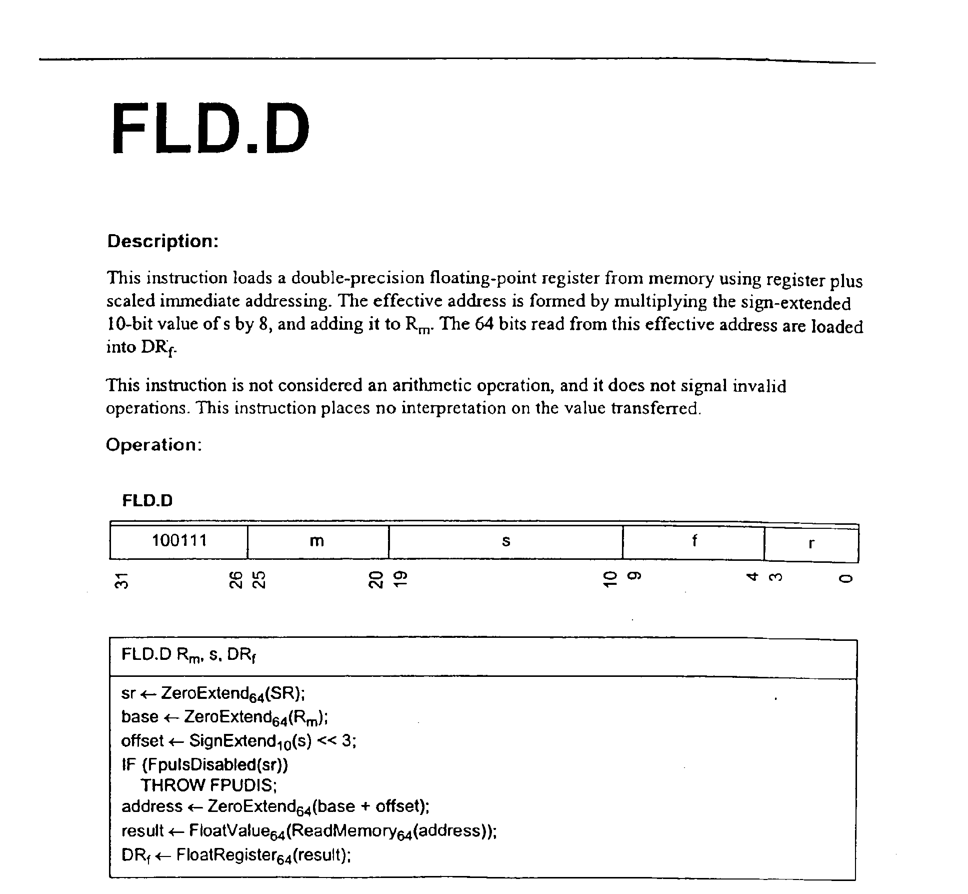

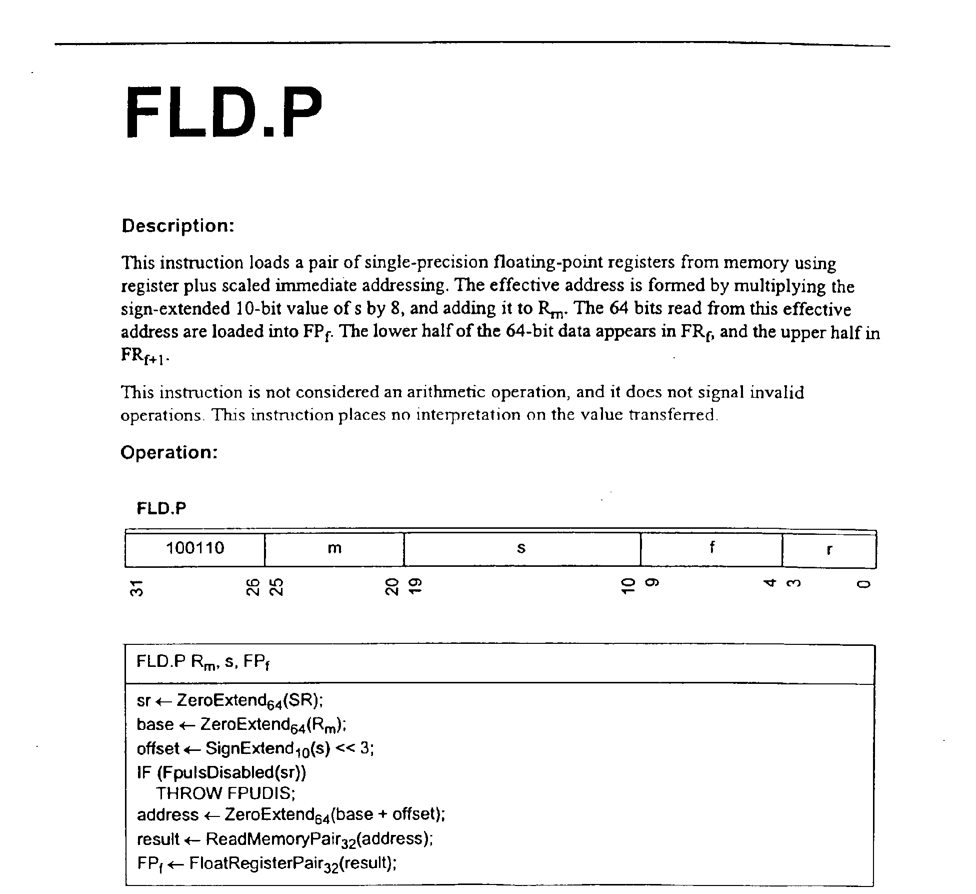

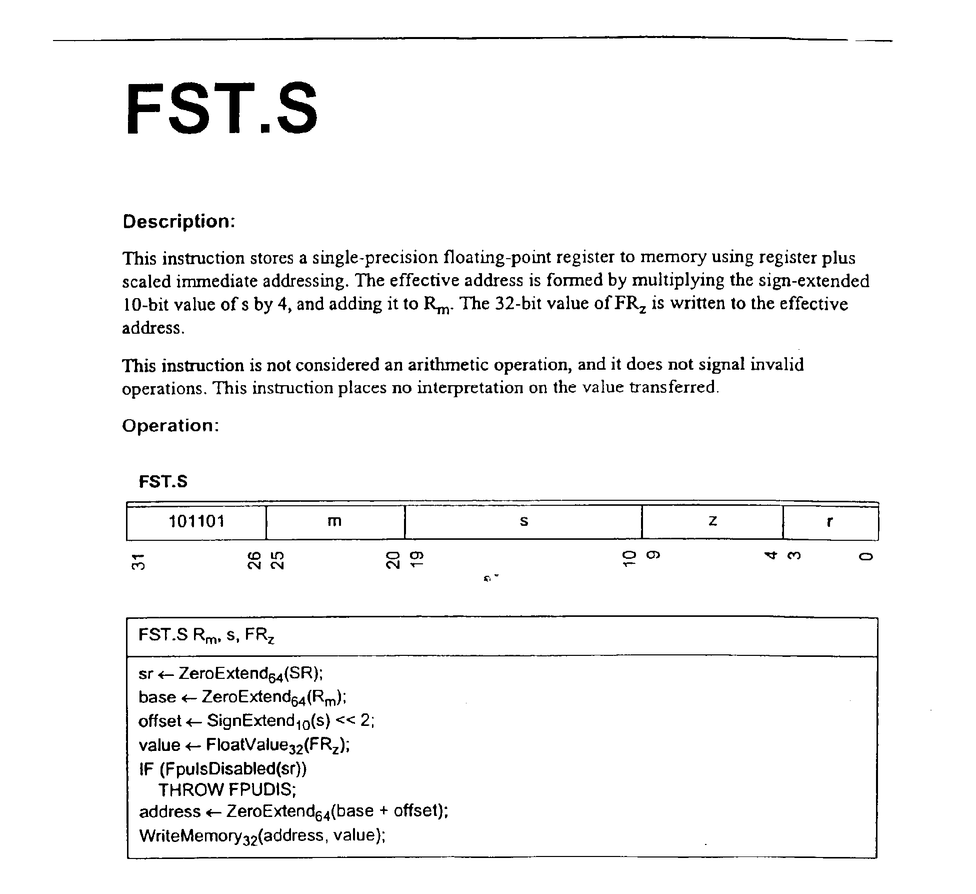

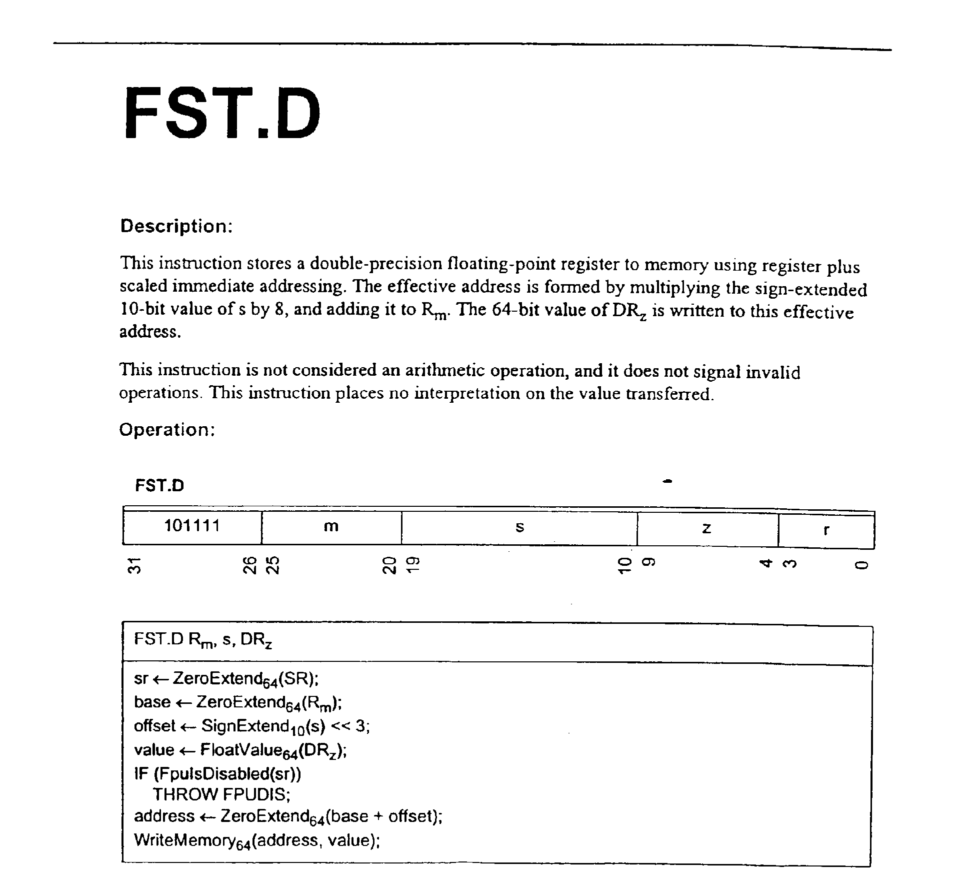

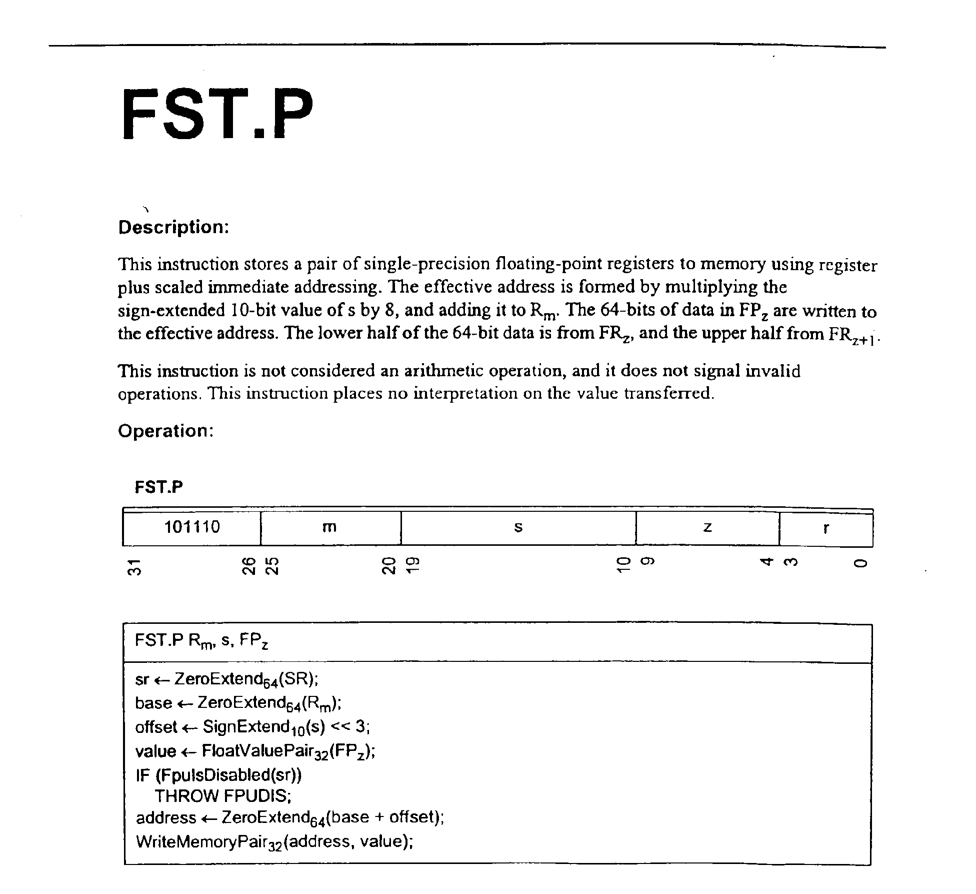

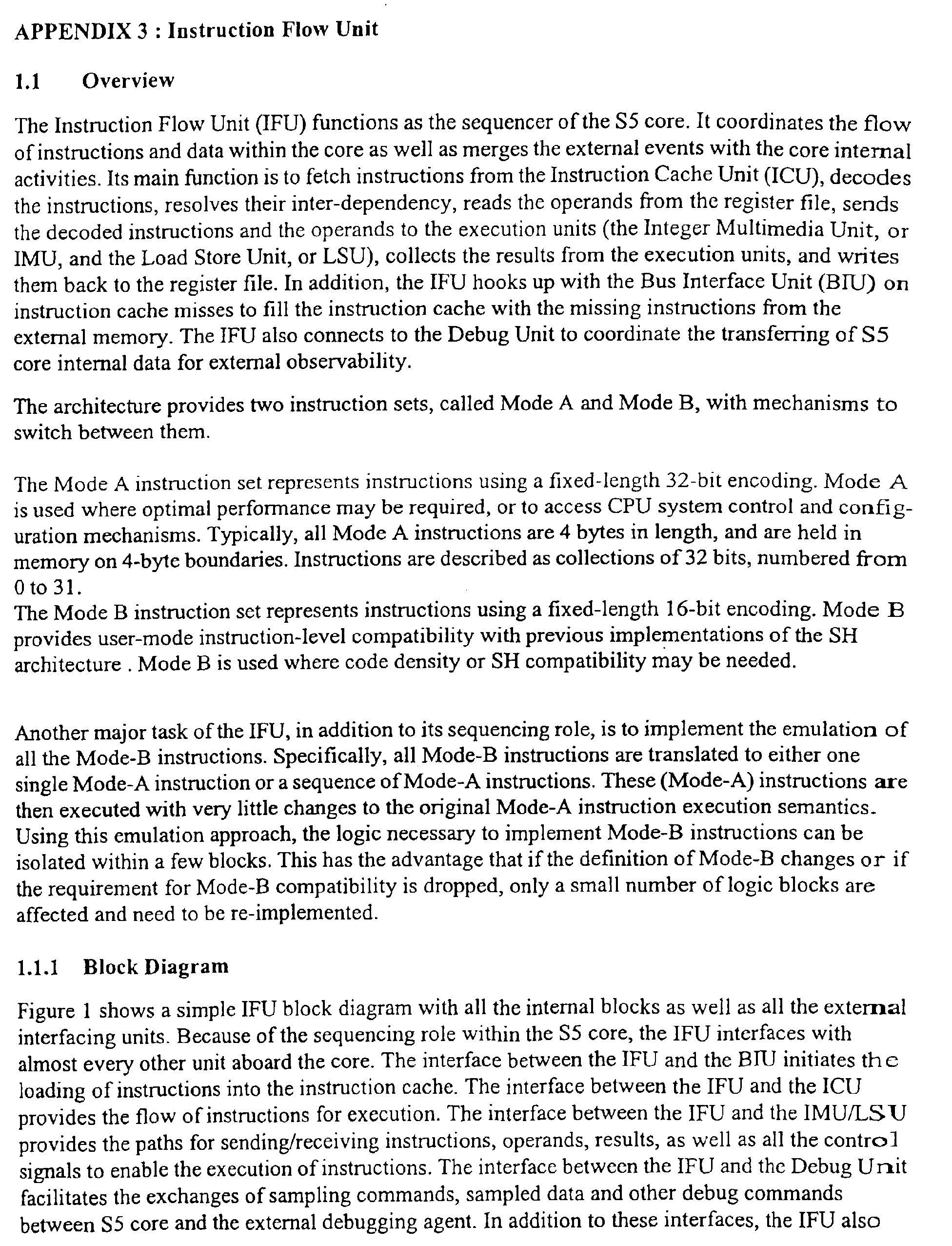

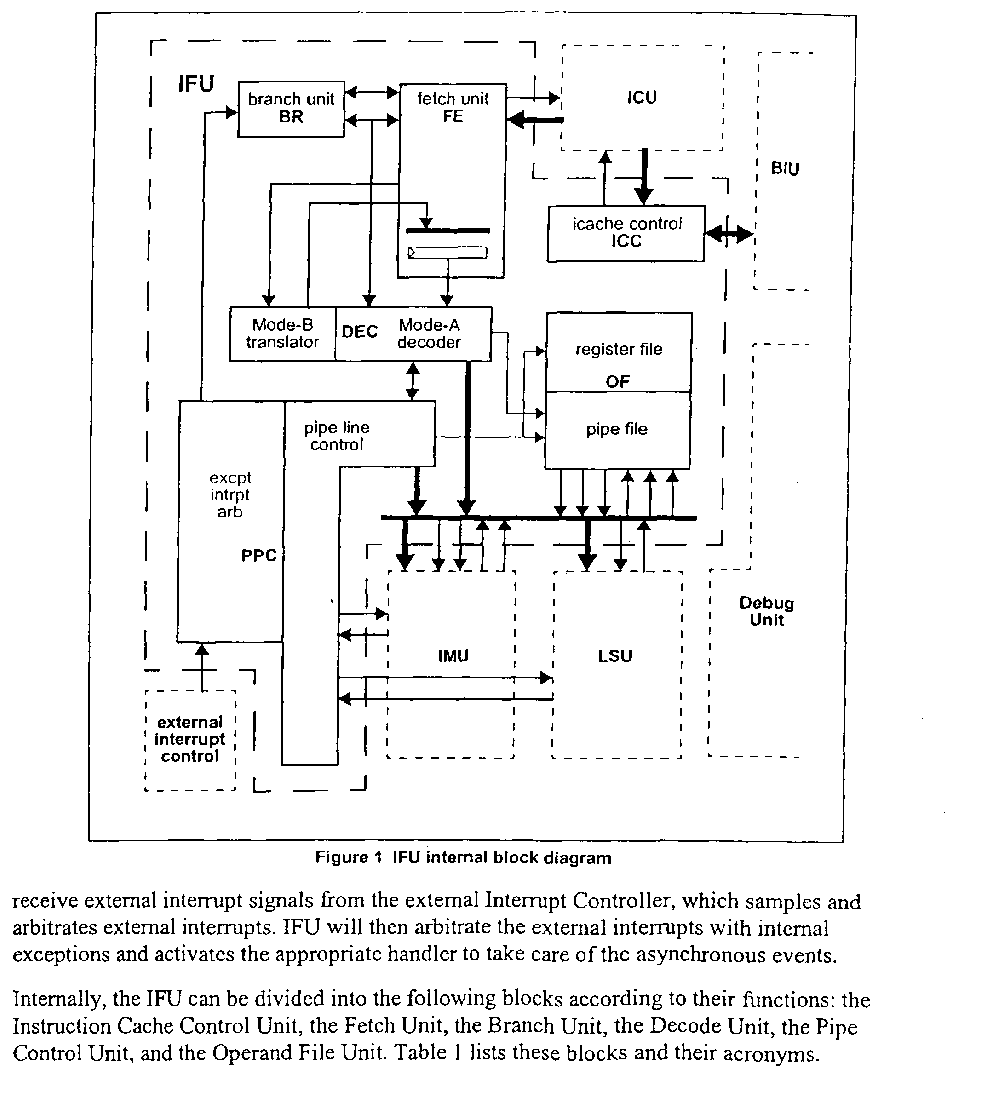

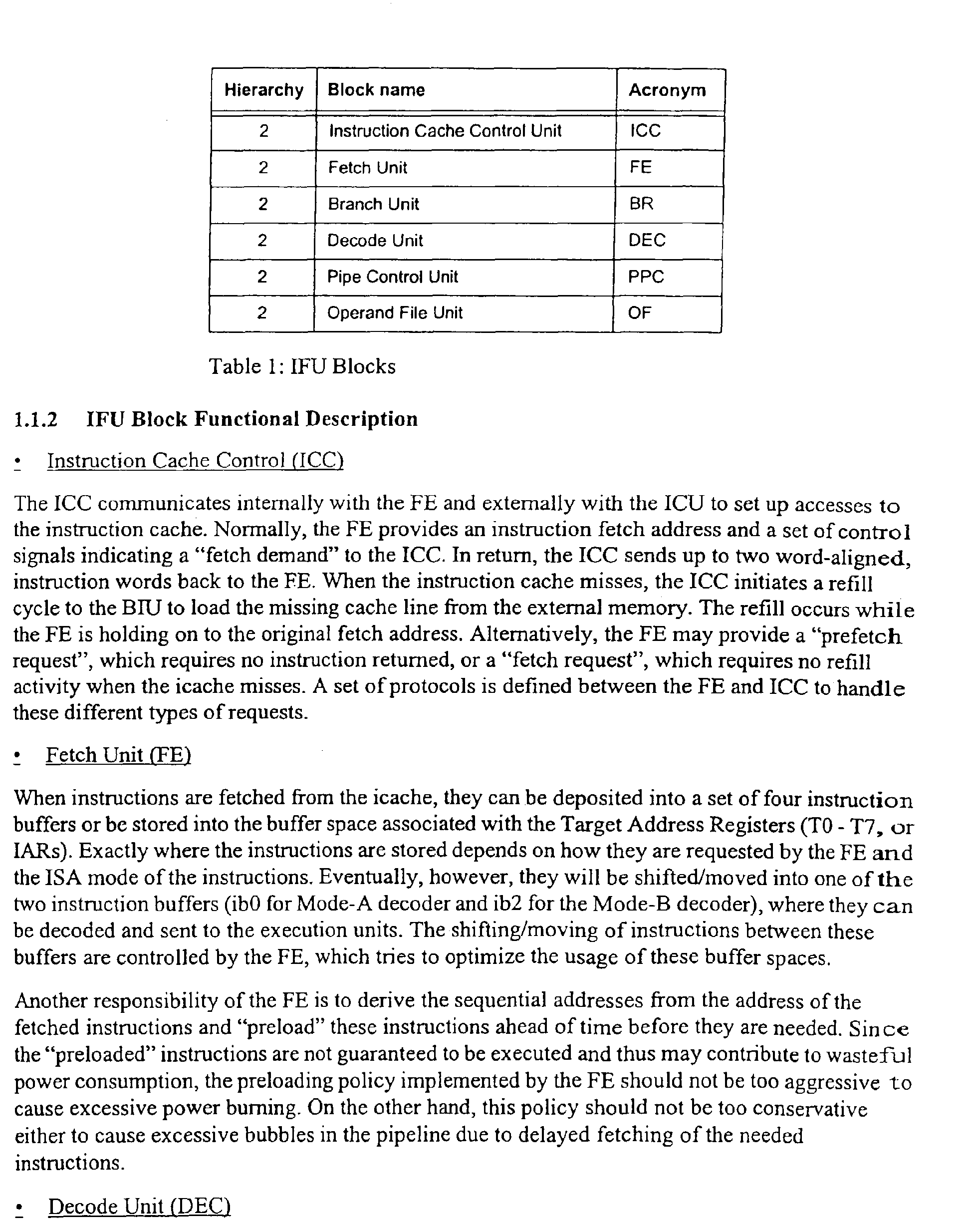

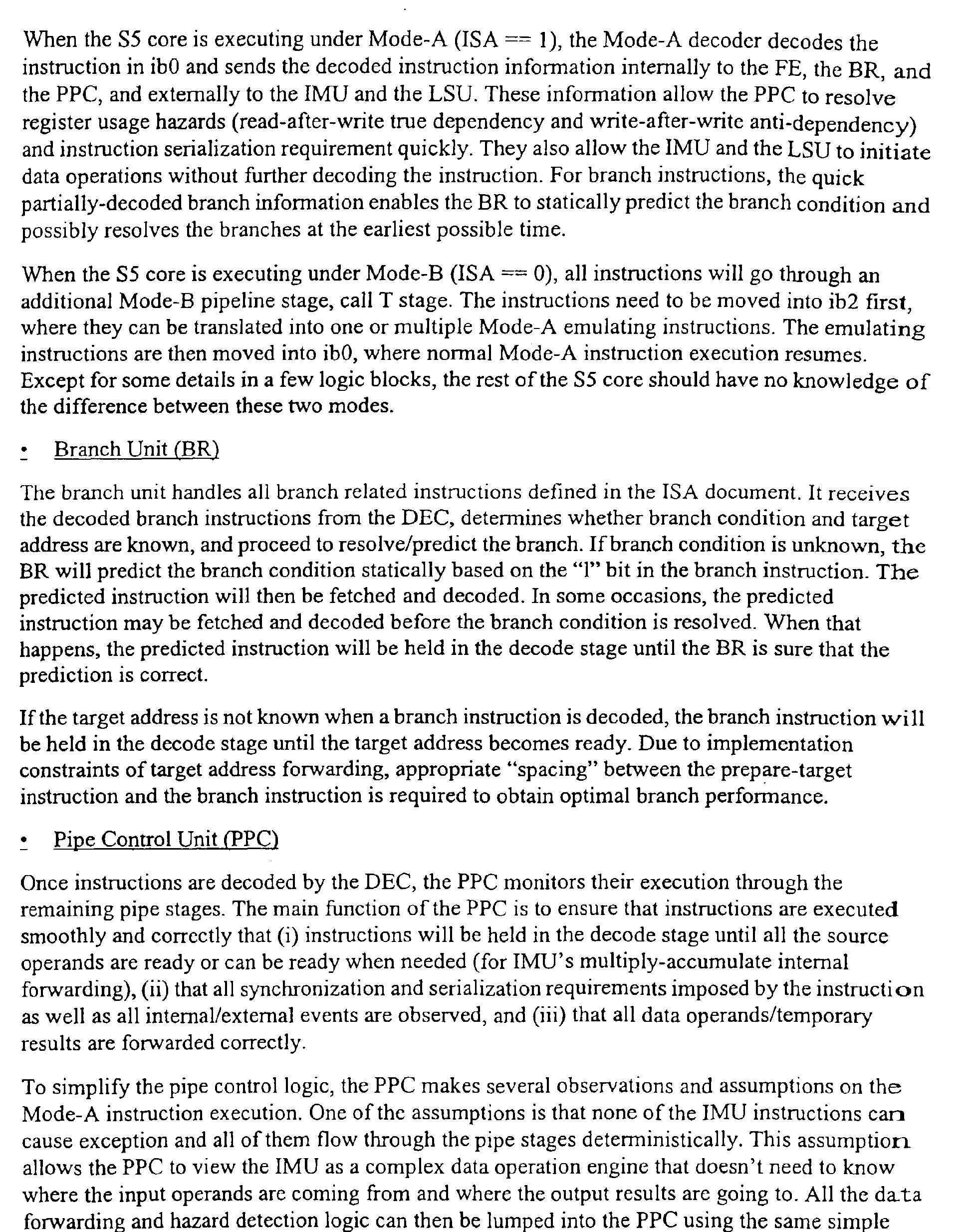

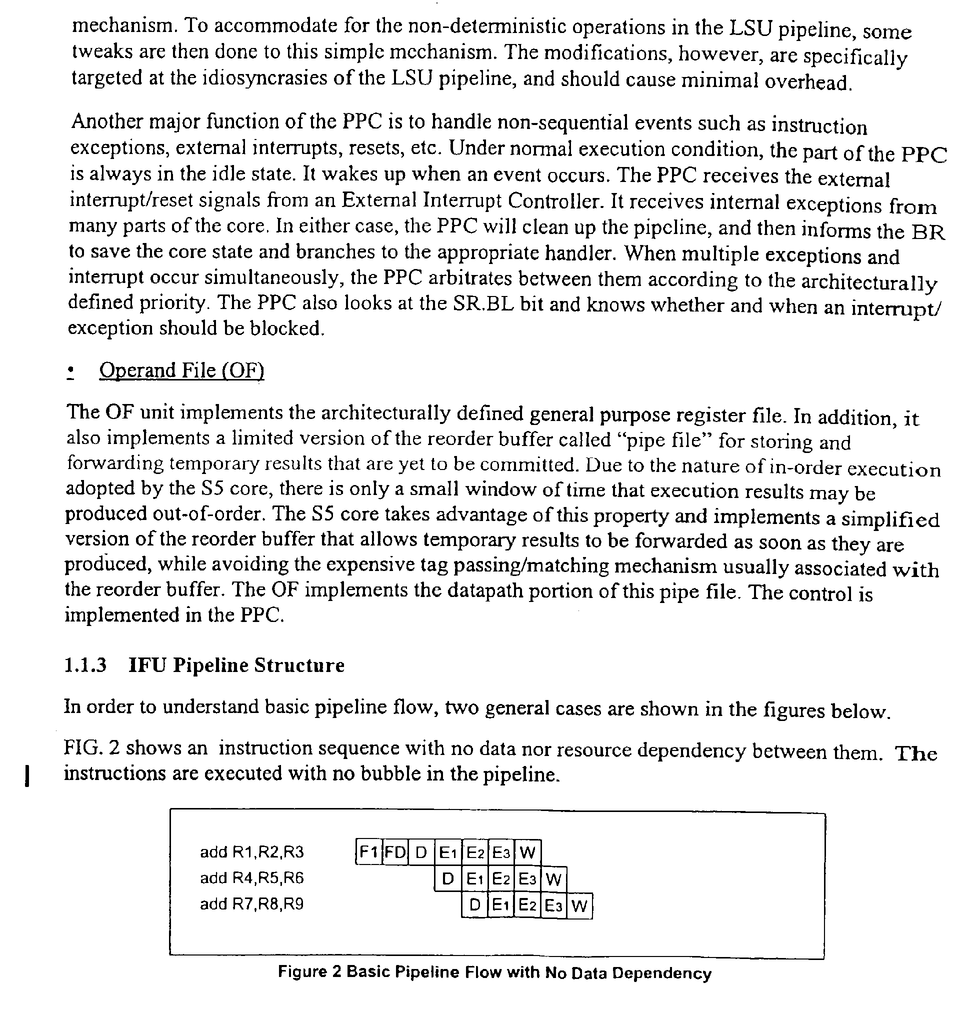

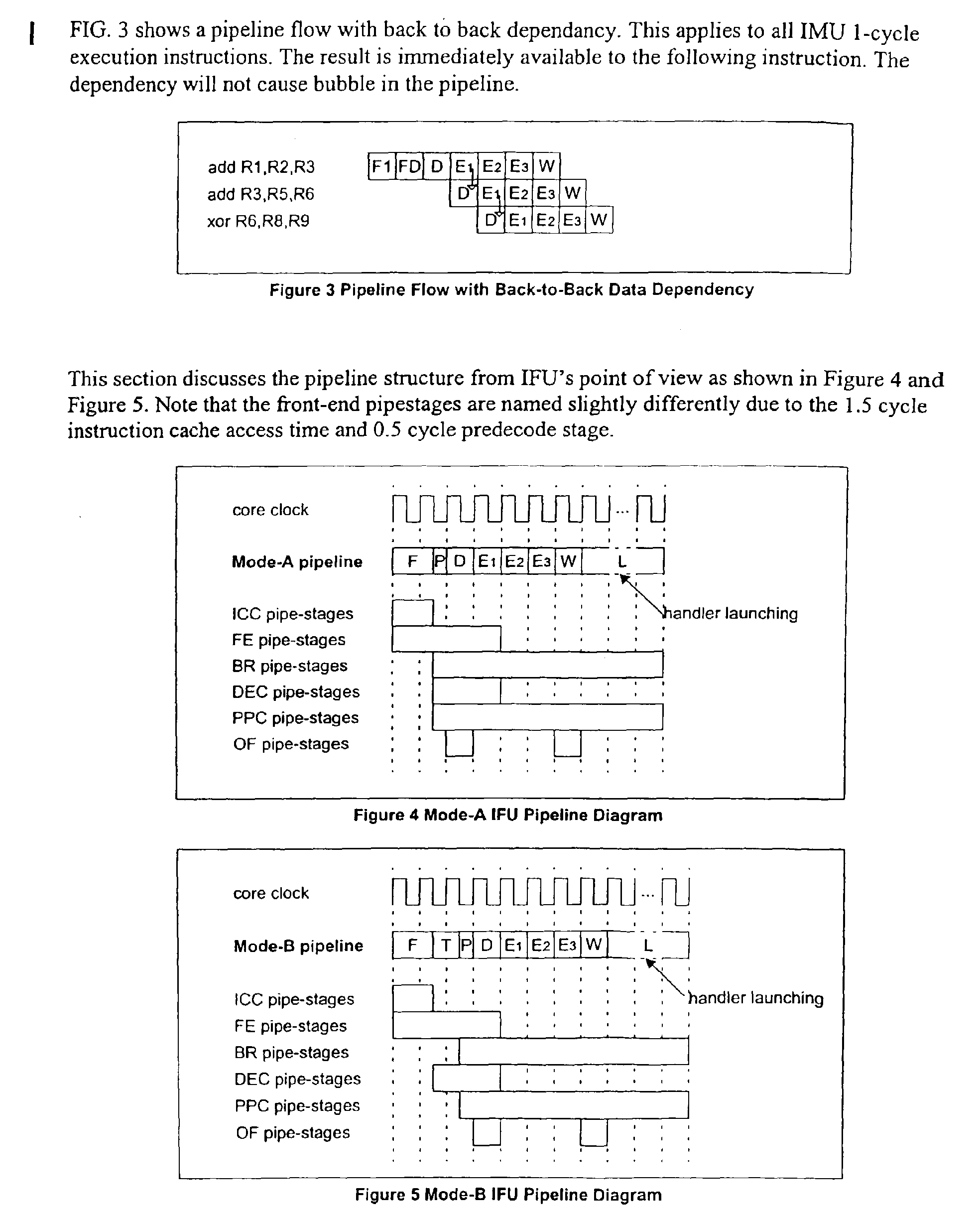

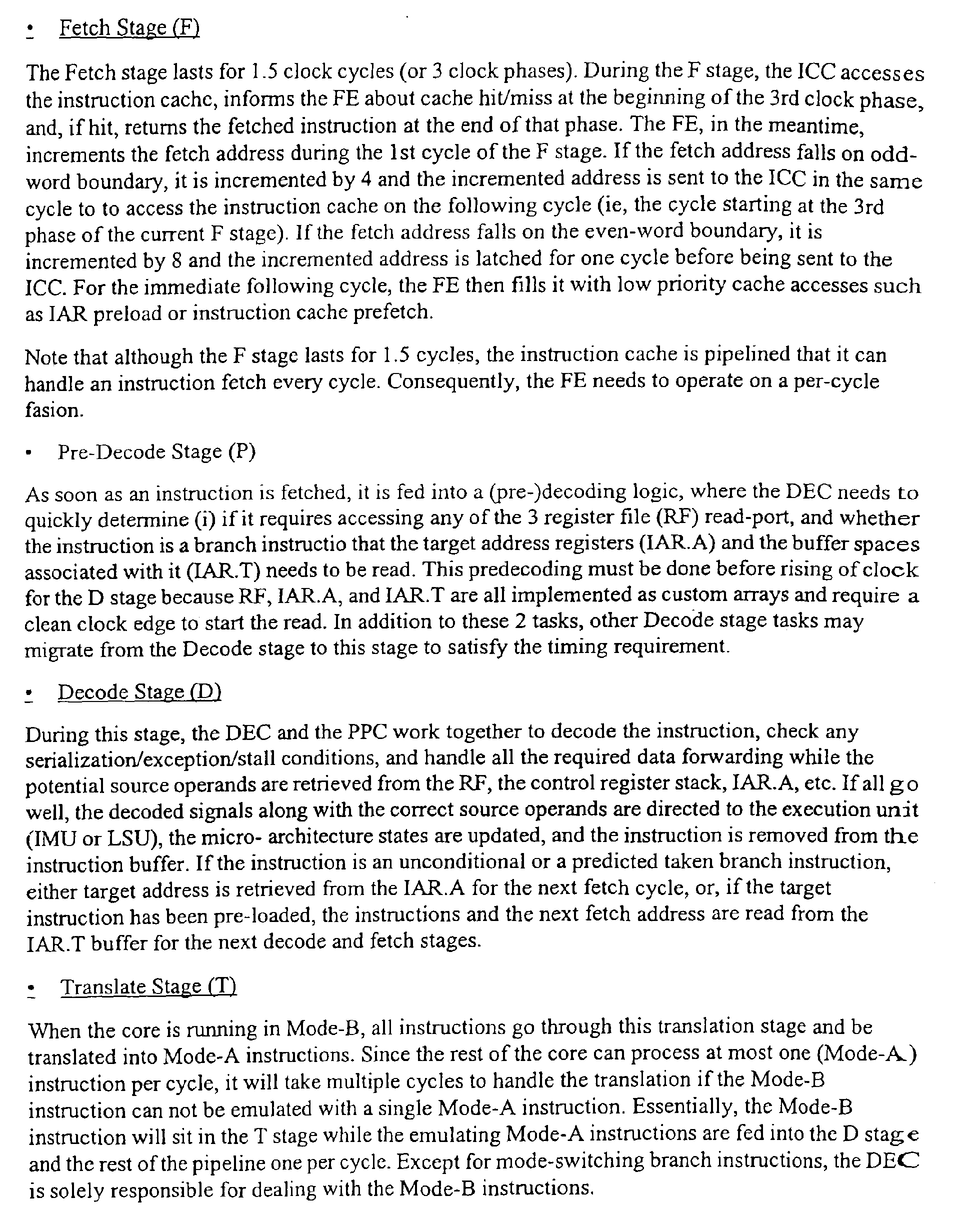

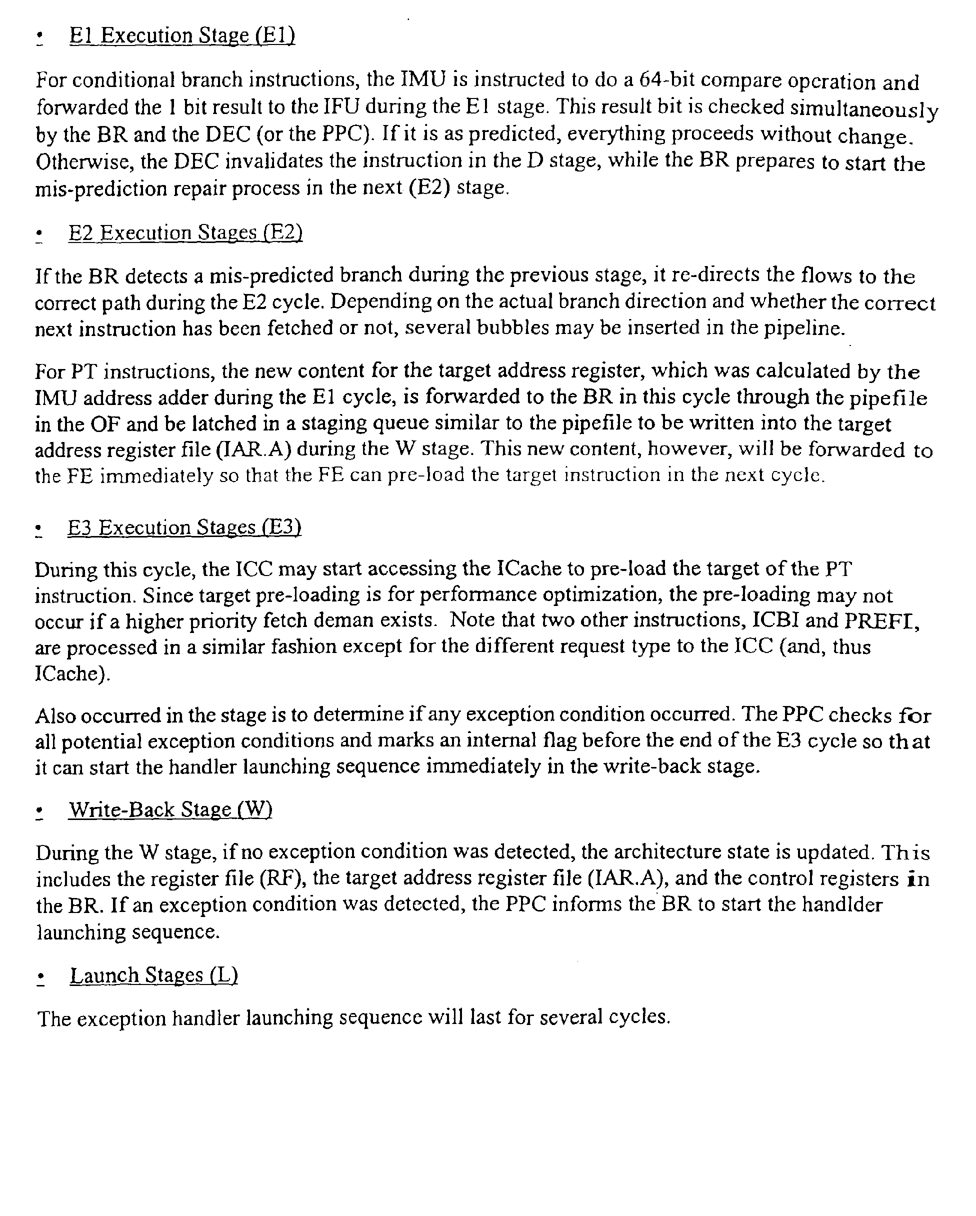

## Claims

1. A method for loading data from a memory to a processor comprising:
determining a loading operation from an operational code in a computer instruction;
loading from a K-bit wide memory N groups of data to a storage location associated with said processor according to said operational code, wherein each group comprises M bytes, and K, M, and N are positive integers.

2. The method of claim 1 wherein said storage location comprises a 64-bit register.

3. The method of claim 1 wherein said storage location comprises a pair of 32-bit registers.

4. The method of claim 1 wherein K equals 32, N equals 1, and M equals 8 bytes.

5. The method of claim 1 wherein K equals 32, N equals 2, and M equals 4 bytes.

6. The method of claim 1 wherein K equals 32, N equals 4, and M equals 4 bytes.

7. The method of claim 1 wherein said storage location comprises at least, N multiplied by M, bytes in length.

8. The method of claim 1 wherein K equals 64, N equals 2, and M equals 8 bytes.

9. A method for storing data from a memory to a processor comprising:
determining a storing operation from an operational code in a computer instruction;
storing to a K-bit wide data from N storage locations associated with said processor according to said operational code, wherein each storage location comprises M bytes, and K, M, and N are integers.

10. The method of claim 9 wherein said storage location is selected from a group consisting of one 64-bit register and one pair of 32-bit registers.

11. The method of claim 9 wherein K equals 32, N equals 1, and M equals 8 bytes.

12. The method of claim 9 wherein K equals 32, N equal 2, and M equals 4 bytes.

13. The method of claim 9 wherein K equals 32, N equal 4, and M equals 4 bytes.

14. A method for loading data words from a memory to a processor comprising:
determining a loading operation from an operational code in a computer instruction;
loading from a single precision wide memory comprising a double precision data word, to two single precision registers associated with said processor according to said operational code.

15. A method for loading data words from a memory to a processor comprising:
determining a loading operation from an operational code in a computer instruction;
loading from a single precision wide memory comprising two single precision data words, to two single precision registers associated with said processor according to said operational code.

16. A method for storing data words from a memory to a processor comprising:
determining a storing operation from an operational code in a computer instruction;
storing to a single precision wide memory a double precision data word from two single precision registers associated with said processor according to said operational code.

17. A method for storing data words from a memory to a processor comprising:
determining a storing operation from an operational code in a computer instruction;
storing to a single precision wide memory two single precision data words from two single precision registers associated with said processor according to said operational code.

18. A method for comparing a plurality of floating point numbers in a computer system comprising:
determining a comparison operation from an operational code in a computer instruction;
comparing a first floating point number of said plurality of floating point numbers with a second floating point number of said plurality of floating point numbers to obtain a Boolean result;
storing said Boolean result in a storage location wherein said storage location is a general purpose register (GPR).

19. The method of claim 18 further comprising using said result in a conditional branch instruction.

20. The method of claim 18, wherein said GPR comprises a integer register.

21. The method of claim 18, wherein said Boolean result is selected from a group consisting of the bits one and zero.

22. A method for comparing a plurality of floating point numbers in a computer system comprising:
determining a comparison operation from an operational code in a computer instruction;
comparing a first floating point number of said plurality of floating point numbers with a second floating point number of said plurality of floating point numbers to obtain a Boolean result;
storing said Boolean result in a storage location wherein said storage location is a predicate register, such that if true, a instruction is executed and if false, the instruction is processed as a NOP (No Operation instruction).
